(19) **Europäisches Patentamt / European Patent Office / Office européen des brevets**

(11) **EP 2 827 506 B1**

(12) **EUROPEAN PATENT SPECIFICATION**

(45) Date of publication and mention
of the grant of the patent:
**25.04.2018 Bulletin 2018/17**

(51) Int Cl.:
*H04B 1/74* (2006.01)      *H04B 10/032* (2013.01)
*H04J 3/08* (2006.01)      *H04J 3/14* (2006.01)

(21) Application number: **13760440.1**

(22) Date of filing: **13.03.2013**

(86) International application number:
**PCT/CN2013/000277**

(87) International publication number:
**WO 2013/135102 (19.09.2013 Gazette 2013/38)**

(54) **METHOD FOR CHANGING OVERHEAD AND PREVENTING SUBNETS FROM SWITCHING SIMULTANEOUSLY, DEVICE, NETWORK ELEMENT, AND NETWORK**

VERFAHREN ZUM ÄNDERN VON BETRIEBSKOSTEN ZUR VERHINDERUNG DER GLEICHZEITIGEN EINSCHALTUNG VON UNTERNETZWERKEN, VORRICHTUNG, NETZWERKELEMENT UND NETZWERK

PROCÉDÉ POUR MODIFIER UN SURDÉBIT ET EMPÊCHER LA COMMUTATION SIMULTANÉE DE SOUS-RÉSEAUX, DISPOSITIF, ÉLÉMENT DE RÉSEAU ET RÉSEAU CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2012   CN 201210066285**

(43) Date of publication of application:
**21.01.2015   Bulletin 2015/04**

(73) Proprietor: **ZTE Corporation**
**Shenzhen, Guangdong 518057 (CN)**

(72) Inventors:
• **YUAN, Yan**
**Shenzhen**
**Guangdong 518057 (CN)**

• **FU, Sen**
**Shenzhen**
**Guangdong 518057 (CN)**
• **SONG, Xiaopeng**
**Shenzhen**
**Guangdong 518057 (CN)**

(74) Representative: **Awapatent AB**
**Junkersgatan 1**
**582 35 Linköping (SE)**

(56) References cited:
**EP-A1- 2 075 955      EP-A1- 2 200 225**
**CN-A- 101 154 995      CN-A- 101 499 820**
**US-A1- 2005 086 555**

**EP 2 827 506 B1**

**Description**

Technical Field

The present invention relates to the transmission devices in the field of communications and the field of optical transport networks, and in particular, to method and an apparatus for changing an overhead and preventing subnets from switching simultaneously, a network element, and a network.

Background of the Related Art

The Optical Transport Network (OTN) standard is established by the International Telecommunications Union (ITU-T), and is an important standard for transmission devices. Almost all existing long-distance transmission networks are comprised of OTN standard based devices.
The OTN network has its own standard signal format, which is referred to as Optical channel Data Unit i (ODUi) signals (i=0,1,2,3,4,2e,3e,flex). Only the ODUi signals are processed in the OTN. Various non-OTN signals needed to be transmitted by the OTN will be transformed into suitable ODUi signals when entering an access point of the OTN, and then the ODUi signals are transmitted in the OTN, until various non-OTN signals are demapped from the ODUi after arriving at the destination, thereby implementing transmission of various non-OTN signals between the access point and the destination on the OTN. The ODUi can only exist inside the OTN device. If the ODUi is to be transmitted between the OTN devices, it must be transformed into Optical Transform Unit k (OTUk) (k=1, 2, 3, 4, 2e, 3e). In general, multiple ODUi will be multiplexed into one OTUk for transmission, so as to enhance the transmission efficiency, wherein the ODUi and the OTUk are OTN signals. The definitions of the ODUi and the OTUk come from the ITU-T G.709 standard.
The OTN is a network with a longest transmission distance, and the network structure thereof is also the most complex relative to other communication networks. In the OTN, a station which processes the OTN signals is referred to as a network element, and multiple network elements constitute a subnet (which is referred to as an optical transport subnet herein) by being connected through OTN signals OTUk. One OTN is generally comprised of multiple subnets. Each subnet may belong to a device of a different device manufacturer or operator. The device of the same device manufacturer or operator may also be divided into multiple subnets according to the regional relationship. The OTN can implement subnet based protection switching. When multiple subnets have protection switching functions simultaneously, according to the existing OTN implementation technology, as long as there is no nesting relationship between the subnets having protection switching functions, the protection switching of each subnet will not influence other subnets, which will be described below by way of example.

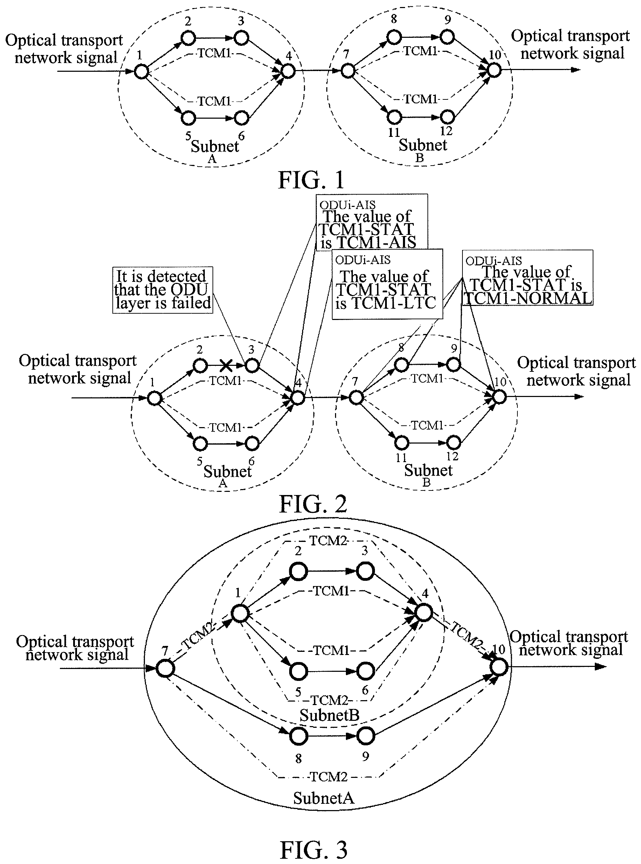

Fig. 1 illustrates two optical transport subnets connected in series which have protection switching functions. Wherein, network elements 1-6 constitute one subnet A having an 1+1 protection switching function, in which network elements 1, 2 ,3 and 4 constitute a working path, and network elements 1, 5, 6 and 4 constitute a protection path; and network elements 7-12 constitute one subnet B having an 1+1 protection switching function, in which network elements 7, 8 ,9 and 10 constitute a working path, and network elements 7, 11, 12 and 10 constitute a protection path. For ease of description, assume that all service directions are unidirectional, which is shown as an arrow in the figure. In practice, two unidirectional subnets in opposite directions can constitute one bidirectional subnet. Therefore, although the present invention is described by taking a unidirectional subnet as an example, the result is similarly applicable for a bidirectional subnet.
The two subnets in Fig. 1 are connected in series. According to the OTN standard, the OTN supports protection switching of subnets, which is implemented through Tandem Connection Monitoring (TCM) overhead. The TCM overhead is an overhead supporting subnet performance detection defined in the OTN. There are 6 levels for the TCM, which are TCM1-TCM6 respectively. After the usage range of the TCM is divided reasonably, the TCM can be used to individually detect the states of the subnet, and excludes the influence of other subnets on the state of the local subnet. In the OTN, in order to implement protection switching of the subnets, it needs to allocate one TCM overhead to each subnet supporting the protection switching, and each subnet judges whether it needs to trigger the protection switching by detecting the state of the TCM overhead allocated to the subnet. For the subnets connected in series in the above figure, the TCM1 overhead can be allocated to both subnet A and subnet B. The dotted line in the figure is a transfer path of the TCM overhead, and the TCM overhead and the service are transmitted together. The subnet A uses the TCM1 overhead as a judgment basis of protection switching thereof, and a starting point of the TCM1 is the network element 1 and an end point is the network element 4. The subnet B also uses the TCM1 overhead as a judgment basis of protection switching thereof, and a starting point of the TCM1 is the network element 7 and an end point is the network element 10. Thus, both the network element 4 and the network element 10 in the above figure judge whether it should implement the protection switching according to the state of the TCM1 overhead.
Assume that a fiber between the network element 2 and the network element 3 inside the subnet A is disconnected. As shown as an X mark in Fig. 2, the network element 3 will substitute the failed ODUi signal with an ODUi-Alarm Indication Signal (AIS) signal after detecting that the ODU layer is failed. The ODUi-AIS is a maintenance signal of the OTN signal defined by the OTN standard. When a value of the TCM1-STAT overhead therein is 111, it represents that the TCM1-STAT is in a TCMI-AIS state. After the network element 4 receives the ODUi-AIS transmitted by the network element 3, the TCM1-STAT is found to be in a TCM1-AIS state by detecting the TCM1-STAT overhead. At this time, it is considered that the service is failed, and the network element 4 will start protection switching. Before the protection switching comes into effective formally, the ODUi-AIS signal transmitted by the network element 3 will be transmitted transparently. As the network element 4 is a destination of TCM1, the network element 4 will change the TCM1-STAT overhead in the ODUi-AIS output by it to be in a TCM1-LTC state, which represents that the TCM1 overhead resources have been released. After the ODUi-AIS transmitted by the network element 4 is transmitted to the network element 7 of the subnet B, as the network element 7 is a starting point of the TCM1, it will change the TCM1 overhead in the received ODUi-AIS to be in a TCM1-NORMAL state, and then the network elements 8 and 9 transparently transmit the ODUi-AIS. Thus, the TCM1-STAT overhead received by the downstream network element 10 from the network element 9 will be presented that it is in the TCM1-NORMAL state, and the network element 10 considers that the TCM1 is normal. Therefore, protection switching will not occur when the network element 10 receives the ODUi-AIS transmitted by the network element 4. Then, the protection switching is implemented for the network element 4 and the network element 4 is switched to the network element 6. The service recovers to be normal, and the ODUi-AIS disappears. In the above whole process, the network element 10 in the subnet B will always detect the TCM1, and will find that the TCM1 is always normal. Therefore, the network element 10 will not be switched all the time. Thus, the switching of the network element 4 will not result in the switching of the network element 10, so that the protection switching of the two subnets will not influence each other.

According to the above analysis, it can ensure that the protection switching of two subnets in a series connection relationship will not influence each other by using existing TCM based subnet protection technology in the OTN.

However, when two subnets (or referred to as a pair of subnets) both having protection switching functions are in a nesting relationship, protection switching systems of the two subnets are also in a nesting relationship. A protection switching action of a subnet (referred to as an embedded subnet herein) embedded in the other subnet may possibly result in protection switching of a subnet (referred to as an outer subnet herein) with the subnet embedded therein being triggered by mistake or being timeout. The embedded subnet and a corresponding outer subnet in a nesting relationship herein refers to all network elements in the embedded subnet being located on a working or protection path in the outer subnet (but on the working or protection path at a different time). Outer subnets corresponding to one embedded subnet refer to all outer subnets with the embedded subnet embedded therein, which may be one or more outer subnets. Embedded subnets corresponding to one outer subnet refer to all embedded subnets embedded in the outer subnet, which may be one or more embedded subnets. That is, nesting among subnets may be multi-layer nesting among three or more subnets. A pair of subnets in a nesting relationship which have protection switching functions may be nested directly, or may also be nested indirectly. The pair of subnets being nested directly refers to that there is no other subnet having the protection switching function between the pair of subnets, as shown as subnets A and B in Fig. 3. In addition, in the network involved in the present invention, the embedded subnets or the subnets used as an outer subnet and an embedded subnet simultaneously are all OTNs, and only an outermost outer subnet may be a non-optical transport subnet or an optical transport subnet.

The reason why the protection switching of two subnets connected by means of nesting will influence each other will be analyzed below.

Subnets in a nesting relationship illustrated in Fig. 3 are all OTNs. Wherein, network elements 1-6 constitute a subnet B having an 1+1 protection switching function, wherein, network elements 1, 2, 3 and 4 constitutes a working path, and network elements 1, 5, 6 and 4 constitutes a protection path. The dotted line in the figure is a transfer path of a TCM1 overhead, which is effective in the subnet B. A starting point of the TCM1 is the network element 1, and an end point is the network element 4. The TCM1 overhead and the service are transmitted together. The subnet B decides whether to perform protection switching according to a state of the TCM1. Network elements 1-10 constitute a subnet A having an 1+1 protection switching function. Wherein, network elements 7, 1, 2, 3, 4 and 10 constitute a working path, and network elements 7, 8, 9 and 10 constitute a protection path. The dotted line in the figure is a transfer path of a TCM2 overhead, which is effective in the subnet A. A starting point of the TCM2 is the network element 7, and an end point is the network element 10. The TCM2 overhead and the service are transmitted together. The subnet A decides whether to perform protection switching according to a state of the TCM2. The subnet B is embedded between the network elements 1 and 4 of the subnet A, and is an embedded subnet. The subnet A is an outer subnet. In the environment illustrated in Fig. 3, the subnets A and B must use different TCM overheads to ensure that various subnets can detect working states of the subnets of their own.

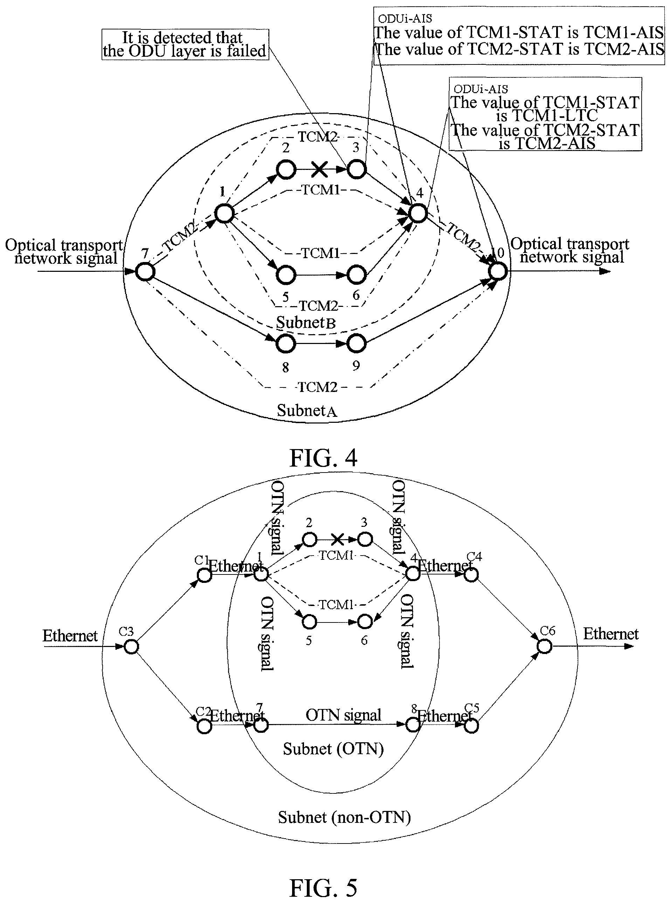

Assume that a fiber between network elements 2 and 3 is disconnected, as shown as an X mark in Fig. 4. The network element 3 will substitute a failed ODUi signal with ODUi-AIS, and both the TCM1-STAT overhead and the TCM2-STAT overhead are in a TCM1-AIS state. If the network element 4 finds that it is in a TCM1-AIS state by detecting the TCM1-STAT overhead transmitted by the network element 3, it is considered that the service is failed. At this time, the network element 4 will start protection switching. Before the protection switching comes into effective formally, the ODUi-AIS signal transmitted by the network element 3 will be transmitted transparently. As the network element 4 is not a starting point of the TCM2, the TCM2-STAT overhead in the ODUi-AIS will be transparently transmitted. After the ODUi-AIS is transmitted to the network element 10 of the subnet A, the TCM2-START overhead received by the network element 10 will be presented that it is in a TCM2-AIS state, and at this time, the network element 10 considers that the service is failed. This will trigger protection switching and the switching is through the protection path of network elements 8 and 9. Thus, the protection switching systems of the network elements A and B are essentially started simultaneously. This is equivalent to a fault at a point triggering protection switching actions of two different protection switching systems on the same path. Thus, it easily results in a longer service transient interruption time due to the actions of the protection switching systems, and may even result in switching timeout of the protection switching system in a serious case.

For this problem, there are two solutions. In solution one, the phenomenon that simultaneous protection switching of the two protection systems occur is ignored, no remedial measure is made, and when the nesting phenomenon is very serious, the solution one is not feasible. In solution two, if no nesting occurs in the protection switching systems, for example, the embedded subnet does not support protection switching, the network elements of the corresponding outer subnet may not support the setting of Th or set the Th as 0. If the nesting occurs in the protection switching systems, a protection switching delay trigger time Th (h=Hold off) is set on the network element (for example, network element 10 in Fig. 3) which performs protection switching in the outer subnet, for example, as a maximum service transient interruption time which may be due to protection switching of the embedded subnet. The network element which performs protection switching considers that a service failure continues for a time which is less than the time of Th is normal, and will not trigger protection switching. Only when the service failure continues for a time which is more than Th, the network element will start the protection switching. Although the solution two can ensure that the protection switching is triggered only once and the protection switching time will not time out when a fault occurs in the embedded subnet, if a fault point occurs in the outer subnet and outside the embedded subnet, for example, a fiber connection between the network elements 4 and 10 is disconnected, due to the existence of the Th of the network element 10, it will result in the service transient interruption time due to the protection switching being necessarily larger than Th. In addition, a network element which performs protection switching in the outer subnet needs to perform different settings on the Th according to whether the embedded subnet supports the protection switching, which will increase the workload of manual maintenance. Such a technique is described in CN101499820A. For a case where one optical transport subnet is embedded in a non-optical transport subnet, Fig. 5 illustrates an example. In Fig. 5, network elements C1-C6 and 1-8 of the non-OTN constitute a non-optical transport subnet having a protection switching function, and network elements 1-8 of the OTN constitute two optical transport subnets, wherein the optical transport subnet constituted by the network elements 1-6 has a protection switching function. An interface signal between the optical transport subnet and the non-optical transport subnet is an Ethernet signal (for example, 10GBASE-R defined in IEEE802.3), and a signal in the OTN is an OTN signal (for example, OTU2e). The topology structure of the network is actually the same as that of the two optical transport subnets connected in a nesting mode which have protection switching functions illustrated in Fig. 3, except that in Fig. 3, the subnets having a nesting relationship are optical transport subnets and belong to the same layer of device, while in Fig. 5, the optical transport subnet is nested in the non-optical transport subnet, and these subnets are devices of different layers. The network in Fig. 5 has the same problem as that of Fig. 3. When a fiber between the network elements 2 and 3 is disconnected in Fig. 5, protection switching occurs in the embedded OTN. There will be an Ethernet service transient interruption between the network elements 4 and C4. In order not to trigger the protection switching of the Ethernet device, the network element C6 needs to set the Th. When a value of Th is larger than a longest service transient interruption time (which is 50ms according to the OTN standard) which may be due to the protection switching occurring in the optical transport subnet, a normal Ethernet device will set the Th as 100ms by default, which can avoid the Ethernet devices from switching simultaneously when the protection switching occurs in the OTN. However, if the non-OTN device is a PTN device, the functions thereof are similar to those of a traditional Ethernet device, but the non-OTN device has requirements on reliability and protection switching time of the transmission device. The protection switching time required by the non-OTN device is the same as that of the OTN. At this time, if Th is also set as the protection switching time of the OTN, similarly to Fig. 4, when a fiber from the network element 4 to the network element C4 and a fiber from the network element C1 to the network element 1 are disconnected and the working path is on the path from C1 to C4, the protection switching time of the non-optical transport subnet will be larger than Th, which will exceed the longest protection switching time allowed by the PTN device. In addition, this will also increase the workload of manual maintenance. Document EP 2 075 955 A1 shows a tandem connection monitoring (TCM) that is configured at the network node device to enabled or disable the subsequent action of tandem connection lost or tandem connection monitoring of each level. The tandem connection monitoring is preformed by the network node device according to the configuration.

Summary of the Invention

The technical problem to be solved by the present invention is to provide an overhead change method which can temporarily shield the overhead information output to a downstream network element which will trigger the projection switching of the outer subnet, a corresponding overhead change apparatus and a network element.

In order to solve the above technical problem, the present invention provides an overhead change method applied in a network element of an embedded optical transport subnet, comprising: detecting that a fault occurs, and the fault triggering the embedded optical transport subnet and an outer subnet with the embedded optical transport subnet embedded therein which has a protection switching function to perform protection switching; changing a value of an overhead which will trigger protection switching of the outer subnet in a signal to be transmitted to a downstream network element to a value which will not trigger protection switching of the outer subnet, and not changing the overhead which will trigger the protection switching of the embedded optical transport subnet; and cancelling the change after the change lasts for a period of time, wherein the period of time is less than or equal to a set change lasting time.

Preferably, the overhead change method is applied in all network elements in the embedded optical transport subnet;

said detecting that a fault occurs means detecting that an Optical Channel Data Unit (ODU) layer is changed to be failed; and

said signal to be transmitted to a downstream network element means an ODUi Alarm Indication Signal (ODUi-AIS) signal which is inserted to substitute a failed ODU signal (ODUi signal).

Preferably, the overhead change method is applied in a network element which performs protection switching of the embedded optical transport subnet in the embedded optical transport subnet; said detecting that a fault occurs means detecting, according to an ODUi signal before the ODU layer failure processing, that a Tandem Connection Monitoring (TCM) layer detected when protection switching processing is performed in the embedded optical transport subnet is changed to be failed; and said signal to be transmitted to a downstream network element means a normal ODUi signal or an inserted ODUi-AIS signal which is output after the ODU layer failure processing.

Preferably, the overhead which will trigger protection switching of the embedded optical transport subnet is a TCMn-STAT overhead allocated to the embedded optical transport subnet, wherein $1 \le n \le 6$;

there are one or more outer subnets, wherein an outermost outer subnet is an optical transport subnet or a non-optical transport subnet, and if there are other outer subnets, all the other outer subnets are optical transport subnets; for one of the outer subnets, if the outer subnet is an optical transport subnet, the overhead which will trigger protection switching of the outer subnet is a TCMn-STAT overhead allocated to the outer subnet; and if the outer subnet is a non-optical transport subnet, the overhead which will trigger protection switching of the outer subnet is a PM-STAT overhead.

Preferably, said changing a value of an overhead which will trigger protection switching of the outer subnet to a value which will not trigger protection switching of the outer subnet comprises: for an outer subnet which is an optical transport subnet, changing a value of the TCMn-STAT overhead to one of 3-bit values 011, 100, 001 and 010; and for an outer subnet which is a non-optical transport subnet, changing a value of the PM-STAT overhead to one of 3-bit values 000, 010, 011 and 100.

Preferably, the set change lasting time is a longest service transient interruption time possibly caused during the protection switching of the embedded optical transport subnet.

Preferably, a network element in the embedded optical transport subnet only belongs to one embedded optical transport subnet; or

the network element in the embedded optical transport subnet belongs to a plurality of embedded optical transport subnets simultaneously, and the embedded optical transport subnet in the overhead change method is an innermost one of the embedded optical transport subnets.

Preferably, said detecting that a TCM layer detected when protection switching processing is performed in the embedded optical transport subnet is changed to be failed comprises: detecting that one or more of the following conditions are met: a service layer of the TCM layer is changed to be failed; and the TCM layer is changed to be in an AIS state, an LCK state, an OCI state or an LTC state.

Preferably, cancelling the change after the change lasts for a period of time comprises cancelling the change when the set change lasting time expires; or

cancelling the change after the change lasts for a period of time comprises: if the ODU layer has not recovered to be normal when the set change lasting time expires, cancelling the change; and if it is detected that the ODU layer recovers to be normal within the set change lasting time, canceling the change immediately.

Preferably, cancelling the change after the change lasts for a period of time comprises: cancelling the change when the set change lasting time expires; or

cancelling the change after the change lasts for a period of time comprises: if the TCM layer has not recovered to be normal when the set change lasting time expires, cancelling the change; and if it is detected that the TCM layer recovers to be normal within the set change lasting time, canceling the change immediately.

Preferably, cancelling the change after the change lasts for a period of time further comprises: if it is detected that the fault can not be recovered by a protection switching system of the embedded optical transport subnet within the set change lasting time, canceling the change immediately.

Correspondingly, the present invention provides an overhead change apparatus in a network element of an embedded optical transport subnet, comprising a change control unit and an overhead change unit, wherein,
the change control unit is configured to notify the overhead change unit to change an overhead when detecting that a fault occurs, wherein the fault will trigger the embedded optical transport subnet and an outer subnet with the embedded optical transport subnet embedded therein which has a protection switching function to perform protection switching; and after the change lasts for a period of time, notify the overhead change unit to cancel the change, wherein the period of time is less than or equal to a set change lasting time; and
the overhead change unit is configured to change a value of an overhead which will trigger protection switching of the outer subnet in a signal to be transmitted to a downstream network element to a value which will not trigger protection switching of the outer subnet and not change an overhead which will trigger the protection switching of the embedded optical transport subnet when the change control unit notifies the change; and cancel the change when the change control unit notifies the cancel of the change.

Preferably, the overhead change apparatus is applied in all network elements in the embedded optical transport subnet;
the change control unit is configured to output a change indication signal according to an input Optical Channel Data Unit (ODU) layer failure indication signal, an overhead indication signal for indicating whether the overhead is changeable and a set change lasting time signal, wherein, the change indication signal indicates to change an overhead which is indicated by the overhead indication signal to be changeable and will trigger protection switching of a corresponding outer subnet and not change an overhead which is indicated by the overhead indication signal to be unchangeable and will trigger protection switching of the embedded optical transport subnet when the ODU layer failure indication signal indicates that the ODU layer is changed to be failed, and after the change lasts for a period of time, notify the overhead change unit to cancel the change, wherein the period of time is less than or equal to the set change lasting time; and
the overhead change unit is configured to, according to the indication of the change indication signal, change the value of the overhead which will trigger the protection switching of the corresponding outer subnet in the input ODUi Alarm Indication Signal (ODUi-AIS) signal to a value which will not trigger the protection switching of the outer subnet and not change the overhead which will trigger the protection switching of the embedded optical transport subnet, and then output the value; and cancel the change according to the indication of the change indication signal.

Preferably, the overhead change apparatus is applied in a network element which performs protection switching of the embedded optical transport subnet in the embedded optical transport subnet, and further comprises:

a Tandem Connection Monitoring (TCM) layer failure detection unit, configured to detect a TCM layer specified in an ODUi signal before the ODU layer failure processing, and output a TCM layer failure indication signal indicating whether the TCM layer is valid, wherein, the specified TCM layer is indicated by in input TCM layer indication signal as a TCM layer detected when protection switching processing is performed in the embedded optical transport subnet;

the change control unit is configured to output a change indication signal according to the input TCM layer failure indication signal, an overhead indication signal for indicating whether the overhead is changeable and a set change lasting time signal, wherein, the change indication signal indicates to change an overhead which is indicated by the overhead indication signal to be changeable and will trigger protection switching of a corresponding outer subnet and not change an overhead which is indicated by the overhead indication signal to be unchangeable and will trigger protection switching of the embedded optical transport subnet when the TCM layer failure indication signal indicates that the TCM layer is changed to be failed, and after the change lasts for a period of time, notify the overhead change unit to cancel the change, wherein the period of time is less than or equal to the set change lasting time; and

the overhead change unit is configured to, according to the indication of the change indication signal, change the value of the overhead which will trigger the protection switching of the corresponding outer subnet in the normal ODUi signal or an inserted ODUi-AIS signal which is output after the ODU layer failure processing to a value which will not trigger the protection switching of the outer subnet and not change the overhead which will trigger the protection switching of the embedded optical transport subnet, and then output the value; and cancel the change according to the indication of the change indication signal.

Preferably, there are one or more outer subnets corresponding to the network elements of the embedded optical transport subnet, wherein an outermost outer subnet is an optical transport subnet or a non-optical transport subnet, and if there are other outer subnets, all the other outer subnets are optical transport subnets;
the overhead which will trigger protection switching of the embedded optical transport subnet, indicated by the change control unit, is a TCMn-STAT overhead allocated to the embedded optical transport subnet, wherein $1 \leq n \leq 6$;
for one of the outer subnets, the overhead which will trigger protection switching of the corresponding outer subnet, indicated by the change control unit, is a TCMn-STAT overhead allocated to the outer subnet if said on of the outer subnets is an optical transport subnet and is a PM-STAT overhead if said one of the outer subnets is a non-optical transport subnet.

Preferably, the overhead change unit is configured to change a value of an overhead which will trigger protection switching of the corresponding outer subnet to a value which will not trigger protection switching of the outer subnet by means of:

for an outer subnet which is an optical transport subnet, changing a value of the TCMn-STAT overhead to one of 3-bit values 011, 100, 001 and 010; and for an outer subnet which is a non-optical transport subnet, changing a value of the PM-STAT overhead to one of 3-bit values 000, 010, 011 and 100.

Preferably, a network element in the embedded optical transport subnet only belongs to one embedded optical transport subnet; or
the network element in the embedded optical transport subnet belongs to a plurality of embedded optical transport subnets simultaneously, and the change control unit uses an innermost one of the embedded optical transport subnets as the embedded optical transport subnet on which control is based.

Preferably, the TCM layer failure detection unit is configured to detect that a TCM layer detected when protection switching processing is performed in the embedded optical transport subnet is changed to be failed, comprising detecting that one or more of the following conditions are met: a service layer of the TCM layer is changed to be failed; and the TCM layer is changed to be in an AIS state, a LCK state, an OCI state or an LTC state.

Preferably, the change control unit is configured to notify the overhead change unit to cancel the change after the change lasts for a period of time, comprising: the change control unit notifying the overhead change unit to cancel the change when the set change lasting time expires; or the change control unit notifying the overhead change unit to cancel the change if the ODU layer or TCM layer has not recovered to be normal when the set change lasting time expires; and immediately notifying the overhead change unit to cancel the change if the ODU layer or TCM layer recovers to be normal within the set change lasting time; wherein the set change lasting time is a longest service transient interruption time possibly caused during the protection switching of the embedded optical transport subnet.

Correspondingly, the present invention provides a network element of an embedded optical transport subnet comprising an Optical Channel Data Unit (ODU) layer failure processing apparatus and an overhead change apparatus, wherein,
the overhead change apparatus is one of the above overhead change apparatuses based on ODU layer failure detection of the present invention;
the ODU layer failure processing apparatus comprises an ODU layer failure detection unit and a selection unit, wherein, the ODU layer failure detection unit is configured to detect whether the ODU layer is failed according to an ODU overhead in the ODUi signal and output an ODU layer failure indication signal to the overhead change apparatus and the selection unit; and
the selection unit is configured to output the ODUi signal when the ODU layer failure indication signal indicates that the ODU layer is normal, and output an unchanged or changed ODUi Alarm Indication Signal (ODUi-AIS) from the overhead change apparatus when the ODU layer failure indication signal indicates that the ODU layer is failed.

Correspondingly, the present invention further provides a network element which performs protection switching of an embedded optical transport subnet in the embedded optical transport subnet, comprising an Optical Channel Data Unit (ODU) layer failure processing apparatus and an overhead change apparatus, wherein, the overhead change apparatus is one of the above overhead change apparatuses based on TCM layer detection of the present invention;
the ODU layer failure processing apparatus is configured to output a normal ODUi signal when the ODU layer is normal, and output an ODUi Alarm Indication Signal (ODUi-AIS) which is inserted to substitute a failed ODUi signal when the ODU layer is failed.

The above solutions can temporarily shield the overhead information output to the downstream network element which will trigger the protection switching of the outer subnet, thereby preventing the nested subnets from performing switching simultaneously.

Another technical problem to be solved by the present invention is to provide a transformation method from an OTN signal to a non-OTN signal and an apparatus thereof, and a network element, which can shield the maintenance information output to the downstream network element which will trigger the protection switching of the outer subnet by changing the overhead of the PM layer after the failure.

In order to solve the above technical problem, the present invention provides a transformation method from an OTN signal to a non-OTN signal, applied in a network element which performs a process of demapping the non-OTN signal from the OTN signal, a network where the network element is located comprises an embedded optical transport subnet and an outer non-optical transport subnet in a nesting relationship, the transformation method comprises:

detecting whether a value of a PM-STAT overhead in an Optical Channel Data Unit Signal (ODUi) is a value which will not trigger protection switching of the outer non-optical transport subnet after the network element of the embedded optical transport subnet changes the PM-STAT overhead; if yes, outputting an inserted second non-OTN maintenance signal to substitute the non-OTN signal demapped from the OTN signal; and if not, outputting a non-OTN signal demapped from the OTN signal or an inserted first non-OTN maintenance signal according to whether an Optical Channel Payload Unit (OPU) layer is failed; wherein, the second non-OTN maintenance signal is a non-OTN maintenance signal which will not trigger protection switching of the network element of the non-OTN, and the first non-OTN maintenance signal is a non-OTN maintenance signal which will trigger protection switching of the network element of the non-OTN.

Preferably, the value which will not trigger protection switching of the outer non-optical transport subnet after the network element of the embedded optical transport subnet changes the PM-STAT overhead is one of 3-bit values 000, 010, 011 and 100.

Preferably, the non-OTN signal is a signal encoded by a Physical Coding Sublayer (PCS), and the second non-OTN maintenance signal is a signal without data frames and full with idle frames; or
the non-OTN signal is a Synchronous Digital Hierarchy (SDH) signal, and the second non-OTN maintenance signal is a signal in which all payload areas are fixed values and regenerator section and multiplex section overheads are normal.

Correspondingly, the present invention provides a transformation apparatus from an OTN signal to a non-OTN signal, applied in a network element which performs a process of demapping the non-OTN signal from the OTN signal, a network where the network element is located comprises an embedded optical transport subnet and an outer non-optical transport subnet in a nesting relationship, the transformation apparatus comprises:

an Optical Channel Data Unit Signal (ODUi) demapping unit, configured to demap the non-OTN signal from the ODUi signal;

an Optical Channel Payload Unit (OPU) layer failure detection unit, configured to judge, according to the ODU and OPU layer overheads of the ODUi signal, whether a value of a PM-STAT overhead is a value which will not trigger protection switching of the outer non-optical transport subnet after the network element of the embedded optical transport subnet changes the PM-STAT overhead, judge whether the OPU layer is failed, and output a selection control signal according to a detection result;

a selection unit, configured to select one of the input non-OTN signal, a first non-OTN maintenance signal and a second non-OTN maintenance signal for output according to the selection control signal;

wherein, the second non-OTN maintenance signal is a non-OTN maintenance signal which will not trigger protection switching of the network element of the non-OTN and the first non-OTN maintenance signal is a non-OTN maintenance signal which will trigger protection switching of the network element of the non-OTN.

Preferably, the OPU layer failure detection unit is configured to output a corresponding selection control signal by means of:

when it is detected that the value of the PM-STAT overhead in the ODUi signal is equal to the value which will not trigger protection switching of the outer non-optical transport subnet after changing the PM-STAT overhead, outputting a selection control signal for selecting the second non-OTN maintenance signal;

when it is detected that the value of the PM-STAT overhead is not equal to the value which will not trigger protection switching of the outer non-optical transport subnet after changing the PM-STAT overhead and the OPU layer is failed, outputting a selection control signal for selecting the first non-OTN maintenance signal; and

when it is detected that the value of the PM-STAT overhead is not equal to the value which will not trigger protection switching of the outer non-optical transport subnet after changing the PM-STAT overhead and the OPU layer is normal, outputting a selection control signal for selecting the non-OTN signal.

Preferably, the value which will not trigger the protection switching of the outer non-optical transport subnet used by the OPU layer failure detection unit is one of 3-bit values 000, 010, 011 and 100; and
the non-OTN signal is a signal encoded by a Physical Coding Sublayer (PCS), and the second non-OTN maintenance signal is a signal without data frames and full with idle frames; or the non-OTN signal is a Synchronous Digital Hierarchy (SDH) signal, and the second non-OTN maintenance signal is a signal in which all payload areas are fixed values and regenerator section and multiplex section overheads are normal.

Correspondingly, the present invention further provides a network element which performs a process of demapping a non-OTN signal from an OTN signal, comprising the above transformation apparatus of the present invention.

Another technical problem to be solved by the present invention is to provide a method for preventing a plurality of nested subnets from switching simultaneously.

In order to solve the above technical problem, the present invention provides a method for preventing a plurality of nested subnets from switching simultaneously, applied in a network comprising a pair of embedded subnet and outer subnet having protection switching functions and being directly nested, wherein the embedded subnet is an optical transport subnet, and the method comprises:

all network elements of the embedded subnet performing the above overhead change method based on ODU layer failure detection of the present invention; or a network element which performs the protection switching of the embedded optical transport subnet in the embedded subnet performing the above overhead change method based on TCM layer failure detection of the present invention;

setting a protection switching delay triggering time of a network element which performs protection switching in the outer subnet to be less than a longest service transient interruption time possibly caused during the protection switching of the embedded subnet.

Preferably, the outer subnet is an optical transport subnet; or the outer subnet is a non-optical transport subnet, and the method further comprises: the network element demapping the non-OTN signal from the OTN signal in the network performing the above transformation method.

Preferably, there is no other optical transport subnet nested in the embedded subnet; or
there is other optical transport subnet embedded in the embedded subnet, and the network element which performs protection switching of the embedded optical transport subnet in the embedded subnet performing the above overhead change method based on TCM layer failure detection of the present invention, and the method further comprises the network element which performs protection switching of the optical transport subnet in each optical transport subnet as an embedded subnet and an outer subnet simultaneously in the embedded subnet performing the above overhead change method based on TCM layer failure detection of the present invention, and the embedded optical transport subnet in the performed overhead change method is the optical transport subnet.

Preferably, all network elements of the embedded subnet perform the above overhead change method based on ODU layer failure detection of the present invention, the network element which performs protection switching in the outer subnet does not support setting the protection switching delay triggering time, or sets the protection switching delay triggering time as 0, or sets the protection switching delay triggering time as a non-zero value less than or equal to 5ms; a network element which performs the protection switching of the embedded optical transport subnet in the embedded subnet performs the above overhead change method based on TCM layer failure detection of the present invention, and the protection switching delay triggering time set by the network element which performs protection switching in the outer subnet sets is larger than or equal to a time required to complete the overhead change and is less than or equal to 10ms.

Correspondingly, the present invention provides a network comprising a pair of subnets having protection switching functions and being directly nested, in which an embedded subnet is an optical transport subnet, wherein, all network elements in the embedded optical transport subnet are the above network elements performing the overhead change method based on the ODU layer failure detection of the present invention; or a network element which performs the protection switching of the embedded optical transport subnet in the embedded subnet is the above network element performing the overhead change method based on the TCM layer failure detection of the present invention; and the protection switching delay triggering time set by a network element which performs protection switching in the outer subnet is less than a longest service transient interruption time possibly caused during the protection switching of the corresponding embedded subnet.

Preferably, the outer subnet is an optical transport subnet; or the outer subnet is a non-optical transport subnet, and the network element which performs a process of demapping the non-OTN signal from the OTN signal in the network is the above network element performing a process of demapping the non-OTN signal from the OTN signal.

Preferably, there is no other optical transport subnet embedded in the embedded subnet; or
there is other optical transport subnet embedded in the embedded subnet, and the network element which performs protection switching of the embedded optical transport subnet in the embedded subnet is the network element which performs protection switching of an embedded optical transport subnet in the embedded optical transport subnet of the present invention, and the network element which performs protection switching of the optical transport subnet in each optical transport subnet as an embedded subnet and an outer subnet simultaneously in the embedded subnet is the network element which performs protection switching of an embedded optical transport subnet in the embedded optical transport subnet of the present invention and during the process of the overhead change apparatus, the optical transport subnet is used as an embedded optical transport subnet.

Preferably, all network elements of the embedded subnet are the network elements of an embedded optical transport subnet of the present invention, the network element which performs protection switching in the outer subnet does not support setting the protection switching delay triggering time, or sets the protection switching delay triggering time as 0, or sets the protection switching delay triggering time as a non-zero value less than or equal to 5ms; or a network element which performs the protection switching of the embedded optical transport subnet in the embedded subnet is the network element which performs protection switching of an embedded optical transport subnet in the embedded optical transport subnet of the present invention, and the protection switching delay triggering time set by the network element which performs protection switching in the outer subnet sets is larger than or equal to a time required to complete the overhead change and is less than or equal to 10ms.

In the above scheme, when a plurality of subnets having protection functions are in a nesting relationship, protection switching only occurs in a subnet which should perform protection switching, and protection switching will not occur in other subnets which should not perform protection switching. In addition, the protection switching delay trigger time Th can be set to be very short, such as 0 or a non-zero value less than 10ms. When protection switching systems of all subnets operate normally and any single point is failed, the protection switching timeout phenomenon will not occur in the subnets having protection switching functions. Further, the Th can be configured uniformly, which reduces the workload of the configuration.

Brief Description of Drawings

Fig. 1 is a diagram of networking of two optical transport subnets connected in series which have protection switching functions;

Fig. 2 is a diagram of a transferred TCM overhead after a network element 3 detects a fault in Fig. 1;

Fig. 3 is a diagram of example networking of two optical transport subnets in a nesting relationship which have protection switching functions;

Fig. 4 is a diagram of a transferred TCM overhead after a network element 3 detects a fault in Fig. 3;

Fig. 5 is a diagram of example networking of an optical transport subnet having a protection switching function being nested in a non-optical transport subnet having a protection switching function;

Fig. 6 is a diagram of a structure of a network element and a signal process of performing transformation between non-OTN signals and OTN signals;

Fig. 7 is a diagram of an ODU layer failure processing method;

Fig. 8 is a diagram of an OPU layer failure processing method;

Fig. 9 is a diagram of a structure of a network element and a signal process of performing transformation between OTN signals OTUk and OTN signals OTUk;

Fig. 10 is a flowchart of an overhead change method according to an embodiment one of the present invention;

Fig. 11 is a structural diagram of an overhead change apparatus according to the embodiment one of the present invention;

Fig. 12 is a flowchart of an overhead change method according to an embodiment two of the present invention;

Fig. 13 is a structural diagram of an overhead change apparatus and an ODU layer failure processing apparatus according to the embodiment two of the present invention;

Fig. 14 is a flowchart of an overhead change method according to an embodiment three of the present invention;

Fig. 15 is a structural diagram of an overhead change apparatus and an ODU layer failure processing apparatus according to the embodiment three of the present invention;

Fig. 16 is a diagram of example networking of multiple optical transport subnets in a nesting relationship which have protection switching functions;

Fig. 17 is a flowchart of a transformation method according to an embodiment six of the present invention;

Fig. 18 is a structural diagram of a transformation apparatus according to the embodiment six of the present invention;

Fig. 19 is a diagram of another example networking of an optical transport subnet having protection switching function being nested in a non-optical transport subnet having protection switching function;

Fig. 20 is a diagram of a structure of a network according to an application example one of the present invention;

Fig. 21 is a diagram of states of various network elements after the network element 3 detects a fault and before a network element 4 starts protection switching in Fig. 20;

Fig. 22 is a diagram of a structure of a network according to an application example two of the present invention;

Fig. 23 is a diagram of states of various network elements after the network element 3 detects a fault and before a network element 4 starts protection switching in Fig. 22; and

Fig. 24 is a diagram of states of various network elements after the network element 1 detects a fault and before a network element C6 starts protection switching in Fig. 22.

Preferred Embodiments of the Present Invention

The embodiments of the present invention will be illustrated in detail hereinafter in conjunction with accompanying drawings. It should be illustrated that, in the case of no conflict, the embodiments of this application and the features in the embodiments could be combined randomly with each other.

As described above, the network elements of the OTN implement processing of OTN signals, which comprise two types, i.e., ODUi (i=0, 1, 2, 3, 4, 2e, 3e, flex) and OTUk (k=1, 2, 3, 4, 2e, 3e), wherein, ODUi is used to implement encapsulation and management of the non-OTN signals, and the OTUk is responsible for transmitting the ODUi between the network elements of the OTN. There are two kinds of methods for processing the OTUk signals by the network elements of the OTN. One processing method is to implement transformation between non-OTN signals such as Ethernet signals, Synchronous Digital Hierarchy (SDH) signals, fiber channel signals and OTN signals OTUk, and the other processing method is to implement transformation between OTN signals OTUk and OTN signals OTUk.

According to the OTN standard (ITU-T G.709 and G.798), there are two types of service failure processing methods for the network elements of the OTN. One is an ODU layer failure processing method, and the other is an Optical Channel Payload Unit (OPU) layer failure processing method. The failure processing methods of the network elements of the OTN will influence the protection switching of the network elements of the OTN and the non-OTN. The failure processing methods of the network elements of the OTN can ensure stable transmission of a failure state between the network elements, thereby ensuring that a network element having the protection switching function can correctly detect a state of service failure occurring in the upstream, so as to trigger the protection switching.

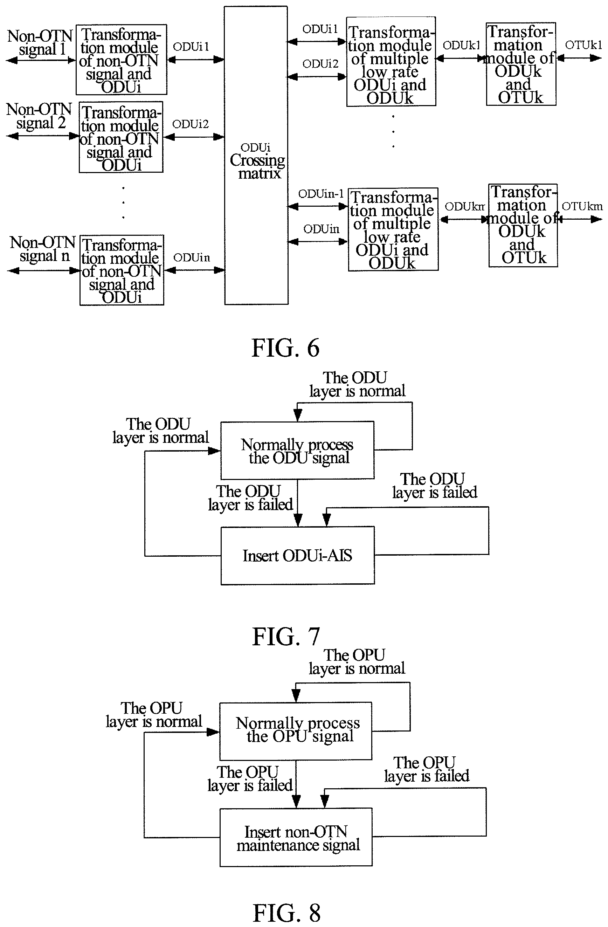

Fig. 6 illustrates an existing signal processing process of a network element which performs transformation between non-OTN signals and OTN OTUk signals. In the figure, the network element implements transformation from n non-OTN signals (non-OTN signal 1, non-OTN signal 2,..., non-OTN signal n) to m OTN signals OTUk (OTUk, OTUk1, OTUk2,..., OTUkm). In the transformation process, the non-OTN signals are firstly transformed into ODUi signals with similar rates, then the ODUi signals are scheduled by an ODUi crossing matrix, and the n scheduled ODUi signals are aggregated into m OTUk signals with higher rates according to the user's needs.

According to the OTN standard, an ODU layer failure processing apparatus is included in the transformation module of multiple ODUi and ODUk with low rates, so as to perform ODU layer failure processing. The method can be known with reference to Fig. 7. Before the ODUi output by the ODUi crossing matrix are aggregated into ODUk, it needs to judge whether the ODUi is failed, and if yes, the ODUi-AIS signals will be inserted to substitute the failed ODUi signals, and then the subsequent processes will be performed. Similarly, before the ODUi is de-aggregated from the ODUk and input into the ODU crossing matrix, it also needs to judge whether the ODUi is failed, and if yes, the ODUi-AIS signals are used to substitute the failed ODUi signals and input into the ODU crossing matrix. If the ODUi-AIS have been inserted in the upstream network elements in the optical transport subnet to substitute the failed ODUi, the ODUi signals de-aggregated from the ODUk are ODUi-AIS. During the ODU layer failure detection here, it is considered that the ODUi is a normal ODUi signal and will be transparently transmitted, and it is not judged that the ODU layer is failed thereby inserting the ODUi-AIS again.

An OPU layer failure processing apparatus is included in the transformation module of the non-OTN signals and ODUi, so as to perform OPU layer failure processing. The method can be known with reference to Fig. 8. When the non-OTN signal is demapped from the ODUi (from the perspective of the hierarchy, when the non-OTN signal is demapped from the ODUi signal, the OPU layer signal OPUi is firstly demapped, and then the non-OTN signal is demapped), it needs to detect whether the OPU layer is failed, and if so, the non-OTN maintenance signal is used to substitute the non-OTN signal. In addition, an ODU layer failure processing apparatus is also included in the transformation module of the non-OTN signals and ODUi, so as to perform ODU layer failure processing on the ODUi signal.

For different non-OTN signals, there are different definitions for the non-OTN maintenance signals. In the OTN standard G.709, there is a definition of common non-OTN maintenance signals. For example, for the Synchronous Digital Hierarchy (SDH) signals, the non-OTN maintenance signal is PN-11; and for the 10GBASE-R Ethernet signals (gigabit Ethernet signals defined by IEEE802.3), the non-OTN maintenance signal is Local Fault OrderSet. The principle of the OPU layer failure processing method is that if it is detected that the input signal is failed, it needs to use a signal in a particular signal format, i.e., a defined non-OTN maintenance signal, to substitute the failed signal for subsequent processes, and this signal in a particular signal format will be considered by a device receiving the signal as a failed signal.

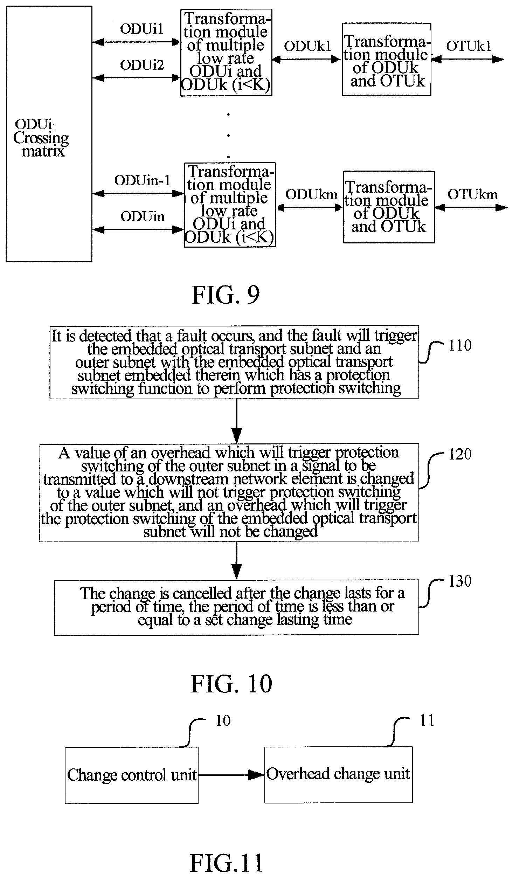

Fig. 9 illustrates a network element which performs transformation between OTN signals OTUk and OTN signals OTUk (a value of k is 1, 2, 3, 4, 2e, and 3e). There is no non-OTN signal in the figure, and there are only various OTUk signals, which can be considered as a part of the network element illustrated in Fig. 6. Similarly, an ODU layer failure processing apparatus is included in the transformation module of multiple ODUi and ODUk with low rates illustrated in the figure, so as to perform ODU layer failure processing. The processing method is similar to that of the ODU layer failure processing apparatus in Fig. 9.

Embodiment one

The present embodiment provides an overhead change method applied in a network element of an embedded optical transport subnet. As shown in Fig. 10, the method comprises the following steps.

In step 110, it is detected that a fault occurs, and the fault will trigger the embedded optical transport subnet and an outer subnet with the embedded optical transport subnet embedded therein which has a protection switching function to perform protection switching;

in step 120, a value of an overhead which will trigger protection switching of the outer subnet in a signal to be transmitted to a downstream network element is changed to a value which will not trigger protection switching of the outer subnet, and an overhead which will trigger the protection switching of the embedded optical transport subnet will not be changed; and

In step 130, the change is cancelled after the change lasts for a period of time, wherein the period of time is less than or equal to a set change lasting time.

Correspondingly, as shown in Fig. 11, an overhead change apparatus applied in a network element of an embedded optical transport subnet provided by the present embodiment comprises:

a change control unit 10, configured to notify an overhead change unit to perform the change when detecting that a fault occurs, wherein the fault will trigger the embedded optical transport subnet and an outer subnet with the embedded optical transport subnet embedded therein which has a protection switching function to perform protection switching; and after the change lasts for a period of time, notify the overhead change unit to cancel the change, wherein the period of time is less than or equal to a set change lasting time; and

the overhead change unit 11, configured to change a value of an overhead which will trigger protection switching of the outer subnet in a signal to be transmitted to a downstream network element to a value which will not trigger protection switching of the outer subnet and do not change an overhead which will trigger the protection switching of the embedded optical transport subnet when the change control unit notifies the change; and cancel the change when the change control unit notifies the cancel of the change.

With the overhead change method of the present embodiment, the overhead information output by a network element to a downstream network element which will trigger the protection switching of the outer subnet can temporarily be shielded after the network element detects that a fault occurs, so that the network element in the outer subnet will not perceive the service transient interruption generated during the protection switching of the embedded subnet, thereby achieving an effect of protection switching occurring in the embedded subnet but the outer subnet being not triggered to perform protection switching temporarily.

Embodiment two

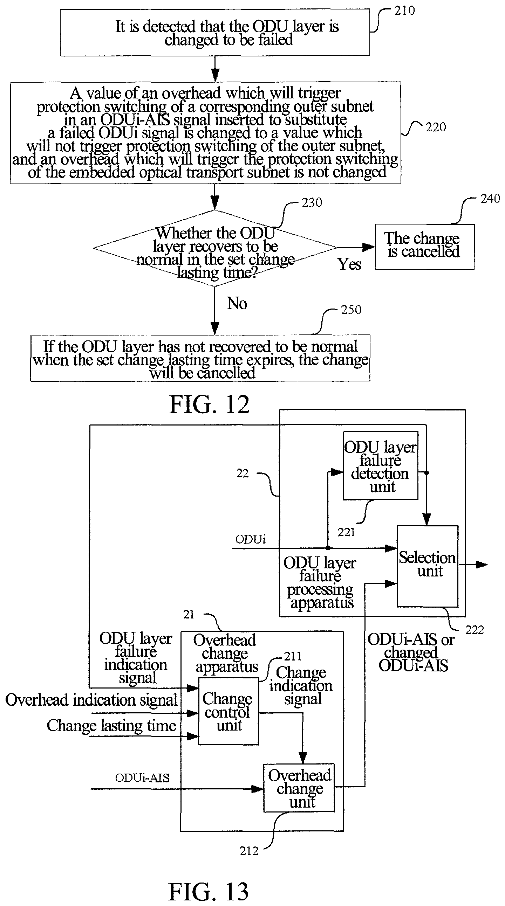

The present embodiment provides an overhead change method based on ODU layer failure detection applied in a network element of an embedded optical transport subnet. As shown in Fig. 12, the method comprises the following steps.

In step 210, it is detected that the ODU layer is changed to be failed;

The detection method in the existing standard can be used here.

In step 220, a value of an overhead which will trigger protection switching of a corresponding outer subnet in a ODUi-AIS signal inserted to substitute a failed ODUi signal is changed to a value that will not trigger protection switching of the outer subnet, and an overhead which will trigger the protection switching of the embedded optical transport subnet is not changed; and

the above overhead which will trigger the protection switching of the embedded optical transport subnet is a TCMn-STAT overhead allocated to the embedded optical transport subnet, wherein $1 \leq n \leq 6$;

the outer subnet has the embedded optical transport subnet embedded therein and has a protection switching function. There may be one or more outer subnets corresponding to the embedded optical transport subnet, wherein the outermost outer subnet is an optical transport subnet or a non-optical transport subnet, and if there are other outer subnets, all other outer subnets are optical transport subnets;

for one of the outer subnets;

if the outer subnet is an optical transport subnet, the overhead which will trigger protection switching of the outer subnet is a TCMn-STAT overhead allocated to the outer subnet;

if the outer subnet is a non-optical transport subnet, the overhead which will trigger protection switching of the outer subnet is a PM-STAT overhead.

According to the standard regulation, the TCMn-STAT overheads allocated to various optical transport subnets having a nesting relationship are different from each other.

The above TCMn-STAT and PM-STAT overheads are those defined in the G.709 standard. The length thereof is 3 bits, and the meaning of values thereof (binary) is defined in the G.709 as follows.

Table 1: Definition of TCMn-STAT

| 3-bit values of the TCMn-STAT | Meaning |
|---|---|
| 0 0 0 | No source TC |
| 0 0 1 | In use without Incoming Alignment Error (IAE) |
| 0 1 0 | In use with IAE |
| 0 1 1 | Reserved for future international standardization |
| 1 0 0 | Reserved for future international standardization |
| 1 0 1 | Maintenance signal: Optical Channel Data Unit k - Port Locking (ODUk-LCK) |
| 1 1 0 | Maintenance signal: ODUk - Open Connection Indication (ODUk-OCI) |
| 1 1 1 | Maintenance signal: ODUk - Alarm Indication Signal (ODUk-AIS) |

Table 2: Definition of PM-STAT

| 3-bit values of the PM-STAT | States represented by the values |
|---|---|
| 0 0 0 | Reserved for future international standardization |
| 0 0 1 | Normal path signal |
| 0 1 0 | Reserved for future international standardization |
| 0 1 1 | Reserved for future international standardization |
| 1 0 0 | Reserved for future international standardization |
| 1 0 1 | Maintenance signal: ODUk-LCK |
| 1 1 0 | Maintenance signal: ODUk-OCI |
| 1 1 1 | Maintenance signal: ODUk-AIS |

when the overhead is changed, if the TCMn-STAT overhead is changed, and the changed TCMn-STAT overhead is represented as TCMn-STATt, the values of the TCMn-STATt can be one of 3-bit values 011, 100, 001, and 010, and these values will not trigger protection switching of the outer optical transport subnet; and if the PM-STAT overhead is changed, and the changed PM-STAT overhead is represented as PM-STATp, the values of the PM-STATp can be one of 3-bit values 000, 010, 011, and 100, and these values of PM-STAT will not trigger inserting into the non-OTN maintenance signal defined in the existing standard when the non-OTN signals are demapped from the OTN signals (and will trigger protection switching of the non-OTN, which is referred to herein as a first non-OTN maintenance signal), thereby resulting in protection switching of the downstream network elements of the non-OTN.

In step 230, if it is detected that the ODU layer recovers to be normal in the set change lasting time, step 240 will be performed; otherwise, step 250 will be performed;

The above change lasting time is decided by the longest service transient interruption time possibly caused during the protection switching of the embedded subnet, for example, it is equal to the longest service transient interruption time.

In step 240, the change is cancelled, and the process ends.

According to the existing standard, after the ODU layer recovers to be normal, the insertion of the ODUi-AIS signal will be cancelled, and the subsequent processes will be performed with the normal ODUi signals. At this time, the change of the ODUi-AIS signals can be cancelled at the same time. In another implementation, the change of the ODUi-AIS signals can also be cancelled when the set change lasting time expires.

In step 250, if the ODU layer has not recovered to be normal when the set change lasting time expires, the change will be cancelled.

The ODU layer having not recovered to be normal means that the ODU layer is still in a failed state. After the change of the ODUi-AIS is cancelled, the inserted unchanged ODUi-AIS signal is output after the ODU layer failure processing is performed.

It should be illustrated that if there is multiple-layer nesting, the network element which applies the above method may belong to multiple embedded optical transport subnets simultaneously. At this time, the embedded optical transport subnet in the above method refers to an innermost embedded optical transport subnet of the multiple embedded optical transport subnets to which the network element belongs. For example, the optical transport subnet C is embedded in the optical transport subnet B, and the optical transport subnet B is further embedded in the optical transport subnet A. Then, for a network element in the optical transport subnet B which does not belong to the optical transport subnet C, when the above overhead change method is implemented, the optical transport subnet B is used as an embedded optical transport subnet, the overhead allocated to the optical transport subnet A is changed, the overhead allocated to the optical transport subnet B is not changed, and the change lasting time is set as a longest service transient interruption time possibly caused during protection switching of the optical transport subnet B. For a network element in the optical transport subnet C which belongs to both the embedded subnets C and B, when the above overhead change method is implemented, the optical transport subnet C is used as an embedded optical transport subnet, at this time, the overheads allocated to the optical transport subnets B and A are changed, the overhead allocated to the optical transport subnet C is not changed, and the change lasting time is set as a longest service transient interruption time possibly caused during protection switching of the optical transport subnet C.

For the network elements of the embedded optical transport subnet which applied the above method, the above method can further add a processing, i.e., if it is detected that the ODU layer failure can not be recovered by the protection switching system of the embedded optical transport subnet within the set change lasting time, the change will be cancelled immediately.

After detecting that the ODU layer is failed, the overhead change method of the present embodiment will temporarily shield the overhead information output to the downstream network element which will trigger the protection switching of the outer subnet, so that the network element in the outer subnet will not perceive the service transient interruption occurring during the protection switching of the embedded subnet.

In order to implement the above method, the present embodiment further provides an overhead change apparatus 21 based on ODU layer failure detection applied in a network element of the embedded optical transport subnet. As shown in Fig. 13, the overhead change apparatus 21 comprises a change control unit 211 and an overhead change unit 212, wherein,

the change control unit 211 is configured to output a change indication signal according to an input ODU layer failure indication signal, an overhead indication signal for indicating whether the overhead is changeable and a set change lasting time signal, wherein, the change indication signal indicates to change an overhead which is indicated by the overhead indication signal to be changeable and will trigger protection switching of a corresponding outer subnet and not change an overhead which is indicated by the overhead indication signal to be unchangeable and will trigger protection switching of the embedded optical transport subnet when the ODU layer failure indication signal indicates that the ODU layer is changed to be failed; and after the change lasts for a period of time, notify the overhead change unit to cancel the change, wherein the period of time is less than or equal to the set change lasting time; and

the overhead change unit 212 is configured to, according to the indication of the change indication signal, change the value of the overhead which will trigger the protection switching of the corresponding outer subnet in the input ODUi-AIS signal to a value which will not trigger the protection switching of the outer subnet and not change the overhead which will trigger the protection switching of the embedded optical transport subnet, and then output the value; and cancel the change according to the indication of the change indication signal.

The above overhead indication signal input in the change control unit can be used as a parameter which is set by a network manager. The changeable overhead indicated by the parameter includes an overhead which will trigger the protection switching of the corresponding outer subnet, and the unchangeable overhead indicated by the parameter includes an overhead which will trigger the protection switching of the embedded optical transport subnet. The specific description can be known with respect to the step 220, and will not be repeated here. The overhead indication signal may be a 7-bit signal, and each bit represents one of PM-STAT and 6 TCMn-STATs ($1 \leq n \leq 6$). A bit value represents whether the value of the PM-STAT or TCMn-STAT overhead represented by the bit is changeable, for example, 0 represents that it is changeable, and 1 represents that it is unchangeable. The change lasting time signal can also be used as a parameter which is set by a network manager, for example, can be set as a longest service transient interruption time possibly caused during the protection switching of the embedded subnet. In an example, when the ODU layer failure indication signal indicates that the ODU layer is changed to be failed and the failure lasting time has not achieved the change lasting time, the above 7-bit overhead indication signal is output as the change indication signal, and all-one 7-bit signal will be output in other cases. Wherein, the bit value of 0 represents that the overhead represented by the bit is to be changed, and the bit value of 1 represents that the overhead represented by the bit will not be changed. However, the present invention is not limited thereto, and the function of the change control unit can be implemented using software or other hardware structures.

After the change lasts for a period of time, the above change control unit notifies the overhead change unit to cancel the change, which may be that: the change control unit notifies the overhead change unit to cancel the change when the set change lasting time expires; or the change control unit notifies the overhead change unit to cancel the change if the ODU layer has not recovered to be normal when the set change lasting time expires, and immediately notifies the overhead change unit to cancel the change if the ODU layer recovers to be normal within the set change lasting time.

The value of the PM-STAT or TCMn-STAT overhead after being changed by the overhead change unit can be known with reference to the description of the step 220.

In a variation of the present embodiment, for the network element of the embedded subnet which actually implements the protection switching, a switching detection unit can be added in the overhead change apparatus of the present embodiment, for example, a hardware detection circuit is added for detecting whether the fault can be recovered by the protection switching system of the embedded optical transport subnet and notifying the change control unit after the ODU layer failure indication signal indicates that the ODU layer is changed to be failed. Correspondingly, the change control unit is further configured to output a change indication signal indicating cancelling the change when acquiring that the fault can not be recovered by the protection switching system of he embedded optical transport subnet while the ODU layer failure lasting time has not reached the set change lasting time. After the above improvements, in the case that the protection switching of the embedded subnet is failed, the delay of the protection switching of the outer subnet caused by the change lasting time can be minimized.

The present embodiment further provides a network element of an embedded optical transport subnet comprising an overhead change apparatus 21 based on ODU layer failure detection and an ODU layer failure processing apparatus 22 provided by the present embodiment. As shown in Fig. 13, the ODU layer failure processing apparatus 22 comprises:

the ODU layer failure detection unit 221, which is configured to detect whether the ODU layer is failed according to an ODU overhead in the ODUi signal and output an ODU layer failure indication signal; and

the selection unit 222, which is an either-or selector in the present embodiment, and is configured to output the ODUi signal when the ODU layer failure indication signal indicates that the ODU layer is normal, and output an unchanged or changed ODUi-AIS signal from the overhead change apparatus when the ODU layer failure indication signal indicates that the ODU layer is failed.

The structure of the above ODU layer failure processing apparatus and the location thereof in the network element are the same as those of the existing ODU layer failure processing apparatus, except that the original input signal ODUi-AIS is changed as the ODUi-AIS signal output by the overhead change apparatus which is not changed or is changed.

If the network element belongs to multiple embedded optical transport subnets simultaneously, the overhead indication signal and the change lasting time of the change control unit are set according to the innermost embedded optical transport subnet to which the network element belongs. For example, the optical transport subnet C is embedded in the optical transport subnet B, and the optical transport subnet B is further embedded in the optical transport subnet A, then, for a network element in the optical transport subnet B which does not belong to the optical transport subnet C, the parameter is set according to that the embedded subnet is the optical transport subnet B. For a network element in the optical transport subnet C which belongs to the embedded subnets C and B simultaneously, the parameter is set according to that the embedded subnet is the innermost optical transport subnet C.

According to the ODU layer failure detection result, the network element of the embedded optical transport subnet provided by the present embodiment can output a normal ODUi signal when the ODU layer is not failed, and insert the changed ODUi-AIS signal if it is detected that the ODU layer is changed to be failed, and the lasting time of the changed ODUi-AIS signal will not exceed the set change lasting time, thereby temporarily shielding the overhead information output to the downstream network element which will trigger the protection switching of the outer subnet.

Embodiment three

The overhead change method based on the ODU layer failure in the embodiment two needs to be used for all network elements of the embedded optical transport network. Since if the method is applied on one network element such as a network element which implements the protection switching of the embedded optical transport subnet, after a network element in the upstream which detects a fault inserts an ODUi-AIS to substitute the failed ODUi, the network element will consider that the ODUi signal transmitted by the upstream network element is a normal signal, thereby the overhead will not be changed, and thus it is inconvenient for implementing.

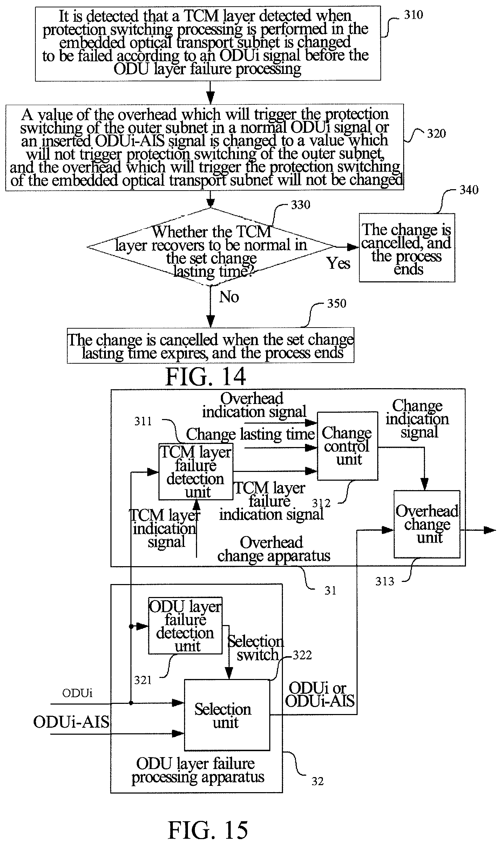

The present embodiment provides an overhead change method based on TCM layer failure detection, applied in a network element in the embedded optical transport subnet which performs the protection switching. As shown in Fig. 14, the method comprises the following steps.

In step 310, it is detected that a TCM layer detected when protection switching processing is performed in the embedded optical transport subnet is changed to be failed according to an ODUi signal before the ODU layer failure processing; and

The ODU layer failure processing here can use the method in the existing standard, and an ODUi-AIS signal is inserted for substituting the failed ODUi signal when the ODU layer is failed.

Each TCMn-STAT overhead constitutes a TCM layer, where $1 \le n \le 6$. The TCM being changed to be failed means that the value of the TCM layer will trigger the protection switching of the embedded optical transport subnet. For example, if one or more of the following conditions are detected, it is considered that the TCM layer is failed:

a service layer of the TCM layer is changed to be failed; and

the TCM layer is changed to be in an AIS state, a Connection Locking Indication (LCK) state, an Open Connection Indication (OCI) state or a Loss of Tandem Connection (LTC) state.

In step 320, a value of the overhead which will trigger the protection switching of the outer subnet in a normal ODUi signal or an inserted ODUi-AIS signal which is output after the ODU layer failure processing is changed to a value that will not trigger protection switching of the outer subnet, and the overhead which will trigger the protection switching of the embedded optical transport subnet will not be changed;

For the above outer subnet, the values of the overhead which will trigger the protection switching of the outer subnet, the overhead which will trigger the protection switching of the embedded optical transport subnet, and the overhead which will not trigger the protection switching of the outer subnet are the same as those of embodiment two, and can be known with respect to the description of step 220.

In step 330, if it is detected that the TCM layer recovers to be normal in the set change lasting time, step 340 will be performed; otherwise, step 350 will be performed;

The above change lasting time is decided by the longest service transient interruption time possibly caused during the protection switching of the embedded subnet, for example, it is equal to the longest service transient interruption time.

In step 340, the change is cancelled, and the process ends.

In step 350, the change is cancelled when the set change lasting time expires, and the process ends.

Similarly to the embodiment two, if there is multiple-layer nesting, the network element which applies the above method may belong to multiple embedded optical transport subnets simultaneously. At this time, the embedded optical transport subnet in the above method refers to an innermost embedded optical transport subnet of the multiple embedded optical transport subnets to which the network element belongs.

The above method can further add a processing, i.e., if it is detected that the TCM layer failure can not be recovered by the protection switching system of the embedded optical transport subnet within the set change lasting time, the change will be cancelled immediately.

The overhead change method of the present embodiment will temporarily shield the overhead information output to the downstream network element which will trigger the protection switching of the outer subnet after the network element detects that the ODU layer is failed, so that the network element in the outer subnet will not perceive the service transient interruption occurring during the protection switching of the embedded network element.

In order to implement the above method, the present embodiment provides an overhead change apparatus 31, applied in a network element which implements the protection switching of an embedded optical transport subnet in the embedded optical transport subnet. As shown in Fig. 15, the overhead change apparatus 31 comprises:

a TCM layer failure detection unit 311, configured to detect a TCM layer specified in an ODUi signal before the ODU layer failure processing, and output a TCM layer failure indication signal indicating whether the TCM layer is valid, wherein, the specified TCM layer is indicated by an input TCM layer indication signal as a TCM layer detected when protection switching processing is performed in the embedded optical transport subnet;

a change control unit 312, configured to output a change indication signal according to the input TCM layer failure indication signal, an overhead indication signal for indicating whether the overhead is changeable and a set change lasting time signal, wherein, the change indication signal indicates to change an overhead which is indicated by the overhead indication signal to be changeable and will trigger protection switching of a corresponding outer subnet and not change an overhead which is indicated by the overhead indication signal to be unchangeable and will trigger protection switching of the embedded optical transport subnet when the TCM layer failure indication signal indicates that the TCM layer is changed to be failed; and after the change lasts for a period of time, notify the overhead change unit to cancel the change, wherein the period of time is less than or equal to the set change lasting time; and

an overhead change unit 313, configured to, according to the indication of the change indication signal, change the value of the overhead which will trigger the protection switching of the corresponding outer subnet in the normal ODUi signal or an inserted ODUi-AIS signal which is output after the ODU layer failure processing to a value which will not trigger the protection switching of the outer subnet and not change the overhead which will trigger the protection switching of the embedded optical transport subnet, and then output the value; and cancel the change according to the indication of the change indication signal.

The above TCM layer which is detected when the protection switching process is performed is one of 6 TCMn. The TCM layer indication signal may be a 6-bit signal, wherein a bit value of only 1 bit represents that the TCM layer represented by the bit needs to be detected, i.e., only an overhead of one TCM layer is detected, and which TCM layer overhead is to be detected can be set by the software of the network manager. The TCM layer failure detection method can be known with respect to the description of step 310 in the method of the present embodiment.

The change control unit 312 may be the same as the change control unit 211 of embodiment two in terms of structures, formats of the overhead indication signals and change indication signals as well as the control logic, and will not be described, except that, for the failure indication signals received by the both, one failure indication signal is used to indicate whether the ODU layer is failed, and the other failure indication signal is used to indicate whether the TCM layer is failed. After the change lasts for a period of time, the above change control unit 312 notifies the overhead change unit 313 to cancel the change, which may be that the change control unit 312 notifies the overhead change unit 313 to cancel the change when the set change lasting time expires; or the change control unit 312 notifies the overhead change unit 313 to cancel the change if the TCM layer has not recovered to be normal when the set change lasting time expires, and immediately notifies the overhead change unit 313 to cancel the change if the TCM layer recovers to be normal within the set change lasting time.

The overhead to be changed by the overhead change unit 313 is the same as that in embodiment two, i.e., the PM-STAT overhead and part of the 6 TCMn-STAT overheads. However, the changed signal except the inserted ODUi-AIS may also a normal ODUi signal output after the ODU layer failure processing.

In a variation of the present embodiment, a switching detection unit can be added in the overhead change apparatus 31 of the present embodiment, for example, a hardware detection circuit is added, to detect whether the fault can be recovered by the protection switching system of the embedded optical transport subnet and notify the change control unit after the TCM layer failure indication signal indicates that the TCM layer is changed to be failed. Correspondingly, the change control unit 312 is further configured to output a change indication signal indicating to cancel the change when acquiring that the fault can not be recovered by the protection switching system of the embedded optical transport subnet while the TCM layer failure lasting time has not reached the set change lasting time.

The present embodiment further provides a network element in the embedded optical transport subnet which performs the protection switching of the embedded optical transport subnet. The network element comprises the overhead change apparatus 31 based on the TCM layer failure detection and the ODU layer failure processing apparatus 32 provided in the present embodiment. As shown in Fig. 15, the ODU layer failure processing apparatus 32 comprises an ODU layer failure detection unit 321 and a selection unit 322, which is used to output a normal ODUi signal when the ODU layer is normal and output an inserted ODUi-AIS signal for substituting the failed ODUi signal when the ODU layer is failed. The structure, the location in the network element and the input signal of the ODU layer failure processing apparatus 32 of the present embodiment may be the same as those of the existing ODU layer failure processing apparatus. If the network element belongs to multiple embedded optical transport subnets simultaneously, the overhead indication signal and the change lasting time of the change control unit are set according to the innermost embedded optical transport subnet of the multiple embedded optical transport subnets to which the network element belongs.

The network element in the embedded optical transport subnet provided by the present embodiment which performs the protection switching of the embedded optical transport subnet may, according to the TCM layer failure detection result, change the overhead which will trigger the protection switching of the corresponding outer subnet in the normal ODUi signal or the inserted ODUi-AIS signal output after the ODU layer failure processing when it is detected that the TCM layer is changed to be failed, and the change lasting time of the signal will not exceed the set change lasting time, thereby temporarily shielding the overhead information output by the network element to the downstream network element which will trigger the protection switching of the outer subnet.

Embodiment four

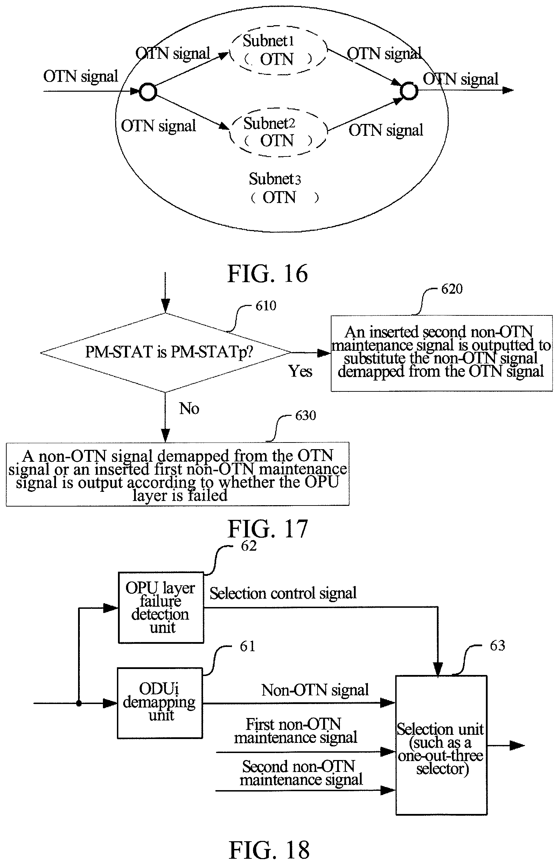

The present embodiment provides a method for preventing multiple nested subnets from switching simultaneously, applied in a network comprising a pair of subnets with protection switching functions and capable of being directly nested, wherein an embedded subnet and an outer subnet in the pair of subnets are optical transport subnets. Fig. 3 is an example of such network, and Fig. 16 illustrates another example of such network. There is also a problem in the network that the protection switching may occur simultaneously or the protection switching times out for the outer subnet and the embedded subnet.

A method for preventing multiple nested subnets from switching simultaneously of the present embodiment comprises:

all network elements of the embedded subnet performing the overhead change method based on the ODU layer failure detection provided by embodiment 2;

setting the protection switching delay trigger time of a network element which performs protection switching in the outer subnet to be less than a longest service transient interruption time possibly caused during the protection switching of the corresponding embedded subnet.

With respect to the network elements in the outer subnet which do not belong to the embedded subnet, they can be based on the existing standard.

No other optical transport subnet may be embedded in the above embedded subnet. If there are other optical transport subnets having protection switching functions embedded in the embedded subnet, i.e., a network comprised of the pair of subnets further comprises an inner outer subnet (i.e., it is not only an embedded subnet but also an outer subnet), at this time, the network elements in the outer subnet which perform the protection switching comprise a network element which performs protection switching of the inner outer subnet.

With the above method, it can prevent the protection switching systems of multiple embedded subnets in the network from switching simultaneously. When the network elements in the outer subnet which do not belong to the embedded subnet fail, the fault will be detected by the network element in the outer subnet which performs protection switching. As the protection switching delay trigger time of the network element is less than a longest service transient interruption time possibly caused during the protection switching of the embedded subnet, when a fault occurs outside the embedded subnet and in the outer subnet, the service transient interruption time due to protection switching resulting from setting the protection switching delay trigger time as the longest service transient interruption time in the prior art can be shortened. In some examples, the network element in the outer subnet which performs the protection switching may not support setting the protection switching delay trigger time (without delay trigger), or set the protection switching delay trigger time as 0. This fault will immediately trigger the protection switching of the outer subnet, and the outer subnet will not change the setting of Th according to whether the protection switching exists in the embedded subnet and the longest service transient interruption time due to the protection switching thereof, which largely reduces the maintenance workload. In another example, the protection switching delay trigger time can also be set as a non-zero value less than or equal to 5ms, and these examples may further avoid timeout of the protection switching due to the fault.

Correspondingly, the present embodiment further provides a network comprising a pair of subnets having protection switching functions and being directly nested, an embedded subnet and an outer subnet in the pair of subnets are optical transport subnets, wherein,

all network elements in the embedded optical transport subnet are the network elements of the embedded optical transport subnet provided by embodiment two, which comprise an overhead change apparatus based on ODU layer failure detection; and

the protection switching delay trigger time set by a network element which performs protection switching in the outer subnet is less than a longest service transient interruption time possibly caused during the protection switching of the embedded subnet.

No other optical transport subnet may be embedded in the above embedded subnet. If there are other optical transport subnets embedded in the above embedded subnet, at this time, the network elements in the outer subnet which perform the protection switching comprise a network element which performs protection switching of the inner outer subnet. In an example, the network element in the outer subnet which performs protection switching may not support the protection switching delay trigger time, or sets the protection switching delay trigger time as 0, or set the protection switching delay trigger time as a non-zero value less than or euqal to 5ms.

In an example of the present embodiment, two optical transport subnets, i.e., optical transport subnets A and B in a direct nesting relationship which have protection functions are included. The optical transport subnet B is embedded in the optical transport subnet A, i.e., all network elements of the subnet B are on the working path or protection path of the subnet A.

Assume that the optical transport subnet A uses TCMa($1 \leq a \leq 6$) as a decision basis of the protection switching of the subnet, and optical transport subnet B uses TCMb($1 \leq b \leq 6$) as a decision basis of the protection switching of the subnet. According to the TCM implementation principle of the OTN, a will certainly not be equal to b. In order to achive the effect desired by the present invention, all network elements in the embedded subnet B apply the overhead change method based on the ODU layer failure detection according to embodiment two, and set the TCMa-STAT overhead as a changeable overhead and set the TCMb-STAT overhead as an unchangeable overhead. For example, in the overhead change indication signal, a bit representing the TCMa-STAT overhead is configured as 0 and a bit representing the TCMb-STAT overhead is configured as 1, and remaining bits can be set randomly. The change lasting time of the TCMa-STAT overhead can be set as a longest service transient interruption time possibly caused during the protection switching of the embedded subnet B. All network elements in the outer subnet A which do not belong to the subnet B can be based on the existing OTN standard, while the network elements in the subnet A which perform protection switching functions can set the Th as 0.

Upon the above setting is completed, after a certain network element in the subnet B detects that the ODU layer is failed and performs processing according to the overhead change method based on the ODU layer failure detection of embodiment two, a value of the TCMb-STAT overhead of the ODUi-AIS is TCMb-AIS, and a value of the TCMa-STAT overhead is a changed value STATt. Therefore, the subnet B can normally detect that the service is failed thereby triggering the protection switching, while the subnet A will consider that the service is normal when detecting that the value of the TCMa-STAT overhead is STATt, and therefore the protection switching will not occur. Thus, it can prevent the protection switching systems of the subnets A and B from switching simultaneously. If the protection switching of the subnet B is not successful due to an accident, thereby it is to result in disconnection of the service continuously, as the change of the TCMa-STAT overhead will only last for a period of time, after the change lasting time ends, the value of the TCMa-STAT overhead will be TCMa-AIS. At this time, the protection switching will occur in the subnet A, which obviously will extend the service transient interruption time due to the protection switching of the subnet A, but the probability of the accident of the protection switching occurring in the subnet B is very low.

In an example with a multi-layer nesting, there is a nesting relationship among three optical transport subnets A, B, and C having protection switching functions. Wherein, the optical transport subnet B is embedded in the optical transport subnet A, i.e., all network elements in the subnet B are on the working path or protection path of the subnet A, and the optical transport subnet C is embedded in the optical transport subnet B, i.e., all network elements of the subnet C are on the working path or protection path of the subnet B. Assume that the optical transport subnet A uses TCMa as a decision basis of the protection switching of the subnet, the optical transport subnet B uses TCMb as a decision basis of the protection switching of the subnet, and the optical transport subnet C uses TCMc as a decision basis of the protection switching of the subnet ($a \neq b \neq c$, $1 \leq a \leq 6$, $1 \leq b \leq 6$, $1 \leq c \leq 6$). All network elements in the embedded subnets B and C apply the overhead change method based on the ODU layer failure detection in embodiment two, and all network elements in the subnet C set the TCMa-STAT overhead and the TCMb-STAT overhead as changeable overheads, and set the TCMc-STAT overhead as an unchangeable overhead. The change lasting time of the overhead is decided by a longest service transient interruption time possibly caused during the protection switching of the embedded subnet C. At the same time, all network elements in the subnet B which do not belong to the subnet C set the TCMa-STAT overhead as a changeable overhead, and set the TCMb-STAT overhead as an unchangeable overhead. The change lasting time of the overhead is decided by a longest service transient interruption time possibly caused during the protection switching of the embedded subnet B. All network elements in the outer subnet A which do not belong to the subnet B may be based on the existing OTN standard. In addition, the network elements which perform the protection switching of the subnets A and B set Th as 0.

After the above setting is completed, if a certain network element in the subnet C triggers the protection switching of the subnet C due to service failure, it will not result in the protection switching occurring in the subnets A and B, and when a certain network element in the subnet B which does not belong to the subnet C triggers the protection switching of the subnet B due to service interruption, it will not result in the protection switching occurring in the subnet A.

Similarly, after further extension, in the present embodiment, protection switching will not influence each other in the case that at most 6 optical transport subnets having protection switching functions are nested layer-by-layer.

Embodiment five

As the overhead change method of the embodiment two and the overhead change method of the embodiment three can temporarily shield the overhead information output by the network element to the downstream network element which will trigger the protection switching of the outer subnet, the present embodiment proposes a method for preventing multiple embedded subnets from switching simultaneously based on the overhead change method of the third embodiment. The applied network is the same as that of embodiment four, and can be known with respect to Figs. 3 and 16, which comprises a pair of subnets having protection switching functions and being directly nested, wherein an embedded subnet and an outer subnet of the pair of subnets are optical transport subnets.

The method for preventing multiple nested subnets from switching simultaneously of the present embodiment comprises:

network elements in the embedded subnet which perform the protection switching of the embedded optical transport subnet performing the overhead change method based on the TCM layer failure detection provided by embodiment three;
setting the protection switching delay trigger time of a network element in the outer subnet which performs protection switching to be less than a longest service transient interruption time possibly caused during the protection switching of the corresponding embedded subnet.

No other optical transport subnet may be embedded in the above embedded subnet. If there are other optical transport subnets in the above embedded subnet, at this time, the network elements in the outer subnet which perform the protection switching further comprise a network element which performs protection switching of the inner outer subnet, and in each optical transport subnet having protection switching function which is used not only as the embedded subnet but also as an outer subnet in the embedded subnet (possibly comprise an embedded subnet), the network elements which perform the protection switching of the optical transport subnet perform the overhead change method based on the TCM layer failure detection provided by the embodiment three, and the embedded optical transport subnet in the overhead change method refers to the optical transport subnet.

Compared with the embodiment four, the present embodiment only needs to be implemented on a few network elements, while the embodiment four needs to be implemented on more network elements, i.e., the costs are different. However, in the present embodiment, it needs to change the TCMn-STAT overhead allocated to the outer subnet only after detecting the specified TCM layer failure, and at this time, the network element in the outer subnet may have detected a transient TCM-AIS state, thereby triggering the protection switching. Therefore, at this time, the network elements in the outer subnet which perform the protection switching can set a short protection switching delay trigger time Th, which is larger than or equal to the time required to complete the change of the overhead and less than or equal to 10ms (which is enough to complete the change), so that the protection switching will not be performed before the network elements in the embedded subnet complete the change, and the time required to complete the change can be obtained by estimation or test. The specific value can be set according to the actual condition of the network, for example, being set as 5ms.

Correspondingly, the present embodiment further provides a network comprising a pair of subnets having protection switching functions and being directly nested, an embedded subnet and an outer subnet in the pair of subnets are optical transport subnets, wherein,
all network elements in the embedded subnet which perform the protection switching of the embedded subnet are the network elements of the embedded optical transport subnet provided by the embodiment three, which comprises the overhead change apparatus based on the TCM layer failure detection; and
the protection switching delay triggering time set by a network element in the outer subnet which performs protection switching is less than a longest service transient interruption time possibly caused during the protection switching of the corresponding embedded subnet.

No other optical transport subnet may be embedded in the above embedded subnet. If there are other optical transport subnets in the above embedded subnet, at this time, the network elements in the outer subnet which perform the protection switching comprise a network element which performs protection switching of the inner outer subnet, and in each optical transport subnet which is used not only as the embedded subnet but also as an outer subnet in the embedded subnet, the network elements which perform the protection switching of the optical transport subnet are the network elements of the embedded optical transport subnet provided by the embodiment three, wherein the optical transport subnet is used as an embedded optical transport subnet when overhead change apparatus based on the TCM layer failure detection performs processing.

When a fault occurs in the present embodiment, the processing is similar to the processing when a fault occurs in embodiment four, except that in the present embodiment, the network elements in the outer subnet which perform the protection switching of the outer subnet perform the TCM layer failure detection, and the processes for changing the overhead and cancelling the change after detecting the failure are similar, and can be known with respect to the examples in embodiment four. The present embodiment can also prevent protection switching systems of multiple embedded subnets from switching simultaneously, and at the same time reduce the service transient interruption time due to protection switching caused by setting the protection switching delay trigger time as the longest service transient interruption time in the prior art. In an example, the set protection switching delay trigger time is larger than or equal to the time required to complete the change of the overhead and less than or equal to 10ms, which can avoid the timeout of the protection switching due to the fault.

Embodiment six

As described above, in a pair of subnets in a nesting relationship which have protection switching functions, if the outer subnet is a non-optical transport subnet, the network elements which perform a process of demapping non-OTN signals from OTN signals need to perform the OPU layer detection. If it is detected that the OPU layer is failed, a first non-OTN maintenance signal (i.e., the OTN maintenance signal defined in the existing standards) will be inserted to substitute the OTN signal to be transmitted to the downstream network elements. After the embedded subnet uses the overhead change method of embodiments two and three of the present invention, when it is detected that the fault will trigger the protection switching of the corresponding outer subnet, the value of the PM-STAT overhead will be changed to PM-STATp. In order to prevent the outer subnet from performing protection switching, at this time, the first non-OTN maintenance signal can not be inserted immediately. Therefore, the present embodiment defines a new OTN maintenance signal which will not trigger the protection switching of the network elements of the non-OTN and is referred to as a second non-OTN maintenance signal. After it is detected that the value of the PM-STAT overhead is the changed PM-STATp, the second non-OTN maintenance signal is generated to substitute the demapped non-OTN signal and is transmitted to the downstream network elements. After the network elements of the non-OTN receive the second non-OTN maintenance signal, it will identify the signal as a normal non-OTN signal, and will not perform protection switching.

The present embodiment provides a transformation method from an OTN signal to a non-OTN signal, applied in a network element performing a process of demapping the non-OTN signal from the OTN signal, a network where the network element is located comprises an embedded optical transport subnet and an outer non-optical transport subnet in a nesting relationship. As shown in Fig. 17, the transformation method comprises the following steps.

In step 610, it is detected whether a value of a PM-STAT overhead in an ODUi signal is a value which will not trigger protection switching of the outer non-optical transport subnet after the network element of the embedded optical transport subnet changes the PM-STAT overhead, and if so, step 620 will be performed; otherwise, step 630 will be performed;

the value which will not trigger protection switching of the corresponding outer subnet after changing the PM-STAT overhead may be one of 3-bit values 000, 010, 011 and 100.

In step 620, an inserted second non-OTN maintenance signal is outputted to substitute the non-OTN signal demapped from the OTN signal; and

The above second non-OTN maintenance signal is a newly defined non-OTN maintenance signal which will not trigger the protection switching of the network elements of the non-OTN, i.e., it is inserted after it is detected that the value of the PM-STAT overhead is the PM-STATp. The network elements of the non-OTN will identify it as a normal signal, i.e., a signal which will not trigger the protection switching of the network elements of the non-OTN.

For example, for the Ethernet or Fibre Channel signals encoded by a Physical Coding Sublayer (PCS), signals without data frames and full with idle frames can be used as second non-OTN maintenance signals; and for the SDH signals, a signal in which all payload areas are fixed values and regenerator section and multiplex section overheads are normal can be used as the second non-OTN maintenance signal. The specific format definition of the second non-OTN maintenance signal is not limited thereto provided it can result in the non-OTN not triggering the protection switching. Those skilled in the art can change the specific format definition of the second non-OTN maintenance signal according to that condition.

In step 630, a non-OTN signal demapped from the OTN signal or an inserted first non-OTN maintenance signal is output according to whether an OPU layer is failed.

The processing when the value of the PM-STAT overhead is not the PM-STATp is the same as that of the existing standard. If the OPU layer is failed, first non-OTN maintenance signals will be inserted to substitute the non-OTN signals demapped from the OTN signals as the output signals of the network elements; otherwise, a normal operation will be performed on the OPU, and the non-OTN signals demapped from the OTN signals are used as the output signals of the network elements.

In the above transformation process, the above detection and processing will be repeated continually.

With the transformation method of the present embodiment in conjunction with the overhead change method of embodiment two or three, the network elements in the embedded subnet will change the value of the PM-STAT when it detects that a fault will trigger the protection switching of the corresponding outer subnet and the corresponding outer subnet comprises a non-optical transport subnet, while after detecting that the PM-STAT is a changed value, the network elements (which may be on the embedded subnet or may also be on the outer subnet) which performs a process of demapping the non-OTN signals from the OTN signals will insert the second non-OTN maintenance signals to prevent the outer non-optical transport subnet from performing the protection switching. As the change of the PM-STAT only lasts for a period of time, it can achieve an effect that protection switching occurs in network elements of the embedded subnet but the network elements of the outer subnet are not triggered to perform protection switching temporarily.

A transformation apparatus from an OTN signal to a non-OTN signal according to the present embodiment is applied in a network element which performs a process of demapping the non-OTN signal from the OTN signal, a network where the network element is located comprises an embedded optical transport subnet and an outer non-optical transport subnet in a direct nesting relationship. As shown in Fig. 18, the transformation apparatus comprises:

an ODUi demapping unit 61, which is configured to demap the non-OTN signal from the ODUi signal, and can use the existing ODUi demapping unit;

an OPU layer failure detection unit 62, configured to judge, according to the ODU and OPU layer overheads of the ODUi signal, whether a value of a PM-STAT overhead is equal to STATp, judge whether the OPU layer is failed, and output a selection control signal according to a detection result, wherein the meaning of the STATp is the same as above, and whether the OPU layer is failed can be judged using a method in the existing standards;

a selection unit 63, such as a one-out-three selector, configured to select one of the input non-OTN signal, a first non-OTN maintenance signal and a second non-OTN maintenance signal for output according to the selection control signal.

Wherein, the OPU layer failure detection unit is configured to output a corresponding selection control signal according to the following modes:

when it is detected that the value of the PM-STAT overhead in the ODUi signal is equal to STATp, outputting a selection control signal for selecting the second non-OTN maintenance signal;

when it is detected that the value of the PM-STAT overhead is not equal to STATp and the OPU layer is failed, outputting a selection control signal for selecting the first non-OTN maintenance signal; and

when it is detected that the value of the PM-STAT overhead is not equal to STATp and the OPU layer is normal, outputting a selection control signal for selecting the non-OTN signal.

The present embodiment further provides a network element which performs a process of demapping a non-OTN signal from an OTN signal, comprising the above transformation apparatus of the present embodiment.

Embodiment seven

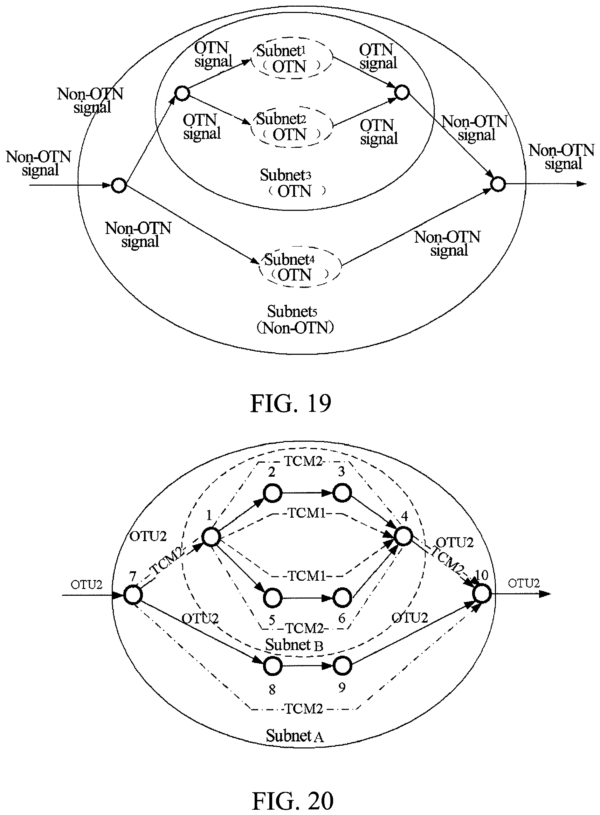

The network in which the present embodiment is applied comprises a pair of subnets having protection switching functions and in a direct nesting relationship, wherein the embedded subnet is an OTN, and the outer subnet is a non-OTN. Fig. 5 is an example of such network, and Fig. 19 illustrates another example of such network, wherein, a subnet 1 and a subnet 5 have protection switching functions. There is also a problem in the network that the protection switching may occur simultaneously or the protection switching times out for the outer subnet and the embedded subnet.

On basis of the method for preventing multiple embedded subnets from switching simultaneously provided by embodiment four or five, the method for preventing multiple embedded subnets from switching simultaneously of the present embodiment changes the outer subnet in the embodiment four or five from an OTN to a non-OTN, and adds the following features.

The network element performing a process of demapping the non-OTN signals from the OTN signal performs the transformation method from an OTN signal to a non-OTN signal of embodiment six.

The processing when other optical transport subnets are also embedded in the above embedded subnet is the same as that of embodiment four or five.

Correspondingly, on basis of the network provided by embodiment four or five, the network comprising a pair of optical transport subnets having protection switching functions and being directly nested of the present embodiment changes the outer subnet in the embodiment four or five from an optical transport subnet to a non-optical transport subnet, and adds the following features.

The network element performing a process of demapping the non-OTN signal from the OTN signal uses the network element for demapping the non-OTN signal from the OTN signal of embodiment six.

The processing of the network elements when elements other optical transport subnets are also embedded in the above embedded subnet is the same as that of embodiment four or five.

Compared to the network applied in embodiments four and five, the present embodiment differs in that the outer subnet is a non-OTN. Therefore, it needs to add the processing of transforming the OTN signal to the non-OTN signal provided by embodiment six on the network element demapping the non-OTN signal from the OTN signal, thereby not transmitting the first non-OTN maintenance signal to the network elements of the non-OTN in the downstream within the change lasting time of the overhead, which prevents the OTN and the non-OTN from switching simultaneously and can avoid protection switching delay timeout of the non-OTN when a fault occurs outside the embedded subnet and in the outer subnet.

In an example of the present embodiment, two subnets in a direct nesting relationship which have protection functions are included. The embedded subnet B is an optical transport subnet, and uses TCMb $(1 \leq b \leq 6)$ as a judgment basis of the protection switching of the subnet, and the outer subnet A is an non-optical transport subnet, and its protection switching condition is related to the type of the non-optical transport signal processed by the non-optical transport subnet. The present invention does not concern about the actual protection switching condition of the non-optical transport subnet. In order to implement the effect desired by the present invention, all network elements in the embedded subnet B apply the overhead change method according to embodiment two, and set the TCMa-STAT overhead as a changeable overhead and set the TCMb-STAT overhead as an unchangeable overhead. For example, in the overhead change indication signal, a bit representing the TCMa-STAT overhead is configured as 0 and a bit representing the TCMb-STAT overhead is configured as 1, and remaining bits can be set randomly. At the same time, the change lasting time of the PM-STAT overhead can be set as a longest service transient interruption time possibly caused during the protection switching of the embedded subnet B. There is no ODU layer processing in the outer subnet A since there is no network element of the OTN. At the same time, the network elements in the network which perform a process of demapping a non-OTN signal from the OTN signal apply the transformation method of embodiment six, and the network elements in the subnet A which perform protection switching can set the Th as 0.

Upon the above setting is completed, after a certain network element in the subnet B is failed and then the network performs processing according to the overhead change method of embodiment two, a value of the TCMb-STAT is TCMb-AIS, and a value of the PM-STAT is STATp. The value of the TCMb-STAT being TCMb-AIS can ensure that the subnet B can normally perform the protection switching, and the value of the PM-STAT being STATp will trigger the network elements in the network which perform a process of demapping a non-OTN signal from the OTN signal to output a second non-OTN maintenance signal. While the subnet A will consider that the service is normal when detecting the second non-OTN maintenance signal and therefore the protection switching will not occur. Thus, it can prevent the subnets A and B from switching simultaneously. If the protection switching is not successful due to an accident in the subnet B, thereby always resulting in service interruption, as the change of the PM-STAT will only last for a period of time, the value of the PM-STAT after the change lasting time ends is PM-AIS, and at this time, the subnet A will receive the first non-OTN maintenance signal and considers that the service is failed thereby performing protection switching. Thus, although the service transient interruption time due to the protection switching of the subnet A will be extended, the probability of the accident of the protection switching occurring in the subnet B is very low. In addition, when a network element in the subnet A which does not belong to subnet B fails, the fault will result in the subnet A detecting the first non-OTN maintenance signal, and as the network element in the subnet A which performs protection switching has set Th as 0, it will trigger immediately protection switching of the subnet A.

Similarly, the environment 2 may further be extended. The subnet A is a non-optical transport subnet having a protection switching function, and subnets B and C are optical transport subnets. The subnet B is embedded in the subnet A, and the subnet C is embedded in the subnet B. There is only the subnet C in the subnet B that has a protection switching function, and parts in the subnet B which do not belong to the subnet C do not have the protection switching functions. That is, the subnets C and A are a pair of subnets defined in the present invention which are directly nested and have protection switching functions. The subnet C uses the TCMc $(1 \leq c \leq 6)$ as a judgment basis of protection switching of the subnet. At this time, it needs to apply the overhead change method of embodiment two on all network elements in the subnet C and apply the transformation method of embodiment six on the network elements in the network which perform a process of demapping a non-OTN signal from an OTN signal. For all network elements in the subnet C, the PM-STAT overhead is set to be changed for a period of time, the TCMc-STAT overhead is set to be unchanged, and in addition, the network elements in the subnet A which perform protection switching can set Th as 0. After the above requirements are met, protection switching of the subnet C will not result in that the subnet A performs protection switching at the same time. Meanwhile, when a fault occurs outside the subnet C and in the subnet A, the protection switching delay timeout will not occur in the subnet A.

The overhead change method and the transformation method of the above various embodiments will not influence normal operations of the network elements in the network which do not apply the above embodiments.

The application examples of the present invention will be further described in detail below in conjunction with accompanying drawings. The application examples will be described below only using the overhead change apparatus provided by embodiment two on all network elements in the embedded optical transport subnet. This is similar to using the overhead change apparatus provided by embodiment three on the network elements in the embedded optical transport subnet which perform protection switching.

Application example one

Fig. 20 is a network structure corresponding to the application example. In the application example, all subnets are optical transport subnets, and all transported services are OTU2 services. The network elements 1-6 are network elements of the subnet B, and network elements 1-10 are network elements of the subnet A. The subnet B is embedded in the subnet A. The subnet A uses the TCM2 as a judgment basis of protection switching, and the subnet B uses the TCM1 as a judgment basis of protection switching. The network elements 1-6 in the subnet B apply the overhead change apparatus of embodiment two, and a network manager sets in the overhead indication signal that a bit representing TCM1 represents that it is unchangeable, and a bit 0 representing TCM2 represents that it is changeable, and other bits can be set randomly. The change lasting time is set as 50ms, wherein 50ms is a longest service transient interruption time possibly caused by the protection switching of the subnet B, and the above setting can be completed when the protection switching function of the subnet B is set. The network elements 4 and 10 in the subnet A are network elements which perform protection switching, and for the above two network elements, the protection switching delay trigger time is set as 0.

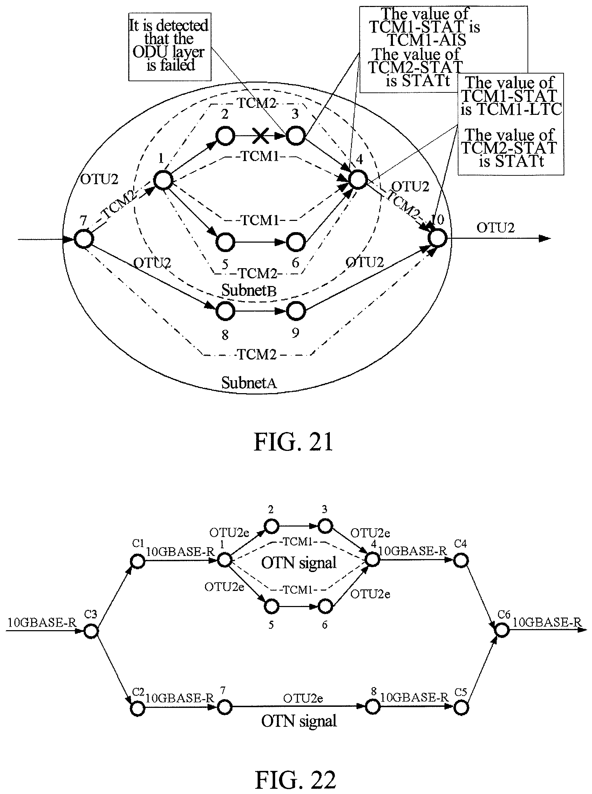

When a fiber from the network element 2 to network element 3 is disconnected, the overhead change apparatus in the network element 3 will enable the network element 3 to output ODU2-AIS lasting for at most 50ms whose overhead has been changed, wherein, the value of the TCM1-STAT overhead is TCM1-AIS, and the value of the TCM2-STAT is STATt. After the above ODU2-AIS whose overhead has been changed is transmitted to the network element 4, the network element 4 can switch normally according to the TCM1-AIS. As the network element 4 is an end point of the TCM1, the value of the TCM1-STAT overhead in the DOU2-AIS output by the network element 4 is TCM1-LTC, wherein the value of the LTC is 000. The OTN standard regulates that a network element located at the end point of the TCM needs to change the value of the TCM-STAT as TCM-LTC, which represents that the TCM is idle, and can be used by other network elements as a starting point of the TCM. At the same time, as the network element 4 is always not the starting point or end point of the TCM2, the TCM2 overhead is transparently transmitted. Thus, the value of the TCM2-STAT overhead in the ODU2-AIS which is received by the network element 10 after the fiber is disconnected and before the network element 4 performs protection switching is always STATt. At this time, the network element 10 considers that the service is normal and the protection switching will not occur. Assume that after the network element 4 detects that there is a fault between the network element 2 and the network element 3, it is switched to use services provided by the network elements 5 and 6 in the time of t (t<50ms). Then after the fiber is disconnected for the time of t, the network element 4 will output a normal OTU2 signal. At this time, the network element 10 will also receive the normal OTU2 signal. Thus, the network element 10 will still not perform the protection switching, thereby ensuring that only the network element 4 performs protection switching in the above process. Fig. 21 is a TCM overhead state of the network elements 3, 4 and 10 after the network element 3 detects the fault and before the network element 4 performs protection switching.

Application example two

Fig. 22 is a network structure corresponding to the application example. In the application example, the network elements C1-C6 of the non-OTN constitute a non-optical transport subnet having a protection switching function, and the network elements 1-8 of the OTN constitute an optical transport subnet. Wherein, the optical transport subnet comprised of the network elements 1-6 has a protection switching function. An interface signal between the optical transport subnet and the non-optical transport subnet is an Ethernet signal 10GBAE-R, the network elements of the OTN map the 10GBASE-R to the OTU2e, and the OTU2e is transmitted between the network elements of the OTN in a format of signal in the OTN. In order to achieve the purpose of the present invention, the network elements 1-6 in the optical transport subnet apply the overhead change apparatus of embodiment two, and it is set that in the overhead indication signal, a bit 1 representing TCM1 represents that it is unchangeable, and a bit 0 representing PM represents that it is changeable, and other bits can be set randomly. The change lasting time is set as 50ms, wherein 50ms is a longest service transient interruption time possibly caused by the protection switching of the subnet comprised of the network elements 1-6, and the above setting can be completed when the protection switching function of the network elements 1-6 is set. At the same time, the network elements 1 and 4 which perform the transformation between the OTN signal and the non-OTN signal apply the transformation apparatus of embodiment six, and in addition, the network elements 4 and C6 are network elements which perform the protection switching, and the protection switching delay trigger time is set as 0.

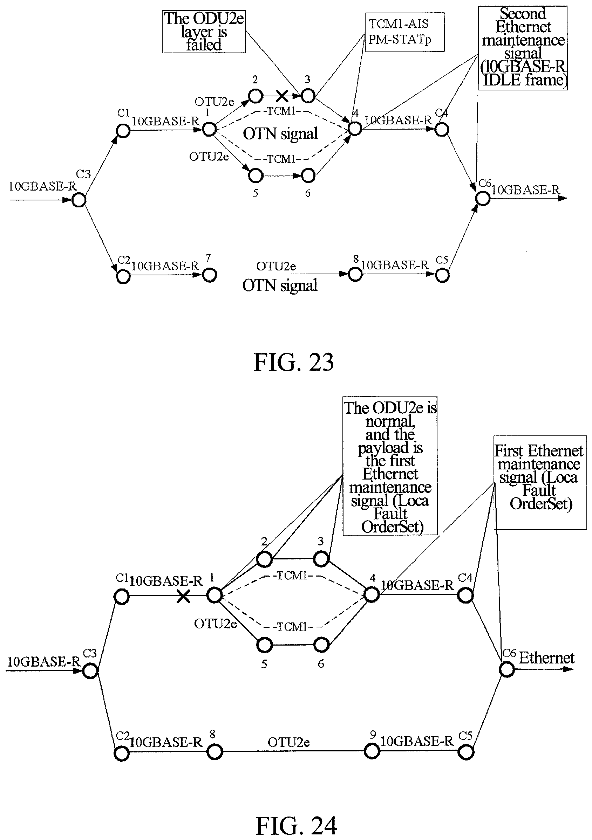

When a fiber from the network element 2 to network element 3 is disconnected, as shown in Fig. 23, the overhead change apparatus in the network element 3 will enable the network element 3 to output ODU2e-AIS lasting for at most 50ms whose overhead has been changed, wherein, the value of the TCM1-STAT overhead is TCM1-AIS, and the value of the PM-STAT overhead is STATp. After receiving the above ODU2e-AIS, the network element 4 can normally switch according to the TCM1-AIS. After the network element 3 detects the fault and before the network element 4 performs switching, the transformation apparatus in the network element 4 will always detect that the value of the PM-STAT overhead of the ODU2e-AIS is STATp. At this time, the second Ethernet maintenance signal will always be output. For the 10GBASE-R Ethernet, the second Ethernet maintenance signal is a signal in a format of 10GBASE-R without data frames and full with idle frames, and C4 and C6 will always receive the second Ethernet maintenance signal. As a service failure detection circuit located on C6 for implementing the protection switching function considers the signal as a normal signal, C6 will not perform protection switching. Assume that the protection switching of the network element 4 is completed within the time of t (t<50ms), after a fiber from the network element 2 to the network element 3 is disconnected, the network element 4 will output normal 10GBASR-R signals. At this time, the network elements C4 and C6 also receive normal 10GBASE-R signals. Thus, the network element C6 will still not perform switching, thereby ensuring that only the network element 4 performs the protection switching in the above process. Fig. 23 is a state of the network elements 3, 4, C4 and C6 after the network element 3 detects the fault and before the network element 4 performs protection switching.

In the above implementation environment, if according to the implementation in the prior art, in order to prevent the optical transport subnet and the non-optical transport subnet from performing protection switching simultaneously, it needs to set the protection switching delay trigger time Th of the network element C6 to be larger than the service transient interruption time due to the protection switching of the optical transport subnet, so as to prevent the subnet comprised of the network elements 1-6 from performing protection switching while the network element C6 will not perform the protection switching. The service transient interruption time due to the protection switching of the optical transport subnet is generally 50ms. In order to leave some margin, the Th of the network elements C3 and C6 is generally set as 100ms. If a fiber between the network elements C1 and 1 is disconnected, as shown in Fig. 24, at this time, after detecting that the 10GBASE-R is failed, the network element 1 will substitute the failed signal with the first Ethernet maintenance signal for subsequent processing. According to the G.709 standard, when the 10GBASE-R Ethernet maintenance signal is Local Fault OrderSet, the network element 1 will output a normal OTU2e signal, except that the payload in the OPU2e is Local Fault OrderSet while the network element 4 does not detect that the TCM1 layer is failed and thus will not trigger the protection switching. Thus, the network element 4 will output Local Fault OrderSet, the network elements C4 and C6 will receive the Local Fault OrderSet, and the network element C6 considers that the Local Fault OrderSet represents that the Ethernet service is failed. However, as the Th is set, the protection switching will be triggered only after it is detected that the Local Fault OrderSet lasts for the time of Th. Thus, the service of the network element C6 needs 100ms plus service switching time to recover to be normal. According to the implementation of the above embodiment seven of the present invention, as the network elements 1-6 do not detect that the ODU layer is failed, the ODU2e-AIS or the ODU2e-AIS whose overhead has been changed will not be inserted, and the protection switching will not be triggered. Thus, the processing result which is the same as that of the corresponding apparatus which complies with the OTN standard will be obtained after using the overhead change apparatus of the above embodiment. The network elements C4 and C6 will immediately detect the Local Fault OrderSet after the fiber between the network elements C3 and C1 is disconnected. As the Th of the C3 and C6 has been set as 0, the network element C6 will immediately perform protection switching after detecting the Local Fault OrderSet. Thus, the service interruption time is the above service switching time. With the present invention, only the subnets which should perform protection switching perform protection switching, and other subnets which should not perform protection switching will not perform protection switching. When protection switching systems of all subnets operate normally and any single point is failed, the protection switching delay of the subnets having protection switching functions will be reduced.

A person having ordinary skill in the art can understand that all or part of steps in the above method can be implemented by programs instructing related hardware, which can be stored in a computer readable storage medium, such as a read-only memory, a disk or a disc etc. Alternatively, all or part of steps in the above embodiments can also be implemented by one or more integrated circuits. Accordingly, each module/unit in the above embodiments can be implemented in the form of hardware, or can also be implemented in the form of software functional module. The present invention is not limited to any particular form of a combination of hardware and software.

The above description is only the preferred embodiments of the present invention and is not intended to limit the present invention. The invention can have a variety of changes and variations for those skilled in the art.

Industrial Applicability

In the above scheme, when multiple subnets having protection functions are in a nesting relationship, protection switching only occurs in a subnet which should perform protection switching, and protection switching will not occur in other subnets which should not perform protection switching. In addition, the protection switching delay trigger time Th can be set to be very short, such as 0 or a non-zero value less than 10ms. When protection switching systems of all subnets operate normally and any single point is failed, the protection switching timeout phenomenon will not occur in the subnets having protection switching functions. Further, the Th can be configured uniformly, which reduces the workload of the configuration.

**Claims**

1.  An overhead change method applied in a network element of an embedded optical transport subnet, comprising:

    detecting that a fault occurs, and the fault triggering the embedded optical transport subnet and an outer subnet with the embedded optical transport subnet embedded therein which has a protection switching function to perform protection switching;
    changing a value of an overhead which will trigger protection switching of the outer subnet in a signal to be transmitted to a downstream network element to a value which will not trigger protection switching of the outer subnet, and not changing an overhead which will trigger the protection switching of the embedded optical transport subnet; and
    cancelling the change after the change lasts for a period of time, wherein the period of time is less than or equal to a set change lasting time.

2.  The overhead change method according to claim 1, wherein,
    the overhead change method is applied in all network elements in the embedded optical transport subnet;
    said detecting that a fault occurs means detecting that an Optical Channel Data Unit, ODU, layer is changed to be failed; and
    said signal to be transmitted to a downstream network element means an ODUi Alarm Indication Signal, ODUi-AIS, signal which is inserted to substitute a failed ODU signal, ODUi signal.

3.  The overhead change method according to claim 1, wherein,
    the overhead change method is applied in a network element which performs protection switching of the embedded optical transport subnet in the embedded optical transport subnet;
    said detecting that a fault occurs means detecting, according to an ODUi signal before ODU layer failure processing, that a Tandem Connection Monitoring, TCM, layer detected when protection switching processing is performed in the embedded optical transport subnet is changed to be failed; and
    said signal to be transmitted to a downstream network element means a normal ODUi signal or an inserted ODUi-AIS signal which is output after the ODU layer failure processing.

4.  The overhead change method according to claim 1, 2 or 3, wherein,
    the overhead which will trigger protection switching of the embedded optical transport subnet is a TCMn-STAT overhead, as defined in the G.709 standard, allocated to the embedded optical transport subnet, wherein

    $$1 \leqslant n \leqslant 6;$$

    there are one or more outer subnets, wherein an outermost outer subnet is an optical transport subnet or a non-optical transport subnet, and if there are other outer subnets, all the other outer subnets are optical transport subnets;
    for one of the outer subnets,
    if the outer subnet is an optical transport subnet, the overhead which will trigger protection switching of the outer subnet is a TCMn-STAT overhead allocated to the outer subnet;
    if the outer subnet is a non-optical transport subnet, the overhead which will trigger protection switching of the outer subnet is a PM-STAT overhead, as defined in the G.709 standard, wherein, the set change lasting time is a longest service transient interruption time possibly caused during the protection switching of the embedded optical transport subnet,
wherein,
said network element of the embedded optical transport subnet only belongs to one embedded optical transport subnet; or belongs to a plurality of embedded optical transport subnets simultaneously, and the embedded optical transport subnet in the overhead change method is an innermost one of the embedded optical transport subnets.

5. The overhead change method according to claim 4, wherein,
said changing a value of an overhead which will trigger protection switching of the outer subnet to a value which will not trigger protection switching of the outer subnet comprises:

for an outer subnet which is an optical transport subnet, changing a value of the TCMn-STAT overhead to one of 3-bit values 011, 100, 001 and 010; and
for an outer subnet which is a non-optical transport subnet, changing a value of the PM-STAT overhead to one of 3-bit values 000, 010, 011 and 100.

6. The overhead change method according to claim 3, wherein,
said detecting that a TCM layer detected when protection switching processing is performed in the embedded optical transport subnet is changed to be failed comprises: detecting that one or more of the following conditions are met:

a service layer of the TCM layer is changed to be failed; and
the TCM layer is changed to be in an AIS state, a Connection Locking Indication, LCK, state, an Open Connection Indication, OCI, state or a Loss of Tandem Connection, LTC, state.

7. The overhead change method according to claim 2, wherein,
cancelling the change after the change lasts for a period of time comprises: cancelling the change when the set change lasting time expires; or
cancelling the change after the change lasts for a period of time comprises: if the ODU layer has not recovered to be normal when the set change lasting time expires, cancelling the change; and if it is detected that the ODU layer recovers to be normal within the set change lasting time, cancelling the change immediately.

8. The overhead change method according to claim 3, wherein,
cancelling the change after the change lasts for a period of time comprises: cancelling the change when the set change lasting time expires; or
cancelling the change after the change lasts for a period of time comprises: if the TCM layer has not recovered to be normal when the set change lasting time expires, cancelling the change; and if it is detected that the TCM layer recovers to be normal within the set change lasting time, cancelling the change immediately.

9. The overhead change method according to claim 7 or 8, wherein,
cancelling the change after the change lasts for a period of time further comprises: if it is detected that the fault can not be recovered by a protection switching system of the embedded optical transport subnet within the set change lasting time, cancelling the change immediately.

10. A transformation method from an optical transport network signal to a non-optical transport network signal, applied in a network element which performs a process of demapping the non-optical transport network signal from the optical transport network signal, wherein a network where the network element is located comprises an embedded optical transport subnet and an outer non-optical transport subnet in a nesting relationship, and the transformation method comprises:

detecting whether a value of a PM-STAT, as defined in the G.709 standard, in an Optical Channel Data Unit Signal, ODUi, is a value which will not trigger protection switching of the outer non-optical transport subnet after the network element of the embedded optical transport subnet changes the PM-STAT overhead:

if yes, outputting an inserted second non-optical transport network maintenance signal to substitute the non-optical transport network signal demapped from the optical transport network signal; and
if not, outputting the non-optical transport network signal demapped from the optical transport network signal or an inserted first non-optical transport network maintenance signal according to whether an Optical Channel Payload Unit, OPU, layer is failed;

wherein, the second non-optical transport network maintenance signal is a non-optical transport network maintenance signal which will not trigger protection switching of the network element of the non-optical transport network, and the first non-optical transport network maintenance signal is a non-optical transport network maintenance signal which will trigger protection switching of the network element of the non-optical transport network, wherein,

the value which will not trigger protection switching of the outer non-optical transport subnet after the network element of the embedded optical transport subnet changes the PM-STAT overhead is one of 3-bit values 000, 010, 011 and 100, wherein,

the non-optical transport network signal is a signal encoded by a Physical Coding Sublayer, PCS, and the second non-optical transport network maintenance signal is a signal without data frames and full with idle frames; or

the non-optical transport network signal is a Synchronous Digital Hierarchy, SDH, signal, and the second non-optical transport network maintenance signal is a signal in which all payload areas are fixed values and regenerator section and multiplex section overheads are normal.

11. A method for preventing a plurality of nested subnets from switching simultaneously, applied in a network comprising a pair of embedded subnet and outer subnet having protection switching functions and capable of being directly nested, wherein the embedded subnet is an optical transport subnet, and the method comprises:

all network elements of the embedded subnet performing the overhead change method according to claim 2 or performing the overhead change method based on claim 2 in any dependent claim of claim 2; or a network element which performs the protection switching of the embedded optical transport subnet in the embedded subnet performing the overhead change method according to claim 3 or performing the overhead change method based on claim 3 in any dependent claim of claim 3;

setting a protection switching delay triggering time of a network element which performs protection switching in the outer subnet to be less than a longest service transient interruption time possibly caused during the protection switching of the embedded subnet.

12. The method according to claim 11, wherein,

the outer subnet is an optical transport subnet; or

the outer subnet is a non-optical transport subnet, and the method further comprises: a network element performing a process of demapping a non-optical transport network signal from an optical transport network signal in the network performing the transformation method according to claim 10, wherein,

there is no other optical transport subnet embedded in the embedded subnet; or

there is other optical transport subnet embedded in the embedded subnet, and the network element which performs protection switching of the embedded optical transport subnet in the embedded subnet performs the overhead processing method according to claim 3 or performs the overhead change method based on claim 3 in any dependent claim of claim 3, and the method further comprises: the network element which performs protection switching of the optical transport subnet in each optical transport subnet as an embedded subnet and an outer subnet simultaneously in the embedded subnet performing the overhead change method according to claim 3 or performing the overhead change method based on claim 3 in any dependent claim of claim 3, and the embedded optical transport subnet in the performed overhead change method is the optical transport subnet.

13. The method according to claim 11 or 12, wherein,

all network elements of the embedded subnet perform the overhead change method according to claim 2 or perform the overhead change method based on claim 2 in any dependent claim of claim 2, the network element which performs protection switching in the outer subnet does not support setting the protection switching delay triggering time, or sets the protection switching delay triggering time as 0, or sets the protection switching delay triggering time as a non-zero value less than or equal to 5ms; or

a network element which performs the protection switching of the embedded optical transport subnet in the embedded subnet performs the overhead change method according to claim 3 or performs the overhead change method based on claim 3 in any dependent claim of claim 3, and the protection switching delay triggering time set by the network element which performs protection switching in the outer subnet sets is larger than or equal to a time required to complete the overhead change and is less than or equal to 10ms.

14. An overhead change apparatus in a network element of an embedded optical transport subnet, comprising a change control unit and an overhead change unit, wherein,

the change control unit is configured to notify the overhead change unit to change an overhead when detecting that a fault occurs, wherein the fault will trigger the embedded optical transport subnet and an outer subnet with the embedded optical transport subnet embedded therein which has a protection switching function to perform protection switching; and after the change lasts for a period of time, notify the overhead change unit to cancel the change, wherein the period of time is less than or equal to a set change lasting time; and

the overhead change unit is configured to change a value of an overhead which will trigger protection switching of the outer subnet in a signal to be transmitted to a downstream network element to a value which will not trigger protection switching of the outer subnet and do not change an overhead which will trigger the protection switching of the embedded optical transport subnet when the change control unit notifies the change; and cancel the change when the change control unit notifies the cancel of the change.

15. The overhead change apparatus according to claim 14, wherein,

the overhead change apparatus is applied in all network elements in the embedded optical transport subnet;

the change control unit is configured to output a change indication signal according to an input Optical Channel Data Unit, ODU, layer failure indication signal, an overhead indication signal for indicating whether the overhead is changeable and a set change lasting time signal, wherein, the change indication signal indicates to change an overhead which is indicated by the overhead indication signal to be changeable and will trigger protection switching of a corresponding outer subnet and not change an overhead which is indicated by the overhead indication signal to be unchangeable and will trigger protection switching of the embedded optical transport subnet when the ODU layer failure indication signal indicates that the ODU layer is changed to be failed, and after the change lasts for a period of time, notify the overhead change unit to cancel the change, wherein the period of time is less than or equal to the set change lasting time; and

the overhead change unit is configured to, according to an indication of the change indication signal, change the value of the overhead which will trigger the protection switching of the corresponding outer subnet in the input ODUi Alarm Indication Signal, ODUi-AIS, signal to a value which will not trigger the protection switching of the outer subnet and not change the overhead which will trigger the protection switching of the embedded optical transport subnet, and then output the value; and cancel the change according to the indication of the change indication signal.

16. The overhead change apparatus according to claim 14, wherein,

the overhead change apparatus is applied in a network element which performs protection switching of the embedded optical transport subnet in the embedded optical transport subnet, and further comprises:

a Tandem Connection Monitoring, TCM, layer failure detection unit, configured to detect a TCM layer specified in an ODUi signal before ODU layer failure processing, and output a TCM layer failure indication signal indicating whether the TCM layer is valid, wherein, the specified TCM layer is indicated by in input TCM layer indication signal as a TCM layer detected when protection switching processing is performed in the embedded optical transport subnet;

the change control unit is configured to output a change indication signal according to an input TCM layer failure indication signal, an overhead indication signal for indicating whether the overhead is changeable and a set change lasting time signal, wherein, the change indication signal indicates to change an overhead which is indicated by the overhead indication signal to be changeable and will trigger protection switching of a corresponding outer subnet and not change an overhead which is indicated by the overhead indication signal to be unchangeable and will trigger protection switching of the embedded optical transport subnet when the TCM layer failure indication signal indicates that the TCM layer is changed to be failed, and after the change lasts for a period of time, notify the overhead change unit to cancel the change, wherein the period of time is less than or equal to the set change lasting time; and

the overhead change unit is configured to, according to the indication of the change indication signal, change the value of the overhead which will trigger the protection switching of the corresponding outer subnet in a normal ODUi signal or an inserted ODUi-AIS signal which is output after ODU layer failure processing to a value which will not trigger the protection switching of the outer subnet, and not change the overhead which will trigger the protection switching of the embedded optical transport subnet, and then output the value; and cancel the change according to the indication of the change indication signal.

17. The overhead change apparatus according to claim 14, 15 or 16, wherein,

there are one or more outer subnets corresponding to the network elements of the embedded optical transport subnet, wherein an outermost outer subnet is an optical transport subnet or a non-optical transport subnet, and if there are other outer subnets, all the other outer subnets are optical transport subnets;

the overhead which will trigger protection switching of the embedded optical transport subnet, indicated by the change control unit, is a TCMn-STAT overhead, as defined in the G.709 standard, allocated to the embedded optical transport subnet, wherein $1 \leq n \leq 6$;

for one of the outer subnets, the overhead which will trigger protection switching of the corresponding outer subnet, indicated by the change control unit, is a TCMn-STAT overhead allocated to the outer subnet if said one of the outer subnets is an optical transport subnet and is a PM-STAT overhead if said one of the outer subnets is a non-optical transport subnet,

wherein,

the overhead change unit is configured to change the value of the overhead which will trigger protection switching of the corresponding outer subnet to a value which will not trigger protection switching of the outer subnet, comprising:

for an outer subnet which is an optical transport subnet, changing a value of the TCMn-STAT overhead to one of 3-bit values 011, 100, 001 and 010; and

for an outer subnet which is a non-optical transport subnet, changing a value of the PM-STAT overhead to one of 3-bit values 000, 010, 011 and 100.

18. The overhead change apparatus according to claim 14, 15 or 16, wherein,

a network element in the embedded optical transport subnet only belongs to one embedded optical transport subnet; or

the network element in the embedded optical transport subnet belongs to a plurality of embedded optical transport subnets simultaneously, and the change control unit uses an innermost one of the embedded optical transport subnets as the embedded optical transport subnet on which control is based.

19. The overhead change apparatus according to claim 16, wherein,

the TCM layer failure detection unit is configured to detect that a TCM layer detected when protection switching processing is performed in the embedded optical transport subnet is changed to be failed, comprising detecting that one or more of the following conditions are met:

a service layer of the TCM layer is changed to be failed; and

the TCM layer is changed to be in an AIS state, an LCK state, an OCI state or an LTC state.

20. The overhead change apparatus according to claim 15 or 16, wherein,

the change control unit is configured to notify the overhead change unit to cancel the change after the change lasts for a period of time, comprising:

the change control unit notifying the overhead change unit to cancel the change when the set change lasting time expires; or

the change control unit notifying the overhead change unit to cancel the change if the ODU layer or TCM layer has not recovered to be normal when the set change lasting time expires; and immediately notifying the overhead change unit to cancel the change if the ODU layer or TCM layer recovers to be normal within the set change lasting time;

wherein the set change lasting time is a longest service transient interruption time possibly caused during the protection switching of the embedded optical transport subnet.

21. A network element of an embedded optical transport subnet, comprising an Optical Channel Data Unit, ODU, layer failure processing apparatus, wherein, the network element further comprises an overhead change apparatus, wherein,

the overhead change apparatus is the overhead change apparatus according to claim 15 or is the overhead change apparatus based on claim 15 in any dependent claim of claim 15;

the ODU layer failure processing apparatus comprises an ODU layer failure detection unit and a selection unit, wherein,

the ODU layer failure detection unit is configured to detect whether an ODU layer is failed according to an ODU overhead in an ODUi signal and output an ODU layer failure indication signal to the overhead change apparatus and the selection unit; and

the selection unit is configured to output an ODUi signal when the ODU layer failure indication signal indicates that the ODU layer is normal, and output an unchanged or changed ODUi Alarm Indication Signal, ODUi-AIS, from the overhead change apparatus when the ODU layer failure indication signal indicates that the ODU layer is failed.

22. A network element which performs protection switching of an embedded optical transport subnet in the embedded optical transport subnet, comprising an Optical Channel Data Unit (ODU) layer failure processing apparatus, wherein, the network element further comprises an overhead change apparatus, wherein,
the overhead change apparatus is the overhead change apparatus according to claim 16 or is the overhead change apparatus based on claim 16 in any dependent claim of claim 16;
the ODU layer failure processing apparatus is configured to output a normal ODUi signal when an ODU layer is normal, and output an ODUi Alarm Indication Signal, ODUi-AIS, which is inserted to substitute a failed ODUi signal when the ODU layer is failed.

23. A transformation apparatus from an optical transport network signal to a non-optical transport network signal, applied in a network element which performs a process of demapping the non-optical transport network signal from the optical transport network signal, wherein a network where the network element is located comprises an embedded optical transport subnet and an outer non-optical transport subnet in a direct nesting relationship, and the transformation apparatus comprises:

an Optical Channel Data Unit Signal, ODUi, demapping unit, configured to demap the non-optical transport network signal from an ODUi signal;
an Optical Channel Payload Unit, OPU, layer failure detection unit, configured to judge, according to ODU and OPU layer overheads of the ODUi signal, whether a value of a PM-STAT overhead, as defined in the G.709 standard, is a value which will not trigger protection switching of the outer non-optical transport subnet after the network element of the embedded optical transport subnet changes the PM-STAT overhead, and judge whether the OPU layer is failed, and output a selection control signal according to a detection result;
a selection unit, configured to select one of an input non-optical transport network signal, a first non-optical transport network maintenance signal and a second non-optical transport network maintenance signal for outputting according to the selection control signal;
wherein, the first non-optical transport network maintenance signal is a non-optical transport network maintenance signal which will trigger protection switching of the network element of the non-optical transport network, and the second non-optical transport network maintenance signal is a non-optical transport network maintenance signal which will not trigger protection switching of the network element of the non-optical transport network.

24. The transformation apparatus according to claim 23, wherein,
the OPU layer failure detection unit is configured to output a corresponding selection control signal by means of:

when it is detected that the value of the PM-STAT overhead in the ODUi signal is equal to the value which will not trigger protection switching of the outer non-optical transport subnet after changing the PM-STAT overhead, outputting a selection control signal for selecting the second non-optical transport network maintenance signal;
when it is detected that the value of the PM-STAT overhead is not equal to the value which will not trigger protection switching of the outer non-optical transport subnet after changing the PM-STAT overhead and the OPU layer is failed, outputting a selection control signal for selecting the first non-optical transport network maintenance signal; and
when it is detected that the value of the PM-STAT overhead is not equal to the value which will not trigger protection switching of the outer non-optical transport subnet after changing the PM-STAT overhead and the OPU layer is normal, outputting a selection control signal for selecting the non-optical transport network signal.

25. The transformation apparatus according to claim 23 or 24, wherein,
the value which will not trigger the protection switching of the outer non-optical transport subnet used by the OPU layer failure detection unit is one of 3-bit values 000, 010, 011 and 100; and
the non-optical transport network signal is a signal encoded by a Physical Coding Sublayer, PCH, and the second non-optical transport network maintenance signal is a signal without data frames and full with idle frames; or the non-optical transport network signal is a Synchronous Digital Hierarchy, SDH, signal, and the second non-optical transport network maintenance signal is a signal in which all payload areas are fixed values and regenerator section and multiplex section overheads are normal.

26. A network element which performs a process of demapping a non-optical transport network signal from an optical transport network signal, comprising the transformation apparatus from an optical transport network signal to a non-optical transport network signal according to claim 23, 24 or 25 .

27. A network comprising a pair of subnets having protection switching functions and being directly nested, in which an embedded subnet is an optical transport subnet, wherein,

all network elements in the embedded optical transport subnet are the network element according to claim 21; or a network element which performs protection switching of the embedded optical transport subnet in the embedded subnet is the network element according to claim 22; and

a protection switching delay triggering time set by a network element which performs protection switching in an outer subnet is less than a longest service transient interruption time possibly caused during the protection switching of the embedded subnet,

wherein,

the outer subnet is an optical transport subnet; or

the outer subnet is a non-optical transport subnet, and a network element demapping a non-optical transport network signal from an optical transport network signal in the network is the network element according to claim 26,

wherein,

there is no other optical transport subnet embedded in the embedded subnet; or

there is other optical transport subnet embedded in the embedded subnet, and the network element which performs protection switching of the embedded optical transport subnet in the embedded subnet is the network element according to claim 22, and the network element which performs protection switching of the optical transport subnet in each optical transport subnet as an embedded subnet and an outer subnet simultaneously in the embedded subnet is the network element according to claim 22, and when processing by an overhead change apparatus therein, the optical transport subnet is used as an embedded optical transport subnet,

wherein,

all network elements of the embedded subnet are the network elements according to claim 21, the network element which performs protection switching in the outer subnet does not support setting the protection switching delay triggering time, or sets the protection switching delay triggering time as 0, or sets the protection switching delay triggering time as a non-zero value less than or equal to 5ms; or

a network element which performs the protection switching of the embedded optical transport subnet in the embedded subnet is the network element according to claim 22, and the protection switching delay triggering time set by the network element which performs protection switching in the outer subnet sets is larger than or equal to a time required to complete an overhead change and is less than or equal to 10ms.

## Patentansprüche

1. Verwaltungsdaten-Änderungsverfahren, das in einem Netzwerkelement eines eingebetteten optischen Transport-Subnetzes angewendet wird und Folgendes umfasst:

   Detektieren, dass eine Störung eintritt, wobei die Störung das eingebettete optische Transport-Subnetz und ein äußeres Subnetz mit dem eingebetteten optischen Transport-Subnetz darin auslöst, das eine Schutzumschaltfunktion hat, um eine Schutzumschaltung auszuführen;
   Ändern eines Wertes von Verwaltungsdaten, die eine Schutzumschaltung des äußeren Subnetzes in einem Signal, das zu einem stromabwärtigen Netzwerkelement gesendet werden soll, auslösen, zu einem Wert, der keine Schutzumschaltung des äußeren Subnetzes auslöst, und kein Ändern von Verwaltungsdaten, die die Schutzumschaltung des eingebetteten optischen Transport-Subnetzes auslösen; und
   Abbrechen der Änderung, nachdem die Änderung einen Zeitraum angedauert hat, wobei der Zeitraum maximal so lang ist wie eine eingestellte Änderungsfortdauerzeit.

2. Verwaltungsdaten-Änderungsverfahren nach Anspruch 1, wobei
   das Verwaltungsdaten-Änderungsverfahren auf alle Netzwerkelemente in dem eingebetteten optischen Transport-Subnetz angewendet wird;
   das Detektieren, dass eine Störung eintritt, meint zu detektieren, dass eine Optical Channel Data Unit (ODU)-Schicht zu einem Ausfallzustand geändert wird; und
   das Signal, das zu einem stromabwärtigen Netzwerkelement gesendet werden soll, ein ODUi Alarm Indication Signal (ODUi-AIS)-Signal meint, das eingefügt wird, um ein ausgefallenes ODU-Signal zu ersetzen.

3. Verwaltungsdaten-Änderungsverfahren nach Anspruch 1, wobei
   das Verwaltungsdaten-Änderungsverfahren in einem Netzwerkelement angewendet wird, das eine Schutzumschaltung des eingebetteten optischen Transport-Subnetzes in dem eingebetteten optischen Transport-Subnetz ausführt;
   das Detektieren, dass eine Störung eintritt, meint, gemäß einem ODUi-Signal vor einer ODU-Schicht-Ausfallverarbeitung zu detektieren, dass eine Tandem Connection Monitoring (TCM)-Schicht, die detektiert wird, wenn eine Schutzumschaltungsverarbeitung in dem eingebetteten optischen Transport-Subnetz ausgeführt wird, zu einem Ausfallzustand geändert wird; und

das Signal, das zu einem stromabwärtigen Netzwerkelement gesendet werden soll, ein normales ODUi-Signal oder ein eingefügtes ODUi-AIS-Signal meint, das nach der ODU-Schicht-Ausfallverarbeitung ausgegeben wird.

4.  Verwaltungsdaten-Änderungsverfahren nach Anspruch 1, 2 oder 3, wobei

die Verwaltungsdaten, die eine Schutzumschaltung des eingebetteten optischen Transport-Subnetzes auslösen, TCMn-STAT-Verwaltungsdaten im Sinne des G.709-Standards sind, die dem eingebetteten optischen Transport-Subnetz zugeordnet werden, wobei $1 \leq n \leq 6$;

es ein oder mehrere äußere Subnetze gibt, wobei ein äußerstes äußeres Subnetz ein optisches Transport-Subnetz oder ein nicht-optisches Transport-Subnetz ist, und wenn es andere äußere Subnetze gibt, alle anderen äußeren Subnetze optische Transport-Subnetze sind;

für eines der äußeren Subnetze,

wenn das äußere Subnetz ein optisches Transport-Subnetz ist, die Verwaltungsdaten, die eine Schutzumschaltung des äußeren Subnetzes auslösen, TCMn-STAT-Verwaltungsdaten sind, die dem äußeren Subnetz zugeordnet sind;

wenn das äußere Subnetz ein nicht-optisches Transport-Subnetz ist, die Verwaltungsdaten, die eine Schutzumschaltung des äußeren Subnetzes auslösen, PM-STAT-Verwaltungsdaten im Sinne des G.709-Standards sind, wobei

die eingestellte Änderungsfortdauerzeit eine längste Dienstunterbrechungs-Übergangszeit ist, die möglicherweise während der Schutzumschaltung des eingebetteten optischen Transport-Subnetzes verursacht wird, wobei

das Netzwerkelement des eingebetteten optischen Transport-Subnetzes nur zu einem einzigen eingebetteten optischen Transport-Subnetz gehört; oder gleichzeitig zu mehreren eingebetteten optischen Transport-Subnetzen gehört, und das eingebettete optische Transport-Subnetz in dem Verwaltungsdaten-Änderungsverfahren ein innerstes der eingebetteten optischen Transport-Subnetze ist.

5.  Verwaltungsdaten-Änderungsverfahren nach Anspruch 4, wobei

das Ändern eines Wertes von Verwaltungsdaten, die eine Schutzumschaltung des äußeren Subnetzes auslösen, zu einem Wert, der keine Schutzumschaltung des äußeren Subnetzes auslöst, Folgendes umfasst:

für ein äußeres Subnetz, das ein optisches Transport-Subnetz ist, Ändern eines Wertes der TCMn-STAT-Verwaltungsdaten zu einem von 3-Bit-Werten 011, 100, 001 und 010; und

für ein äußeres Subnetz, das ein nicht-optisches Transport-Subnetz ist, Ändern eines Wertes der PM-STAT-Verwaltungsdaten zu einem von 3-Bit-Werten 000, 010, 011 und 100.

6.  Verwaltungsdaten-Änderungsverfahren nach Anspruch 3, wobei

das Detektieren, dass eine TCM-Schicht, die detektiert wird, wenn eine Schutzumschaltungsverarbeitung in dem eingebetteten optischen Transport-Subnetz ausgeführt wird, zu einem Ausfallzustand geändert wird, umfasst zu detektieren, dass eine oder mehrere der folgenden Bedingungen erfüllt sind:

eine Dienstschicht der TCM-Schicht wird zu einem Ausfallzustand geändert; und

die TCM-Schicht wird zu einem AIS-Zustand, einem Connection Locking Indication (LCK)-Zustand, einem Open Connection Hinweis (OCI)-Zustand oder einem Loss of Tandem Connection (LTC)-Zustand geändert.

7.  Verwaltungsdaten-Änderungsverfahren nach Anspruch 2, wobei

das Abbrechen der Änderung, nachdem die Änderung einen Zeitraum angedauert hat, umfasst: die Änderung abzubrechen, wenn die eingestellte Änderungsfortdauerzeit abgelaufen ist; oder

das Abbrechen der Änderung, nachdem die Änderung einen Zeitraum angedauert hat, umfasst, die Änderung abzubrechen, wenn die ODU-Schicht nicht in den Normalzustand zurückgelangt ist, nachdem die Änderungsfortdauerzeit abgelaufen ist; und wenn detektiert wird, dass die ODU-Schicht innerhalb der eingestellten Änderungsfortdauerzeit in den Normalzustand zurückgelangt ist, die Änderung sofort abzubrechen.

8.  Verwaltungsdaten-Änderungsverfahren nach Anspruch 3, wobei

das Abbrechen der Änderung, nachdem die Änderung einen Zeitraum angedauert hat, umfasst, die Änderung abzubrechen, wenn die eingestellte Änderungsfortdauerzeit abgelaufen ist; oder

das Abbrechen der Änderung, nachdem die Änderung einen Zeitraum angedauert hat, umfasst, die Änderung abzubrechen, wenn die TCM-Schicht nicht in den Normalzustand zurückgelangt ist, nachdem die eingestellte Änderungsfortdauerzeit abgelaufen ist; und wenn detektiert wird, dass die TCM-Schicht innerhalb der eingestellten

EP 2 827 506 B1

Änderungsfortdauerzeit in den Normalzustand zurückgelangt ist, die Änderung sofort abzubrechen.

9. Verwaltungsdaten-Änderungsverfahren nach Anspruch 7 oder 8, wobei
das Abbrechen der Änderung, nachdem die Änderung einen Zeitraum angedauert hat, des Weiteren umfasst, wenn detektiert wird, dass die Störung durch ein Schutzumschaltungssystem des eingebetteten optischen Transport-Subnetzes nicht innerhalb der eingestellten Änderungsfortdauerzeit behoben werden kann, die Änderung sofort abzubrechen.

10. Verfahren zum Umwandeln eines Optisches-Transportnetz-Signals in ein Nicht-optisches-Transportnetz-Signal, das in einem Netzwerkelement angewendet wird, das einen Prozess zum Aufheben einer Abbildung des Nicht-optisches-Transportnetz-Signals auf das Optisches-Transportnetz-Signal ausführt, wobei ein Netz, wo sich das Netzwerkelement befindet, ein eingebettetes optisches Transport-Subnetz und ein äußeres nicht-optisches Transport-Subnetz in einer verschachtelten Beziehung umfasst, und das Verfahren zum Umwandeln Folgendes umfasst:

Detektieren, ob ein Wert einer PM-STAT im Sinne des G.709-Standards in einem Optical Channel Data Unit-Signal (ODUi) ein Wert ist, der keine Schutzumschaltung des äußeren nicht-optischen Transport-Subnetzes auslöst, nachdem das Netzwerkelement des eingebetteten optischen Transport-Subnetzes die PM-STAT-Verwaltungsdaten geändert hat,
wenn ja, Ausgeben eines eingefügten zweiten Nicht-optisches-Transportnetz-Wartungssignals, um das Nicht-optisches-Transportnetz-Signal zu ersetzen, dessen Abbildung auf das Optisches-Transportnetz-Signal aufgehoben wurde; und
wenn nein, Ausgeben des Nicht-optisches-Transportnetz-Signals, dessen Abbildung auf das Optisches-Transportnetz-Signal aufgehoben wurde, oder eines eingefügten ersten Nicht-optisches-Transportnetz-Wartungssignals je nachdem, ob eine Optical Channel Payload Unit (OPU)-Schicht ausgefallen ist;
wobei das zweite Nicht-optisches-Transportnetz-Wartungssignal ein Nicht-optisches-Transportnetz-Wartungssignal ist, das keine Schutzumschaltung des Netzwerkelements des nicht-optischen Transportnetzes auslöst und das erste Nicht-optisches-Transportnetz-Wartungssignal ein Nicht-optisches-Transportnetz-Wartungssignal ist, das eine Schutzumschaltung des Netzwerkelements des nicht-optischen Transportnetzes auslöst, wobei
der Wert, der keine Schutzumschaltung des äußeren nicht-optischen Transport-Subnetzes auslöst, nachdem das Netzwerkelement des eingebetteten optischen Transport-Subnetzes die PM-STAT-Verwaltungsdaten geändert hat, einer von 3-Bit-Werten 000, 010, 011 und 100 ist,
wobei
das Nicht-optisches-Transportnetz-Signal ein Signal ist, das durch eine Physical Coding Sublayer (PCH) codiert wird, und das zweite Nicht-optisches-Transportnetz-Wartungssignal ein Signal ohne Daten-Frames und voller Leerlauf-Frames ist; oder
das Nicht-optisches-Transportnetz-Signal ein Synchronous Digital Hierarchy (SDH)-Signal ist und das zweite Nicht-optisches-Transportnetz-Wartungssignal ein Signal ist, in dem alle Nutzdaten-Bereiche feste Werte sind und Regeneratorsektions- und Multiplexsektions-Verwaltungsdaten normal sind.

11. Verfahren zum Verhindern, dass mehrere verschachtelte Subnetze gleichzeitig umschalten, das in einem Netz angewendet wird, das ein Paar aus einem eingebetteten Subnetz und einem äußeren Subnetz umfasst, die Schutzumschaltfunktionen haben und direkt verschachtelt werden können, wobei das eingebettete Subnetz ein optisches Transport-Subnetz ist und das Verfahren Folgendes umfasst:

alle Netzwerkelemente des eingebetteten Subnetzes führen das Verwaltungsdaten-Änderungsverfahren nach Anspruch 2 aus oder führen das Verwaltungsdaten-Änderungsverfahren auf der Grundlage von Anspruch 2 in einem abhängigen Anspruch von Anspruch 2 aus; oder ein Netzwerkelement, das die Schutzumschaltung des eingebetteten optischen Transport-Subnetzes in dem eingebetteten Subnetz ausführt, führt das Verwaltungsdaten-Änderungsverfahren nach Anspruch 3 aus oder führt das Verwaltungsdaten-Änderungsverfahren auf der Grundlage von Anspruch 3 in einem abhängigen Anspruch von Anspruch 3 aus;
Einstellen einer Schutzumschaltungsverzögerungs-Auslösezeit eines Netzwerkelements, das eine Schutzumschaltung in dem äußeren Subnetz ausführt, auf kürzer als eine längste Dienstunterbrechungs-Übergangszeit, die möglicherweise während der Schutzumschaltung des eingebetteten Subnetzes veranlasst wird.

12. Verfahren nach Anspruch 11, wobei
das äußere Subnetz ein optisches Transport-Subnetz ist; oder
das äußere Subnetz ein nicht-optisches Transport-Subnetz ist und das Verfahren des Weiteren ein Netzwerkelement

34

umfasst, das einen Prozess zum Aufheben einer Abbildung eines Nicht-optisches-Transportnetz-Signals auf ein Optisches-Transportnetz-Signal in dem Netz ausführt, das das Verfahren zum Umwandeln nach Anspruch 10 ausführt,

wobei

kein anderes optisches Transport-Subnetz in das eingebettete Subnetz eingebettet ist; oder

ein anderes optisches Transport-Subnetz in das eingebettete Subnetz eingebettet ist und das Netzwerkelement, das eine Schutzumschaltung des eingebetteten optischen Transport-Subnetzes in dem eingebetteten Subnetz ausführt, das Verwaltungsdaten-Verarbeitungsverfahren nach Anspruch 3 ausführt oder das Verwaltungsdaten-Änderungsverfahren auf der Grundlage von Anspruch 3 in einem abhängigen Anspruch von Anspruch 3 ausführt, und das Verfahren des Weiteren umfasst, dass das Netzwerkelement, das eine Schutzumschaltung des optischen Transport-Subnetzes in jedem optischen Transport-Subnetz als einem eingebetteten Subnetz und einem äußeren Subnetz gleichzeitig in dem eingebetteten Subnetz ausführt, das Verwaltungsdaten-Änderungsverfahren nach Anspruch 3 ausführt oder das Verwaltungsdaten-Änderungsverfahren auf der Grundlage von Anspruch 3 in einem abhängigen Anspruch von Anspruch 3 ausführt, und das eingebettete optische Transport-Subnetz in dem ausgeführten Verwaltungsdaten-Änderungsverfahren das optische Transport-Subnetz ist.

13. Verfahren nach Anspruch 11 oder 12, wobei

alle Netzwerkelemente des eingebetteten Subnetzes das Verwaltungsdaten-Änderungsverfahren nach Anspruch 2 ausführen oder das Verwaltungsdaten-Änderungsverfahren auf der Grundlage von Anspruch 2 in einem abhängigen Anspruch von Anspruch 2 ausführen, das Netzwerkelement, das eine Schutzumschaltung in dem äußeren Subnetz ausführt, nicht das Einstellen der Schutzumschaltungsverzögerungs-Auslösezeit unterstützt, oder die Schutzumschaltungsverzögerungs-Auslösezeit als 0 einstellt, oder die Schutzumschaltungsverzögerungs-Auslösezeit als einen Wert ungleich null von maximal 5 ms einstellt; oder

ein Netzwerkelement, das die Schutzumschaltung des eingebetteten optischen Transport-Subnetzes in dem eingebetteten Subnetz ausführt, das Verwaltungsdaten-Änderungsverfahren nach Anspruch 3 ausführt oder das Verwaltungsdaten-Änderungsverfahren auf der Grundlage von Anspruch 3 in einem abhängigen Anspruch von Anspruch 3 ausführt, und die Schutzumschaltungsverzögerungs-Auslösezeit, die durch das Netzwerkelement eingestellt wird, das eine Schutzumschaltung in dem äußeren Subnetz ausführt, auf mindestens eine Zeit eingestellt wird, die erforderlich ist, um die Verwaltungsdatenänderung zu vollenden, und nicht länger ist als 10 ms.

14. Verwaltungsdaten-Änderungsvorrichtung in einem Netzwerkelement eines eingebetteten optischen Transport-Subnetzes, das eine Änderungssteuerungseinheit und eine Verwaltungsdatenänderungseinheit umfasst, wobei die Änderungssteuerungseinheit dafür konfiguriert ist, die Verwaltungsdatenänderungseinheit zu benachrichtigen, Verwaltungsdaten zu ändern, wenn detektiert wird, dass eine Störung eintritt, wobei die Störung das eingebettete optische Transport-Subnetz und ein äußeres Subnetz mit dem eingebetteten optischen Transport-Subnetz darin auslöst, das eine Schutzumschaltfunktion hat, um eine Schutzumschaltung auszuführen; und, nachdem die Änderung einen Zeitraum angedauert hat, die Verwaltungsdatenänderungseinheit zu benachrichtigen, die Änderung abzubrechen, wobei der Zeitraum maximal so lang ist wie eine eingestellte Änderungsfortdauerzeit; und

die Verwaltungsdatenänderungseinheit dafür konfiguriert ist, einen Wert von Verwaltungsdaten, die eine Schutzumschaltung des äußeren Subnetzes in einem Signal, das zu einem stromabwärtigen Netzwerkelement gesendet werden soll, auslösen, zu einem Wert zu ändern, der keine Schutzumschaltung des äußeren Subnetzes auslöst, und keine Verwaltungsdaten zu ändern, die die Schutzumschaltung des eingebetteten optischen Transport-Subnetzes auslösen, wenn die Änderungssteuerungseinheit die Änderung bekannt gibt; und die Änderung abzubrechen, wenn die Änderungssteuerungseinheit das Abbrechen der Änderung bekannt gibt.

15. Verwaltungsdaten-Änderungsvorrichtung nach Anspruch 14, wobei

die Verwaltungsdaten-Änderungsvorrichtung auf alle Netzwerkelemente in dem eingebetteten optischen Transport-Subnetz angewendet wird;

die Änderungssteuerungseinheit dafür konfiguriert ist, Folgendes auszugeben: ein Änderungshinweissignal gemäß einem eingegebenen Optical Channel Data Unit (ODU)-Schicht-Ausfallhinweissignal, ein Verwaltungsdaten-Hinweissignal, um anzuzeigen, ob die Verwaltungsdaten änderbar sind, und ein Eingestellte-Änderungsfortdauerzeit-Signal, wobei das Änderungshinweissignal angibt, Verwaltungsdaten zu ändern, die durch das Verwaltungsdaten-Hinweissignal als änderbar angezeigt werden und eine Schutzumschaltung eines entsprechenden äußeren Subnetzes auslösen, und keine Verwaltungsdaten zu ändern, die durch das Verwaltungsdaten-Hinweissignal als nicht-änderbar angezeigt werden und eine Schutzumschaltung des eingebetteten optischen Transport-Subnetzes auslösen, wenn das ODU-Schicht-Ausfallhinweissignal angibt, dass die ODU-Schicht zu einem Ausfallzustand geändert wird, und nachdem die Änderung einen Zeitraum angedauert hat, die Verwaltungsdatenänderungseinheit zu benachrichtigen, die Änderung abzubrechen, wobei der Zeitraum maximal so lang ist wie die eingestellte Änderungsfortdauerzeit; und

die Verwaltungsdatenänderungseinheit dafür konfiguriert ist, gemäß einem Hinweis des Änderungshinweissignals den Wert der Verwaltungsdaten, die die Schutzumschaltung des entsprechenden äußeren Subnetzes in dem eingegebenen ODUi-Alarm Indication Signal (ODUi AIS)-Signal auslösen, zu einem Wert zu ändern, der keine Schutzumschaltung des äußeren Subnetzes auslöst, und keine Verwaltungsdaten zu ändern, die die Schutzumschaltung des eingebetteten optischen Transport-Subnetzes auslösen, und dann den Wert auszugeben; und die Änderung gemäß dem Hinweis des Änderungshinweissignals abzubrechen.

16. Verwaltungsdaten-Änderungsvorrichtung nach Anspruch 14, wobei

die Verwaltungsdaten-Änderungsvorrichtung in einem Netzwerkelement angewendet wird, das eine Schutzumschaltung des eingebetteten optischen Transport-Subnetzes in dem eingebetteten optischen Transport-Subnetz ausführt, und des Weiteren Folgendes umfasst:

eine Tandem Connection Monitoring (TCM)-Schicht-Ausfall-Detektionseinheit, die dafür konfiguriert ist, eine in einem ODUi-Signal spezifizierte TCM-Schicht vor einer ODU-Schicht-Ausfallverarbeitung zu detektieren und ein TCM-Schicht-Ausfallhinweissignal auszugeben, das anzeigt, ob die TCM-Schicht gültig ist, wobei die spezifizierte TCM-Schicht durch ein eingegebenes TCM-Schicht-Hinweissignal als eine TCM-Schicht angezeigt wird, die detektiert wird, wenn eine Schutzumschaltungsverarbeitung in dem eingebetteten optischen Transport-Subnetz ausgeführt wird;

die Änderungssteuerungseinheit dafür konfiguriert ist, Folgendes auszugeben: ein Änderungshinweissignal gemäß einem eingegebenen TCM-Schicht-Ausfallhinweissignal, ein Verwaltungsdaten-Hinweissignal, um anzuzeigen, ob die Verwaltungsdaten änderbar sind, und ein Eingestellte-Änderungsfortdauerzeit-Signal, wobei das Änderungshinweissignal angibt, Verwaltungsdaten zu ändern, die durch das Verwaltungsdaten-Hinweissignal als änderbar angezeigt werden und eine Schutzumschaltung eines entsprechenden äußeren Subnetzes auslösen, und keine Verwaltungsdaten zu ändern, die durch das Verwaltungsdaten-Hinweissignal als nichtänderbar angezeigt werden und eine Schutzumschaltung des eingebetteten optischen Transport-Subnetzes auslösen, wenn das TCM-Schicht-Ausfallhinweissignal angibt, dass die TCM-Schicht zu einem Ausfallzustand geändert wird, und nachdem die Änderung einen Zeitraum angedauert hat, die Verwaltungsdatenänderungseinheit zu benachrichtigen, die Änderung abzubrechen, wobei der Zeitraum maximal so lang ist wie die eingestellte Änderungsfortdauerzeit; und

die Verwaltungsdatenänderungseinheit dafür konfiguriert ist, gemäß dem Hinweis des Änderungshinweissignals den Wert der Verwaltungsdaten, die die Schutzumschaltung des entsprechenden äußeren Subnetzes in einem normalen ODUi-Signal oder einem eingefügten ODUi AIS-Signal, das nach der ODU-Schicht-Ausfallverarbeitung ausgegeben wird, zu einem Wert zu ändern, der keine Schutzumschaltung des äußeren Subnetzes auslöst, und keine Verwaltungsdaten zu ändern, die die Schutzumschaltung des eingebetteten optischen Transport-Subnetzes auslösen, und dann den Wert auszugeben; und die Änderung gemäß dem Hinweis des Änderungshinweissignals abzubrechen.

17. Verwaltungsdaten-Änderungsvorrichtung nach Anspruch 14, 15 oder 16, wobei

es ein oder mehrere äußere Subnetze entsprechend dem Netzwerkelemente des eingebetteten optischen Transport-Subnetzes gibt, wobei ein äußerstes äußeres Subnetz ein optisches Transport-Subnetz oder ein nicht-optisches Transport-Subnetz ist, und wenn es andere äußere Subnetze gibt, alle anderen äußeren Subnetze optische Transport-Subnetze sind;

die Verwaltungsdaten, die eine Schutzumschaltung des eingebetteten optischen Transport-Subnetzes auslösen, wie durch die Änderungssteuerungseinheit angezeigt, TCMn-STAT-Verwaltungsdaten im Sinne des G.709-Standards sind, die dem eingebetteten optischen Transport-Subnetz zugeordnet werden, wobei $1 \leq n \leq 6$;

für eines der äußeren Subnetze die Verwaltungsdaten, die eine Schutzumschaltung des entsprechenden äußeren Subnetzes auslösen, wie durch die Änderungssteuerungseinheit angezeigt, TCMn-STAT-Verwaltungsdaten sind, die dem äußeren Subnetz zugeordnet sind, wenn das eine der äußeren Subnetze ein optisches Transport-Subnetz ist, und PM-STAT-Verwaltungsdaten sind, wenn das eine der äußeren Subnetze ein nicht-optisches Transport-Subnetz ist,

wobei

die Verwaltungsdatenänderungseinheit dafür konfiguriert ist, den Wert der Verwaltungsdaten, die eine Schutzumschaltung der entsprechenden äußeren Subnetz auslösen, zu einem Wert zu ändern, der keine Schutzumschaltung des äußeren Subnetzes auslöst, und Folgendes umfasst:

für ein äußeres Subnetz, das ein optisches Transport-Subnetz ist, Ändern eines Wertes der TCMn-STAT-Verwaltungsdaten zu einem von 3-Bit-Werten 011, 100, 001 und 010; und

für ein äußeres Subnetz, das ein nicht-optisches Transport-Subnetz ist, Ändern eines Wertes der PM-STAT-Verwaltungsdaten zu einem von 3-Bit-Werten 000, 010, 011 und 100.

18. Verwaltungsdaten-Änderungsvorrichtung nach Anspruch 14, 15 oder 16, wobei
ein Netzwerkelement in dem eingebetteten optischen Transport-Subnetz nur zu einem einzigen eingebetteten optischen Transport-Subnetz gehört; oder
das Netzwerkelement in dem eingebetteten optischen Transport-Subnetz gleichzeitig zu mehreren eingebetteten optischen Transport-Subnetzen gehört, und die Änderungssteuerungseinheit ein innerstes der eingebetteten optischen Transport-Subnetze als das eingebettete optische Transport-Subnetz verwendet, auf dem die Steuerung basiert.

19. Verwaltungsdaten-Änderungsvorrichtung nach Anspruch 16, wobei
die TCM-Schicht-Ausfall-Detektionseinheit dafür konfiguriert ist zu detektieren, dass eine TCM-Schicht, die detektiert wird, wenn eine Schutzumschaltungsverarbeitung in dem eingebetteten optischen Transport-Subnetz ausgeführt wird, zu einem Ausfallzustand geändert wird, was das Detektieren umfasst, dass eine oder mehrere der folgenden Bedingungen erfüllt sind:

eine Dienstschicht der TCM-Schicht wird zu einem Ausfallzustand geändert; und
die TCM-Schicht wird zu einem AIS-Zustand, einem LCK-Zustand, einem OCI-Zustand oder einem LTC-Zustand geändert.

20. Verwaltungsdaten-Änderungsvorrichtung nach Anspruch 15 oder 16, wobei
die Änderungssteuerungseinheit dafür konfiguriert ist, die Verwaltungsdatenänderungseinheit zu benachrichtigen, die Änderung abzubrechen, nachdem die Änderung einen Zeitraum angedauert hat, und Folgendes umfasst:

die Änderungssteuerungseinheit benachrichtigt die Verwaltungsdatenänderungseinheit, die Änderung abzubrechen, wenn die eingestellte Änderungsfortdauerzeit abgelaufen ist; oder
die Änderungssteuerungseinheit benachrichtigt die Verwaltungsdatenänderungseinheit, die Änderung abzubrechen, wenn die ODU-Schicht oder TCM-Schicht nicht in den Normalzustand zurückgelangt ist, wenn die eingestellte Änderungsfortdauerzeit abgelaufen ist; und sofort die Verwaltungsdatenänderungseinheit benachrichtigt, die Änderung abzubrechen, wenn die ODU-Schicht oder TCM-Schicht in den Normalzustand innerhalb der eingestellten Änderungsfortdauerzeit zurückgelangt ist;
wobei die eingestellte Änderungsfortdauerzeit eine längste Dienstunterbrechungs-Übergangszeit ist, die möglicherweise während der Schutzumschaltung des eingebetteten optischen Transport-Subnetzes verursacht wird.

21. Netzwerkelement eines eingebetteten optischen Transport-Subnetzes, das eine Optical Channel Data Unit (ODU)-Schicht-Ausfall-Verarbeitungsvorrichtung umfasst, wobei das Netzwerkelement des Weiteren eine Verwaltungsdaten-Änderungsvorrichtung umfasst, wobei
die Verwaltungsdaten-Änderungsvorrichtung die Verwaltungsdaten-Änderungsvorrichtung nach Anspruch 15 ist oder die Verwaltungsdaten-Änderungsvorrichtung auf der Grundlage von Anspruch 15 in einem abhängigen Anspruch von Anspruch 15 ist;
die ODU-Schicht-Ausfall-Verarbeitungsvorrichtung eine ODU-Schicht-Ausfall-Detektionseinheit und eine Auswahleinheit umfasst, wobei
die ODU-Schicht-Ausfall-Detektionseinheit dafür konfiguriert ist, gemäß ODU-Verwaltungsdaten in einem ODUi-Signal zu detektieren, ob eine ODU-Schicht ausgefallen ist, und ein ODU-Schicht-Ausfallhinweissignal an die Verwaltungsdaten-Änderungsvorrichtung und die Auswahleinheit auszugeben; und
die Auswahleinheit dafür konfiguriert ist, ein ODUi-Signal auszugeben, wenn das ODU-Schicht-Ausfallhinweissignal angibt, dass die ODU-Schicht normal ist, und ein ungeändertes oder geändertes ODUi-Alarm Indication Signal (ODUi-AIS) von der Verwaltungsdaten-Änderungsvorrichtung auszugeben, wenn das ODU-Schicht-Ausfallhinweissignal angibt, dass die ODU-Schicht ausgefallen ist.

22. Netzwerkelement, das eine Schutzumschaltung eines eingebetteten optischen Transport-Subnetzes in dem eingebetteten optischen Transport-Subnetz ausführt, das eine Optical Channel Data Unit (ODU)-Schicht-Ausfall-Verarbeitungsvorrichtung umfasst, wobei das Netzwerkelement des Weiteren eine Verwaltungsdaten-Änderungsvorrichtung umfasst, wobei
die Verwaltungsdaten-Änderungsvorrichtung eine Verwaltungsdaten-Änderungsvorrichtung nach Anspruch 16 ist oder die Verwaltungsdaten-Änderungsvorrichtung auf der Grundlage von Anspruch 16 in einem abhängigen Anspruch von Anspruch 16 ist;

die ODU-Schicht-Ausfall-Verarbeitungsvorrichtung dafür konfiguriert ist, ein normales ODUi-Signal auszugeben, wenn eine ODU-Schicht normal ist, und ein ODUi-Alarm Indication Signal (ODUi-AIS) auszugeben, das eingefügt wird, um ein ausgefallenes ODUi-Signal zu ersetzen, wenn die ODU-Schicht ausgefallen ist.

23. Vorrichtung zum Umwandeln eines Optisches-Transportnetz-Signals zu einem Nicht-optisches-Transportnetz-Signal, das in einem Netzwerkelement angewendet wird, das einen Prozess zum Aufheben einer Abbildung des Nicht-optisches-Transportnetz-Signals auf das Optisches-Transportnetz-Signal ausführt, wobei ein Netz, wo sich das Netzwerkelement befindet, ein eingebettetes optisches Transport-Subnetz und ein äußeres nicht-optisches Transport-Subnetz in einer direkten Verschachtelungsbeziehung umfasst, und die Umwandlungsvorrichtung Folgendes umfasst:

eine Optical Channel Data Unit Signal (ODUi)-Abbildungsaufhebungseinheit, die dafür konfiguriert ist, die Abbildung des Nicht-optisches-Transportnetz-Signals auf ein ODUi-Signal aufzuheben;

eine Optical Channel Payload Unit (OPU)-Schicht-Ausfall-Detektionseinheit, die dafür konfiguriert ist, gemäß ODU- und OPU-Schicht-Verwaltungsdaten des ODUi-Signals zu beurteilen, ob ein Wert von PM-STAT-Verwaltungsdaten im Sinne des G.709-Standards ein Wert ist, der keine Schutzumschaltung des äußeren nicht-optischen Transport-Subnetzes auslöst, nachdem das Netzwerkelement des eingebetteten optischen Transport-Subnetzes die PM-STAT-Verwaltungsdaten geändert hat, und beurteilen, ob die OPU-Schicht ausgefallen ist, und ein Auswahlsteuersignal gemäß einem Detektionsergebnis auszugeben;

eine Auswahleinheit, die dafür konfiguriert ist, ein eingegebenes Nicht-optisches-Transportnetz-Signal, ein erstes Nicht-optisches-Transportnetz-Wartungssignal oder ein zweites Nicht-optisches-Transportnetz-Wartungssignal zum Ausgeben gemäß dem Auswahlsteuersignal auszuwählen;

wobei das erste Nicht-optisches-Transportnetz-Wartungssignal ein Nicht-optisches-Transportnetz-Wartungssignal ist, das eine Schutzumschaltung des Netzwerkelements des nicht-optischen Transportnetzes auslöst, und das zweite Nicht-optisches-Transportnetz-Wartungssignal ein Nicht-optisches-Transportnetz-Wartungssignal ist, das keine Schutzumschaltung des Netzwerkelements des nicht-optischen Transportnetzes auslöst.

24. Umwandlungsvorrichtung nach Anspruch 23, wobei

die OPU-Schicht-Ausfall-Detektionseinheit dafür konfiguriert ist, ein entsprechendes Auswahlsteuersignal mittels Folgendem auszugeben:

wenn detektiert wird, dass der Wert der PM-STAT-Verwaltungsdaten in dem ODUi-Signal gleich dem Wert ist, der keine Schutzumschaltung des äußeren nicht-optischen Transport-Subnetzes auslöst, nachdem die PM-STAT-Verwaltungsdaten geändert wurden, Ausgeben eines Auswahlsteuersignals zum Auswählen des zweiten Nicht-optisches-Transportnetz-Wartungssignals;

wenn detektiert wird, dass der Wert der PM-STAT-Verwaltungsdaten nicht gleich dem Wert ist, der keine Schutzumschaltung des äußeren nicht-optischen Transport-Subnetzes auslöst, nachdem die PM-STAT-Verwaltungsdaten geändert wurden und die OPU-Schicht ausgefallen ist, Ausgeben eines Auswahlsteuersignals zum Auswählen des ersten Nicht-optisches-Transportnetz-Wartungssignals; und

wenn detektiert wird, dass der Wert der PM-STAT-Verwaltungsdaten nicht gleich dem Wert ist, der keine Schutzumschaltung des äußeren nicht-optischen Transport-Subnetzes auslöst, nachdem die PM-STAT-Verwaltungsdaten geändert wurden und die OPU-Schicht normal ist, Ausgeben eines Auswahlsteuersignals zum Auswählen des Nicht-optisches-Transportnetz-Signals.

25. Umwandlungsvorrichtung nach Anspruch 23 oder 24, wobei

der Wert, die nicht die Schutzumschaltung des äußeren nicht-optischen Transport-Subnetzes auslöst, das durch die OPU-Schicht-Ausfall-Detektionseinheit verwendet wird, einer von 3-Bit-Werten 000, 010, 011 und 100 ist; und das Nicht-optisches-Transportnetz-Signal ein Signal ist, das durch eine Physical Coding Sublayer (PCH) codiert wird, und das zweite Nicht-optisches-Transportnetz-Wartungssignal ein Signal ohne Daten-Frames und voller Leerlauf-Frames ist; oder

das Nicht-optisches-Transportnetz-Signal ein Synchronous Digital Hierarchy (SDH)-Signal ist und das zweite Nicht-optisches-Transportnetz-Wartungssignal ein Signal ist, in dem alle Nutzdaten-Bereiche feste Werte sind und Regeneratorsektions- und Multiplexsektions-Verwaltungsdaten normal sind.

26. Netzwerkelement, das einen Prozess zum Aufheben einer Abbildung eines Nicht-optisches-Transportnetz-Signal auf ein Optisches-Transportnetz-Signals ausführt, das die Vorrichtung zum Umwandeln von einem Optisches-Transportnetz-Signal zu einem Nicht-optisches-Transportnetz-Signal nach Anspruch 23, 24 oder 25 umfasst.

**27.** Netz, der ein Paar Subnetze umfasst, die Schutzumschaltfunktionen aufweisen und direkt verschachtelt sind, wobei ein eingebettetes Subnetz ein optisches Transport-Subnetz ist, wobei

alle Netzwerkelemente in dem eingebetteten optischen Transport-Subnetz das Netzwerkelement nach Anspruch 21 sind; oder ein Netzwerkelement, das eine Schutzumschaltung des eingebetteten optischen Transport-Subnetzes in dem eingebetteten Subnetz ausführt, das Netzwerkelement nach Anspruch 22 ist; und

eine Schutzumschaltungsverzögerungs-Auslösezeit, die durch ein Netzwerkelement eingestellt wird, das eine Schutzumschaltung in einem äußeren Subnetz ausführt, kürzer ist als eine längste Dienstunterbrechungs-Übergangszeit, die möglicherweise während der Schutzumschaltung des eingebetteten Subnetzes veranlasst wird, wobei

das äußere Subnetz ein optisches Transport-Subnetz ist; oder

das äußere Subnetz ein nicht-optisches Transport-Subnetz ist und ein Netzwerkelement, das die Abbildung eines Nicht-optisches-Transportnetz-Signals auf ein Optisches-Transportnetz-Signal in dem Netz aufhebt, das Netzwerkelement nach Anspruch 26 ist,

wobei

kein anderes optisches Transport-Subnetz in das eingebettete Subnetz eingebettet ist; oder

ein anderes optisches Transport-Subnetz in das eingebettete Subnetz eingebettet ist und das Netzwerkelement, das eine Schutzumschaltung des eingebetteten optischen Transport-Subnetzes in dem eingebetteten Subnetz ausführt, das Netzwerkelement nach Anspruch 22 ist, und das Netzwerkelement, das eine Schutzumschaltung des optischen Transport-Subnetzes in jedem optischen Transport-Subnetz als ein eingebettetes Subnetz und ein äußeres Subnetz gleichzeitig in dem eingebetteten Subnetz ausführt, das Netzwerkelement nach Anspruch 22 ist, und wenn eine Verarbeitung durch eine Verwaltungsdaten-Änderungsvorrichtung darin ausgeführt wird, das optische Transport-Subnetz als ein eingebettetes optisches Transport-Subnetz verwendet wird,

wobei

alle Netzwerkelemente des eingebetteten Subnetzes die Netzwerkelemente nach Anspruch 21 sind, das Netzwerkelement, das eine Schutzumschaltung in dem äußeren Subnetz ausführt, nicht das Einstellen der Schutzumschaltungsverzögerungs-Auslösezeit unterstützt, oder die Schutzumschaltungsverzögerungs-Auslösezeit als 0 einstellt, oder die Schutzumschaltungsverzögerungs-Auslösezeit als einen Wert ungleich null von maximal 5 ms einstellt; oder ein Netzwerkelement, das die Schutzumschaltung des eingebetteten optischen Transport-Subnetzes in dem eingebetteten Subnetz ausführt, das Netzwerkelement nach Anspruch 22 ist, und die Schutzumschaltungsverzögerungs-Auslösezeit, die durch das Netzwerkelement eingestellt wird, das eine Schutzumschaltung in dem äußeren Subnetz ausführt, auf mindestens eine Zeit eingestellt wird, die erforderlich ist, um die Verwaltungsdatenänderung zu vollenden, und nicht länger ist als 10 ms.

**Revendications**

**1.** Procédé de changement de surdébit appliqué dans un élément de réseau d'un sous-réseau de transport optique intégré, comprenant :

la détection qu'un défaut survient, et le défaut déclenchant le sous-réseau de transport optique intégré et un sous-réseau extérieur auquel est intégré le sous-réseau de transport optique intégré qui a une fonction de commutation de protection pour effectuer une commutation de protection ;
le changement d'une valeur de surdébit qui déclenche une commutation de protection du sous-réseau extérieur dans un signal à transmettre à un élément de réseau en aval à une valeur qui ne déclenche pas de commutation de protection du sous-réseau extérieur, et le maintien d'un surdébit qui déclenche la commutation de protection du sous-réseau de transport optique intégré ; et
l'annulation du changement après que le changement dure pendant une période de temps, dans lequel la période de temps est inférieure ou égale à un temps de consigne de durée de changement.

**2.** Procédé de changement de surdébit selon la revendication 1, dans lequel
le procédé de changement de surdébit est appliqué à tous les éléments de réseau dans le sous-réseau de transport optique intégré ;
ladite détection qu'un défaut survient signifie la détection qu'une couche d'unité de données de canal optique, ODU, est changée pour être défaillante ; et
ledit signal à transmettre à un élément de réseau en aval signifie un signal d'indication d'alarme ODUi, ODUi-AIS, qui est inséré pour se substituer à un signal d'ODU défaillante, signal ODUi.

**3.** Procédé de changement de surdébit selon la revendication 1, dans lequel

le procédé de changement de surdébit est appliqué à un élément de réseau qui effectue une commutation de protection du sous-réseau de transport optique intégré dans le sous-réseau de transport optique intégré ;
ladite détection qu'un défaut survient signifie la détection, en fonction d'un signal ODUi avant un traitement de défaillance de couche ODU, qu'une couche de surveillance de connexion en tandem, TCM, détectée lorsqu'un traitement de commutation de protection est effectué dans le sous-réseau de transport optique intégré est changée pour être défaillante ; et
ledit signal à transmettre à un élément de réseau en aval signifie un signal ODUi normal ou un signal ODUi-AIS inséré qui est délivré après le traitement de défaillance de couche ODU.

4. Procédé de changement de surdébit selon la revendication 1, 2 ou 3, dans lequel
le surdébit qui déclenche une commutation de protection du sous-réseau de transport optique intégré est un surdébit TCMn-STAT, selon la norme G.709, alloué au sous-réseau de transport optique intégré, dans lequel $1 \leq n \leq 6$ ;
il y a un ou plusieurs sous-réseaux extérieurs, dans lequel un sous-réseau le plus extérieur est un sous-réseau de transport optique ou un sous-réseau de transport non optique et, s'il y a d'autres sous-réseaux extérieurs, tous les autres sous-réseaux extérieurs sont des sous-réseaux de transport optiques ;
pour l'un des sous-réseaux extérieurs,
si le sous-réseau extérieur est un sous-réseau de transport optique, le surdébit qui déclenche une commutation de protection du sous-réseau extérieur est un surdébit TCMn-STAT alloué au sous-réseau extérieur ;
si le sous-réseau extérieur est un sous-réseau de transport non optique, le surdébit qui déclenche une commutation de protection du sous-réseau extérieur est un surdébit PM-STAT, selon la norme G.709,
dans lequel
le temps de consigne de durée de changement est un temps d'interruption transitoire de service le plus long pouvant être provoqué pendant la commutation de protection du sous-réseau de transport optique intégré,
dans lequel
ledit élément de réseau du sous-réseau de transport optique intégré n'appartient qu'à un sous-réseau de transport optique intégré ; ou appartient simultanément à une pluralité de sous-réseaux de transport optique intégrés, et le sous-réseau de transport optique intégré dans le procédé de changement de surdébit est le plus intérieur des sous-réseaux de transport optiques intégrés.

5. Procédé de changement de surdébit selon la revendication 4, dans lequel
ledit changement d'une valeur d'un surdébit qui déclenche une commutation de protection du sous-réseau extérieur à une valeur qui ne déclenche pas de commutation de protection du sous-réseau extérieur comprend :

pour un sous-réseau extérieur qui est un sous-réseau de transport optique, le changement d'une valeur du surdébit TCMn-STAT à l'une de valeurs à trois bits 011, 100, 001 et 010 ; et
pour un sous-réseau extérieur qui est un sous-réseau de transport non optique, le changement d'une valeur du surdébit PM-STAT à l'une de valeurs à trois bits 000, 010, 011 et 100.

6. Procédé de changement de surdébit selon la revendication 3, dans lequel
ladite détection qu'une couche TCM détectée lorsqu'un traitement de commutation de protection est effectué dans le sous-réseau de transport optique intégré est changée pour être défaillante comprend la détection que l'une ou plusieurs des conditions suivantes sont remplies :

une couche de service de la couche TCM est changée pour être défaillante ; et
la couche TCM est changée pour être dans un état AIS, un état d'indication de verrouillage de connexion, LCK, un état d'indication de connexion ouverte, OCI, ou un état de perte de connexion en tandem, LTC.

7. Procédé de changement de surdébit selon la revendication 2, dans lequel
l'annulation du changement après que le changement dure une période de temps comprend l'annulation du changement à l'expiration du temps de consigne de durée de changement ; ou
l'annulation du changement après que le changement dure une période de temps comprend : si la couche ODU n'a pas récupéré pour être normale à l'expiration du temps de consigne de durée de changement, l'annulation du changement ; et, s'il est détecté que la couche ODU a récupéré pour être normale pendant le temps de consigne de durée de changement, l'annulation immédiate du changement.

8. Procédé de changement de surdébit selon la revendication 3, dans lequel
l'annulation du changement après que le changement dure une période de temps comprend l'annulation du changement à l'expiration du temps de consigne de durée de changement ; ou

l'annulation du changement après que le changement dure une période de temps comprend : si la couche TCM n'a pas récupéré pour être normale à l'expiration du temps de consigne de durée de changement, l'annulation du changement ; et, s'il est détecté que la couche TCM a récupéré pour être normale pendant le temps de consigne de durée de changement, l'annulation immédiate du changement.

**9.** Procédé de changement de surdébit selon la revendication 7 ou 8, dans lequel
l'annulation du changement après que le changement dure une période de temps comprend en outre : s'il est détecté que le défaut ne peut pas être récupéré par un système de commutation de protection du sous-réseau de transport optique intégré pendant le temps de consigne de durée de changement, l'annulation immédiate du changement.

**10.** Procédé de transformation d'un signal de réseau de transport optique en un signal de réseau de transport non optique, appliqué dans un élément de réseau qui effectue un processus de démappage du signal de réseau de transport non optique à partir du signal de réseau de transport optique, dans lequel un réseau dans lequel l'élément de réseau est situé comprend un sous-réseau de transport optique intégré et un sous-réseau de transport non optique extérieur dans une relation d'imbrication, et le procédé de transformation comprend :

la détection si une valeur d'un PM-STAT, selon la norme G.709, dans un signal d'unité de données de canal optique, ODUi, est une valeur qui ne déclenche pas une commutation de protection du sous-réseau de transport non optique extérieur après que l'élément de réseau du sous-réseau de transport optique intégré change le surdébit PM-STAT :

si oui, la délivrance d'un deuxième signal de maintenance de réseau de transport non optique inséré pour se substituer au signal de réseau de transport non optique démappé à partir du signal de réseau de transport optique ; et
sinon, la délivrance du signal de réseau de transport non optique démappé à partir du signal de réseau de transport optique ou d'un premier signal de maintenance de réseau de transport non optique inséré selon qu'une couche d'unité de charge utile de canal optique, OPU, est défaillante ou non ;

dans lequel le deuxième signal de maintenance de réseau de transport non optique est un signal de maintenance de réseau de transport non optique qui ne déclenche pas une commutation de protection de l'élément de réseau du réseau de transport non optique, et le premier signal de maintenance de réseau de transport non optique est un signal de maintenance de réseau de transport non optique qui déclenche une commutation de protection de l'élément de réseau du réseau de transport non optique,
dans lequel
la valeur qui ne déclenche pas une commutation de protection du sous-réseau de transport non optique extérieur après que l'élément de réseau du sous-réseau de transport optique intégré change le surdébit PM-STAT est l'une de valeurs à trois bits 000, 010, 011 et 100,
dans lequel
le signal de réseau de transport non optique est un signal codé par une sous-couche de codage physique, PCS, et le deuxième signal de maintenance de réseau de transport non optique est un signal sans trame de données et plein de trames inactives ; ou
le signal de réseau de transport non optique est un signal de hiérarchie numérique synchrone, SDH, et le deuxième signal de maintenance de réseau de transport non optique est un signal dans lequel toutes les zones de charge utile sont des valeurs fixes et des surdébits de section de régénérateur et de section de multiplexage sont normaux.

**11.** Procédé de prévention de commutation simultanée d'une pluralité de sous-réseaux imbriqués, appliqué dans un réseau comprenant une paire d'un sous-réseau intégré et d'un sous-réseau extérieur ayant des fonctions de commutation de protection et capables d'être directement imbriqués, dans lequel le sous-réseau intégré est un sous-réseau de transport optique, et le procédé comprend :

tous les éléments de réseau du sous-réseau intégré effectuant le procédé de changement de surdébit selon la revendication 2 ou effectuant le procédé de changement de surdébit sur la base de la revendication 2 selon toute revendication dépendant de la revendication 2 ; ou un élément de réseau qui effectue la commutation de protection du sous-réseau de transport optique intégré dans le sous-réseau intégré effectuant le procédé de changement de surdébit selon la revendication 3 ou effectuant le procédé de changement de surdébit sur la base de la revendication 3 selon toute revendication dépendant de la revendication 3 ;
le réglage d'un temps de déclenchement de retard de commutation de protection d'un élément de réseau qui effectue une commutation de protection dans le sous-réseau extérieur pour qu'il soit inférieur au temps d'interruption transitoire de service le plus long qui peut être provoqué pendant la commutation de protection du sous-réseau intégré.

12. Procédé selon la revendication 11, dans lequel
le sous-réseau extérieur est un sous-réseau de transport optique ; ou
le sous-réseau extérieur est un sous-réseau de transport non optique, et le procédé comprend en outre : un élément de réseau effectuant un processus de démappage d'un signal de réseau de transport non optique à partir d'un signal de réseau de transport optique dans le réseau effectuant le procédé de transformation selon la revendication 10,
dans lequel
il n'y a pas d'autre sous-réseau de transport optique intégré dans le sous-réseau intégré ; ou
il y a un autre sous-réseau de transport optique intégré dans le sous-réseau intégré, et l'élément de réseau qui effectue une commutation de protection du sous-réseau de transport optique intégré dans le sous-réseau intégré effectue le procédé de traitement de surdébit selon la revendication 3 ou effectue le procédé de changement de surdébit sur la base de la revendication 3 selon toute revendication dépendant de la revendication 3, et le procédé comprend en outre : l'élément de réseau qui effectue une commutation de protection du sous-réseau de transport optique dans chaque sous-réseau de transport optique en tant qu'un sous-réseau intégré et un sous-réseau extérieur simultanément dans le sous-réseau intégré effectuant le procédé de changement de surdébit selon la revendication 3 ou effectuant le procédé de changement de surdébit sur la base de la revendication 3 selon toute revendication dépendant de la revendication 3, et le sous-réseau de transport optique intégré dans le procédé de changement de surdébit est le sous-réseau de transport optique.

13. Procédé selon la revendication 11 ou 12, dans lequel
tous les éléments de réseau du sous-réseau intégré effectuent le procédé de changement de surdébit selon la revendication 2 ou effectuent le procédé de changement de surdébit sur la base de la revendication 2 selon toute revendication dépendant de la revendication 2, l'élément de réseau qui effectue une commutation de protection dans le sous-réseau extérieur ne prend pas en charge le réglage du temps de déclenchement de retard de commutation de protection, ou règle le temps de déclenchement de retard de commutation de protection à 0, ou règle le temps de déclenchement de retard de commutation de protection à une valeur non nulle inférieure ou égale à 5 ms ; ou
un élément de réseau qui effectue la commutation de protection du sous-réseau de transport optique intégré dans le sous-réseau intégré effectue le procédé de changement de surdébit selon la revendication 3 ou effectue le procédé de changement de surdébit sur la base de la revendication 3 selon toute revendication dépendant de la revendication 3, et le temps de déclenchement de retard de commutation de protection réglé par l'élément de réseau qui effectue une commutation de protection dans le sous-réseau extérieur est supérieur ou égal à un temps nécessaire pour effectuer le changement de surdébit et est inférieur ou égal à 10 ms.

14. Appareil de changement de surdébit dans un élément de réseau d'un sous-réseau de transport optique intégré, comprenant une unité de commande de changement et une unité de changement de surdébit, dans lequel
l'unité de commande de changement est configurée pour notifier à l'unité de changement de surdébit de changer un surdébit lors de la détection qu'un défaut survient, dans lequel le défaut déclenche le sous-réseau de transport optique intégré et un sous-réseau extérieur auquel est intégré le sous-réseau de transport optique intégré qui a une fonction de commutation de protection pour effectuer une commutation de protection ; et après que le changement dure une période de temps, notifier à l'unité de changement de surdébit d'annuler le changement, dans lequel la période de temps est inférieure ou égale à un temps de consigne de durée de changement ; et
l'unité de changement de surdébit est configurée pour changer une valeur d'un surdébit qui déclenche une commutation de protection du sous-réseau extérieur dans un signal à transmettre à élément de réseau en aval à une valeur qui ne déclenche pas une commutation de protection du sous-réseau extérieur et ne pas changer un surdébit qui déclenche la commutation de protection du sous-réseau de transport optique intégré lorsque l'unité de commande de changement notifie le changement ; et annuler le changement lorsque l'unité de commande de changement notifie l'annulation du changement.

15. Appareil de changement de surdébit selon la revendication 14, dans lequel
l'appareil de changement de surdébit est appliqué dans tous les éléments de réseau dans le sous-réseau de transport optique intégré ;
l'unité de commande de changement est configurée pour délivrer un signal d'indication de changement en fonction d'un signal d'indication de défaillance de couche d'unité de données de canal optique, ODU, d'entrée, un signal d'indication de surdébit pour indiquer si le surdébit est changeable et un signal de consigne de temps de durée de changement, dans lequel le signal d'indication de changement indique de changer un surdébit qui est indiqué par le signal d'indication de surdébit pour être changeable et déclenche une commutation de protection d'un sous-réseau extérieur correspondant et de ne pas changer un surdébit qui est indiqué par le signal d'indication de surdébit pour être inchangeable et déclenche une commutation de protection du sous-réseau de transport optique intégré lorsque le signal d'indication de défaillance de couche ODU indique que la couche ODU est changée pour être défaillante, et après que le changement dure une période de temps, notifier à l'unité de changement de surdébit d'annuler le changement, dans lequel la période de temps est inférieure ou égale au temps de consigne de durée de changement ; et

l'unité de changement de surdébit est configurée pour, en fonction d'une indication du signal d'indication de changement, changer la valeur du surdébit qui déclenche la commutation de protection du sous-réseau extérieur correspondant dans le signal d'indication d'alarme ODUi, ODUi-AIS, d'entrée à une valeur qui ne déclenche pas la commutation de protection du sous-réseau extérieur et ne pas changer le surdébit qui déclenche la commutation de protection du sous-réseau de transport optique intégré, puis délivrer la valeur ; et annuler le changement en fonction de l'indication du signal d'indication de changement.

16. Appareil de changement de surdébit selon la revendication 14, dans lequel
l'appareil de changement de surdébit est appliqué dans un élément de réseau qui effectue une commutation de protection du sous-réseau de transport optique intégré dans le sous-réseau de transport optique intégré, et comprend en outre :

une unité de détection de défaillance de couche de surveillance de connexion en tandem, TCM, configurée pour détecter une couche TCM spécifiée dans un signal ODUi avant un traitement de défaillance de couche ODU, et délivrer un signal d'indication de défaillance de couche TCM indiquant si la couche TCM est valide, dans lequel la couche TCM spécifiée est indiquée par un signal d'indication de couche TCM d'entrée en tant qu'une couche TCM détectée lorsqu'un traitement de commutation de protection est effectué dans le sous-réseau de transport optique intégré ;

l'unité de commande de changement est configurée pour délivrer un signal d'indication de changement en fonction d'un signal d'indication de défaillance de couche TCM d'entrée, un signal d'indication de surdébit pour indiquer si le surdébit est changeable et un signal de temps de consigne de durée de changement, dans lequel le signal d'indication de changement indique de changer un surdébit qui est indiqué par le signal d'indication de surdébit pour être changeable et déclenche une commutation de protection d'un sous-réseau extérieur correspondant et de ne pas changer un surdébit qui est indiqué par le signal d'indication de surdébit pour être inchangeable et déclenche une commutation de protection du sous-réseau de transport optique intégré lorsque le signal d'indication de défaillance de couche TCM indique que la couche TCM est changée pour être défaillante, et après que le changement dure une période de temps, notifier à l'unité de changement de surdébit d'annuler le changement, dans lequel la période de temps est inférieure ou égale au temps de consigne de durée de changement ; et

l'unité de changement de surdébit est configurée pour, en fonction de l'indication du signal d'indication de changement, changer la valeur du surdébit qui déclenche la commutation de protection du sous-réseau extérieur correspondant dans un signal ODUi normal ou un signal ODUi-AIS inséré qui est délivré après un traitement de défaillance de couche ODU à une valeur qui ne déclenche pas la commutation de protection du sous-réseau extérieur, et ne pas changer le surdébit qui déclenche la commutation de protection du sous-réseau de transport optique intégré, puis délivrer la valeur ; et annuler le changement en fonction de l'indication du signal d'indication de changement.

17. Appareil de changement de surdébit selon la revendication 14, 15 ou 16, dans lequel
il y a un ou plusieurs sous-réseaux extérieurs correspondant aux éléments de réseau du sous-réseau de transport optique intégré, dans lequel un sous-réseau le plus extérieur est un sous-réseau de transport optique ou un sous-réseau de transport non optique et, s'il y a d'autres sous-réseaux extérieurs, tous les autres sous-réseaux extérieurs sont des sous-réseaux de transport optiques ;

le surdébit qui déclenche une commutation de protection du sous-réseau de transport optique intégré, indiqué par l'unité de commande de changement, est un surdébit TCMn-STAT, selon la norme G.709, alloué au sous-réseau de transport optique intégré, dans lequel $1 \leq n \leq 6$ ;

pour l'un des sous-réseaux extérieurs, le surdébit qui déclenche une commutation de protection du sous-réseau extérieur correspondant, indiqué par l'unité de commande de changement, est un surdébit TCMn-STAT alloué au sous-réseau extérieur si ledit un des sous-réseaux extérieurs est un sous-réseau de transport optique et est un surdébit PM-STAT si ledit un des sous-réseaux extérieurs est un sous-réseau de transport non optique,

dans lequel
l'unité de changement de surdébit est configurée pour changer la valeur du surdébit qui déclenche une commutation de protection du sous-réseau extérieur correspondant à une valeur qui ne déclenche pas une commutation de protection du sous-réseau extérieur, comprenant :

pour un sous-réseau extérieur qui est un sous-réseau de transport optique, le changement d'une valeur du surdébit TCMn-STAT à l'une de valeurs à trois bits 011, 100, 001 et 010 ; et
pour un sous-réseau extérieur qui est un sous-réseau de transport non optique, le changement d'une valeur du surdébit PM-STAT à l'une de valeurs à trois bits 000, 010, 011 et 100.

18. Appareil de changement de surdébit selon la revendication 14, 15 ou 16, dans lequel
un élément de réseau dans le sous-réseau de transport optique intégré n'appartient qu'à un sous-réseau de transport optique intégré ; ou
l'élément de réseau dans le sous-réseau de transport optique intégré appartient simultanément à une pluralité de sous-réseaux de transport optiques intégrés, et l'unité de commande de changement utilise le plus intérieur des sous-réseaux de transport optiques intégrés en tant que le sous-réseau de transport optique intégré sur lequel une commande est basée.

19. Appareil de changement de surdébit selon la revendication 16, dans lequel
l'unité de détection de défaillance de couche TCM est configurée pour détecter qu'une couche TCM détectée lorsqu'un traitement de commutation de protection est effectué dans le sous-réseau de transport optique intégré est changée pour être défaillante, comprenant la détection que l'une ou plusieurs des conditions suivantes sont remplies :

une couche de service de la couche TCM est changée pour être défaillante ; et
la couche TCM est changée pour être dans un état AIS, un état LCK, un état OCI, ou un état LTC.

20. Appareil de changement de surdébit selon la revendication 15 ou 16, dans lequel
l'unité de commande de changement est configurée pour notifier à l'unité de changement de surdébit d'annuler le changement après que le changement dure une période de temps, comprenant :

l'unité de commande de changement notifiant à l'unité de changement de surdébit d'annuler le changement à l'expiration du temps de consigne de durée de changement ; ou
l'unité de commande de changement notifiant à l'unité de changement de surdébit d'annuler le changement si la couche ODU ou la couche TCM n'a pas récupéré pour être normale à l'expiration du temps de consigne de durée de changement ; et notifiant immédiatement à l'unité de changement de surdébit d'annuler le changement si la couche ODU ou la couche TCM récupère pour être normale pendant le temps de consigne de durée de changement ;

dans lequel le temps de consigne de durée de changement est un temps d'interruption transitoire de service le plus long pouvant être provoqué pendant la commutation de protection du sous-réseau de transport optique intégré.

21. Elément de réseau d'un sous-réseau de transport optique intégré, comprenant un appareil de traitement de défaillance de couche d'unité de données de canal optique, ODU, dans lequel l'élément de réseau comprend en outre un appareil de changement de surdébit, dans lequel
l'appareil de changement de surdébit est l'appareil de changement de surdébit selon la revendication 15 ou est l'appareil de changement de surdébit sur la base de la revendication 15 dans toute revendication dépendant de la revendication 15 ;
l'appareil de traitement de défaillance de couche ODU comprend une unité de détection de défaillance de couche ODU et une unité de sélection, dans lequel
l'unité de détection de défaillance de couche ODU est configurée pour détecter si une couche ODU est défaillante en fonction d'un surdébit ODU dans un signal ODUi et délivrer un signal d'indication de défaillance de couche ODU à l'appareil de changement de surdébit et à l'unité de sélection ; et
l'unité de sélection est configurée pour délivrer un signal ODUi lorsque le signal d'indication de défaillance de couche ODU indique que la couche ODU est normale, et délivrer un signal d'indication d'alarme ODUi, ODUi-AIS, inchangé ou changé à partir de l'appareil de changement de surdébit lorsque le signal d'indication de défaillance de couche ODU indique que la couche ODU est défaillante.

**22.** Elément de réseau qui effectue une commutation de protection d'un sous-réseau de transport optique intégré dans le sous-réseau de transport optique intégré, comprenant un appareil de traitement de défaillance de couche d'unité de données de canal optique, ODU, dans lequel l'élément de réseau comprend en outre un appareil de changement de surdébit, dans lequel

l'appareil de changement de surdébit est l'appareil de changement de surdébit selon la revendication 16 ou est l'appareil de changement de surdébit sur la base de la revendication 16 dans toute revendication dépendant de la revendication 16 ;

l'appareil de traitement de défaillance de couche ODU est configuré pour délivrer un signal ODUi normal lorsqu'une couche ODU est normale, et délivrer un signal d'indication d'alarme ODUi, ODUi-AIS, qui est inséré pour se substituer à un signal ODUi défaillant lorsque la couche ODU est défaillante.

**23.** Appareil de transformation d'un signal de réseau de transport optique en un signal de réseau de transport non optique, appliqué dans un élément de réseau qui effectue un processus de démappage du signal de réseau de transport non optique à partir du signal de réseau de transport optique, dans lequel un réseau dans lequel l'élément de réseau est situé comprend un sous-réseau de transport optique intégré et un sous-réseau de transport non optique extérieur dans une relation d'imbrication directe, et l'appareil de transformation comprend :

une unité de démappage de signal d'unité de données de canal optique, ODUi, configurée pour démapper le signal de réseau de transport non optique à partir d'un signal ODUi ;

une unité de détection de défaillance de couche d'unité de charge utile de canal optique, OPU, configurée pour juger, en fonction de surdébits de couches ODU et OPU du signal ODUi, si une valeur d'un surdébit PM-STAT, selon la norme G.709, est une valeur qui ne déclenche pas une commutation de protection du sous-réseau de transport non optique extérieur après que l'élément de réseau du sous-réseau de transport optique intégré change le surdébit PM-STAT, et juger si la couche OPU est défaillante, et délivrer un signal de commande de sélection en fonction d'un résultat de détection ;

une unité de sélection configurée pour sélectionner l'un d'un signal de réseau de transport non optique d'entrée, d'un premier signal de maintenance de réseau de transport non optique et d'un deuxième signal de maintenance de réseau de transport non optique à délivrer en fonction du signal de commande de sélection ;

dans lequel le premier signal de maintenance de réseau de transport non optique est un signal de maintenance de réseau de transport non optique qui déclenche une commutation de protection de l'élément de réseau du réseau de transport non optique, et le deuxième signal de maintenance de réseau de transport non optique est un signal de maintenance de réseau de transport non optique qui ne déclenche pas une commutation de protection de l'élément de réseau du réseau de transport non optique.

**24.** Appareil de transformation selon la revendication 23, dans lequel

l'unité de détection de défaillance de couche OPU est configurée pour délivrer un signal de commande de sélection correspondant au moyen de :

lorsqu'il est détecté que la valeur du surdébit PM-STAT dans le signal ODUi est égale à la valeur qui ne déclenche pas une commutation de protection du sous-réseau de transport non optique extérieur après le changement du surdébit PM-STAT, la délivrance d'un signal de commande de sélection pour sélectionner le deuxième signal de maintenance de réseau de transport non optique ;

lorsqu'il est détecté que la valeur du surdébit PM-STAT n'est pas égale à la valeur qui ne déclenche pas une commutation de protection du sous-réseau de transport non optique extérieur après le changement du surdébit PM-STAT et la couche OPU est défaillante, la délivrance d'un signal de commande de sélection pour sélectionner le premier signal de maintenance de réseau de transport non optique ; et

lorsqu'il est détecté que la valeur du surdébit PM-STAT n'est pas égale à la valeur qui ne déclenche pas une commutation de protection du sous-réseau de transport non optique extérieur après le changement du surdébit PM-STAT et la couche OPU est normale, la délivrance d'un signal de commande de sélection pour sélectionner le signal de réseau de transport non optique.

**25.** Appareil de transformation selon la revendication 23 ou 24, dans lequel

la valeur qui ne déclenche pas la commutation de protection du sous-réseau de transport non optique extérieur utilisée par l'unité de détection de défaillance de couche OPU est l'une de valeurs à trois bits 000, 010, 011 et 100 ; et

le signal de réseau de transport non optique est un signal codé par une sous-couche de codage physique, PCH, et le deuxième signal de maintenance de réseau de transport non optique est un signal sans trame de données et plein de trames inactives ; ou le signal de réseau de transport non optique est un signal de hiérarchie numérique synchrone, SDH, et le deuxième signal de maintenance de réseau de transport non optique est un signal dans lequel toutes les zones de charge utile sont des valeurs fixes et des surdébits de section de régénérateur et de section de multiplexage sont normaux.

26. Elément de réseau qui effectue un processus de démappage d'un signal de réseau de transport non optique à partir d'un signal de réseau de transport optique, comprenant l'appareil de transformation d'un signal de réseau de transport optique en un signal de réseau de transport non optique selon la revendication 23, 24 ou 25.

27. Réseau comprenant une paire de sous-réseaux ayant des fonctions de commutation de protection et étant directement imbriqués, dans lequel un sous-réseau intégré est un sous-réseau de transport optique, dans lequel

tous les éléments de réseau dans le sous-réseau de transport optique intégré sont l'élément de réseau selon la revendication 21 ; ou un élément de réseau qui effectue une commutation de protection du sous-réseau de transport optique intégré dans le sous-réseau intégré est l'élément de réseau selon la revendication 22 ; et

un temps de déclenchement de retard de commutation de protection réglé par un élément de réseau qui effectue une commutation de protection dans un sous-réseau extérieur est inférieur à un temps d'interruption transitoire de service le plus long qui peut être provoqué pendant la commutation de protection du sous-réseau intégré ;

dans lequel

le sous-réseau extérieur est un sous-réseau de transport optique ; ou le sous-réseau extérieur est un sous-réseau de transport non optique, et un élément de réseau effectuant un démappage d'un signal de réseau de transport non optique à partir d'un signal de réseau de transport optique dans le réseau est l'élément de réseau selon la revendication 26,

dans lequel

il n'y a pas d'autre sous-réseau de transport optique intégré dans le sous-réseau intégré ; ou

il y a un autre sous-réseau de transport optique intégré dans le sous-réseau intégré, et l'élément de réseau qui effectue une commutation de protection du sous-réseau de transport optique intégré dans le sous-réseau intégré est l'élément de réseau selon la revendication 22, et l'élément de réseau qui effectue une commutation de protection du sous-réseau de transport optique dans chaque sous-réseau de transport optique en tant qu'un sous-réseau intégré et un sous-réseau extérieur simultanément dans le sous-réseau intégré est l'élément de réseau selon la revendication 22, et lors du traitement par un appareil de changement de surdébit à l'intérieur de celui-ci, le sous-réseau de transport optique est utilisé en tant qu'un sous-réseau de transport optique intégré,

dans lequel

tous les éléments de réseau du sous-réseau intégré sont les éléments de réseau selon la revendication 21, l'élément de réseau qui effectue une commutation de protection dans le sous-réseau extérieur ne prend pas en charge le réglage du temps de déclenchement de retard de commutation de protection, ou règle le temps de déclenchement de retard de commutation de protection à 0, ou règle le temps de déclenchement de retard de commutation de protection à une valeur non nulle inférieure ou égale à 5 ms ; ou

un élément de réseau qui effectue la commutation de protection du sous-réseau de transport optique intégré dans le sous-réseau intégré est l'élément de réseau selon la revendication 22, et le temps de déclenchement de retard de commutation de protection réglé par l'élément de réseau qui effectue une commutation de protection dans le sous-réseau extérieur est supérieur ou égal à un temps nécessaire pour effectuer un changement de surdébit et est inférieur ou égal à 10 ms.

FIG. 1

FIG. 2

FIG. 3

FIG. 4

FIG. 5

FIG. 6

FIG. 7

FIG. 8

## FIG. 9

**FIG. 9**

It is detected that a fault occurs, and the fault will trigger the embedded optical transport subnet and an outer subnet with the embedded optical transport subnet embedded therein which has a protection switching function to perform protection switching — 110

A value of an overhead which will trigger protection switching of the outer subnet in a signal to be transmitted to a downstream network element is changed to a value which will not trigger protection switching of the outer subnet, and an overhead which will trigger the protection switching of the embedded optical transport subnet will not be changed — 120

The change is cancelled after the change lasts for a period of time, the period of time is less than or equal to a set change lasting time — 130

**FIG. 10**

Change control unit — 10 ⟶ Overhead change unit — 11

**FIG.11**

It is detected that the ODU layer is changed to be failed ⌐210

A value of an overhead which will trigger protection switching of a corresponding outer subnet in an ODUi-AIS signal inserted to substitute a failed ODUi signal is changed to a value which will not trigger protection switching of the outer subnet, and an overhead which will trigger the protection switching of the embedded optical transport subnet is not changed ⌐220

Whether the ODU layer recovers to be normal in the set change lasting time? ⌐230

Yes → The change is cancelled ⌐240

No ⌐250

If the ODU layer has not recovered to be normal when the set change lasting time expires, the change will be cancelled

FIG. 12

ODU layer failure detection unit
22
221
ODUi
ODU layer failure processing apparatus
Selection unit
222
21
ODU layer failure indication signal
Overhead change apparatus
211
Change indication signal
Overhead indication signal
Change lasting time
Change control unit
ODUi-AIS
Overhead change unit
212
ODUi-AIS or changed ODUi-AIS

FIG. 13

It is detected that a TCM layer detected when protection switching processing is performed in the embedded optical transport subnet is changed to be failed according to an ODUi signal before the ODU layer failure processing — 310

A value of the overhead which will trigger the protection switching of the outer subnet in a normal ODUi signal or an inserted ODUi-AIS signal is changed to a value which will not trigger protection switching of the outer subnet, and the overhead which will trigger the protection switching of the embedded optical transport subnet will not be changed — 320

Whether the TCM layer recovers to be normal in the set change lasting time? — 330

The change is cancelled, and the process ends — 340

Yes

No

The change is cancelled when the set change lasting time expires, and the process ends — 350

## FIG. 14

Overhead indication signal

311

Change lasting time

Change control unit

Change indication signal

TCM layer failure detection unit

TCM layer failure indication signal 312

TCM layer indication signal

Overhead change unit

Overhead change apparatus

Overhead change apparatus 31

313

ODU layer failure detection unit

321

Selection switch 322

ODUi

ODUi-AIS

Selection unit

ODUi or ODUi-AIS

ODU layer failure processing apparatus 32

## FIG. 15

**FIG. 16**

PM-STAT is PM-STATp? — 610

Yes

An inserted second non-OTN maintenance signal is outputted to substitute the non-OTN signal demapped from the OTN signal — 620

No

A non-OTN signal demapped from the OTN signal or an inserted first non-OTN maintenance signal is output according to whether the OPU layer is failed — 630

**FIG. 17**

OPU layer failure detection unit — 62

Selection control signal

ODUi demapping unit — 61

Non-OTN signal

First non-OTN maintenance signal

Second non-OTN maintenance signal

Selection unit (such as a one-out-three selector) — 63

**FIG. 18**

FIG. 19

FIG. 20

FIG. 21

FIG. 22

FIG. 23

FIG. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101499820 A

- EP 2075955 A1